(19) Europäisches Patentamt
European Patent Office
Office européen des brevets

(11) EP 4 578 894 A1

# (12) EUROPEAN PATENT APPLICATION

published in accordance with Art. 153(4) EPC

(43) Date of publication:
**02.07.2025 Bulletin 2025/27**

(21) Application number: **23857434.7**

(22) Date of filing: **25.08.2023**

(51) International Patent Classification (IPC):
***C08G 81/02*** (2006.01) ***C08F 8/42*** (2006.01)
***C08F 210/00*** (2006.01) ***C08L 87/00*** (2006.01)
***C08L 101/00*** (2006.01) ***C09D 187/00*** (2006.01)

(52) Cooperative Patent Classification (CPC):
**C08F 8/42; C08F 210/00; C08G 81/02; C08L 87/00; C08L 101/00; C09D 187/00**

(86) International application number:
**PCT/JP2023/030667**

(87) International publication number:
**WO 2024/043326 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.08.2022 JP 2022135377**
**22.08.2023 JP 2023135025**

(71) Applicant: **Sumitomo Chemical Company, Limited**
**Tokyo 103-6020 (JP)**

(72) Inventors:
- **SAKURADA, Kenta**
**Ichihara-shi, Chiba 299-0195 (JP)**
- **MATSUI, Hirokazu**
**Ichihara-shi, Chiba 299-0195 (JP)**

(74) Representative: **Vossius & Partner**
**Patentanwälte Rechtsanwälte mbB**
**Siebertstrasse 3**
**81675 München (DE)**

## (54) HYDROPHILIC OIL REPELLENT POLYMER

(57) Provided is a hydrophilic oil repellent polymer having excellent shape transferability during molding that exhibits a high antifouling property in wet environments due to having high oil repellency in water. The polymer comprises: a structural unit A derived from ethylene and/or propylene; a structural unit B of formula (1); and a structural unit C of formula (2). In formula (1), $L^{16}$ represents $-(CH_2)_n-(R^{f2}O)_p-(R^{f3})_h-(Si(R^{f4})_2O)_g-Si(R^{f1})_3$, $R^{f1}$ represents a hydrogen atom or a $C_{1-15}$ alkyl group, $R^{f2}$ and $R^{f3}$ represent a $C_{1-15}$ alkylene group, $R^{f4}$ represents a hydrogen atom or a substituted or unsubstituted $C_{1-15}$ alkyl group or a substituted or unsubstituted $C_{6-20}$ aryl group, n represents an integer of 0-10, p represents an integer of 0-15, h represents an integer of 0-15, and g represents an integer of 1-1000. In formula (2), $L^{26}$ represents $-(CH_2)_m-(R^{r2}O)_q-R^{r1}$, $R^{r1}$ represents a hydrogen atom or a $C_{1-15}$ alkyl group or a $C_{1-20}$ aryl group, $R^{r2}$ represents a $C_{1-15}$ alkylene group, q represents an integer of 1-1,000,000, and m represents an integer of 0-10.

EP 4 578 894 A1

## Description

TECHNICAL FIELD

The present invention relates to a polymer that exhibits high antifouling performance in wet environments, a composition and molded body containing the polymer, and a method for producing the polymer.

BACKGROUND ART

In the related art, polymers having oil repellency have been proposed. For example, Patent Document 1 describes a copolymer composed of a polymerization product of a fluorinated ethylenically unsaturated monomer and/or a silicone-containing ethylenically unsaturated monomer, a polyether, and an acrylate monomer, wherein the copolymer has oxygen permeability, flexibility, wettability, and biocompatibility.

Patent Document 2 describes a hydrophilic oil repellent polymer that has high durability and contains structural units derived from ethylene, a fluoroalkyl monomer, a polyethylene glycol monomer, and an acrylate monomer.

PRIOR ART DOCUMENTS

PATENT DOCUMENTS

Patent Document 1: JP-A-3-37620
Patent Document 2: WO 2021/193349

SUMMARY OF THE INVENTION

PROBLEMS TO BE SOLVED BY THE INVENTION

However, conventional materials having oil repellency or hydrophilic oil repellency have fluoroalkyl groups. Since fluoroalkyl compounds are made from expensive raw materials, there is a need to use materials that do not contain fluoroalkyl compounds to further improve antifouling performance in wet environments from the viewpoint of cost reduction. In addition, such resin materials are also required to have shape transferability during molding.

Under this technical background, the present invention aims at providing a hydrophilic oil repellent polymer that exhibits high antifouling performance in wet environments because of its high oil repellency in water and that has good shape transferability during molding.

MEANS FOR SOLVING THE PROBLEMS

The present invention relates to the following inventions, but is not limited to these inventions.

[Invention 1]

A polymer including a structural unit A derived from at least one selected from the group consisting of ethylene and propylene, a structural unit B represented by formula (1) below, and a structural unit C represented by formula (2) below,

[Chem. 1]

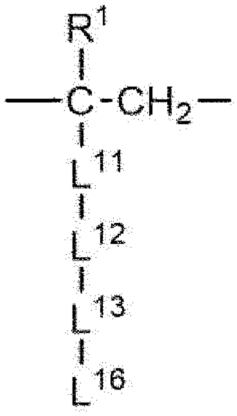

Formula (1)

in formula (1),

$R^1$ represents a hydrogen atom or a methyl group,
$L^{11}$ represents -CO-O-, -O-CO-, or -O-,
$L^{12}$ represents a single bond, $-CH_2-$, $-CH_2-CH_2-$, $-CH_2-CH_2-CH_2-$, $-CH(CH_3)-CH_2-$, $-CH_2-CH(CH_3)-$, $-CH_2-CH(OH)-CH_2-$, or $-CH_2-CH(CH_2OH)-$,
$L^{13}$ represents a single bond, -CO-O-, -O-CO-, -O-, - CO-NH-, -NH-CO-, -CO-NH-CO-, -NH-CO-NH-, -NH-, or $-N(CH_3)-$,
$L^{16}$ represents - $(CH_2)_n-(R^{f2}O)_p-(R^{f3})_h-(Si(R^{f4})_2O)_g-Si(R^{f1})_3$,
$R^{f1}$ represents a hydrogen atom or a $C_{1-15}$ alkyl group, and three $R^{f1}$'s may be the same or different,
$R^{f2}$ represents a $C_{1-15}$ alkylene group,
$R^{f3}$ represents a $C_{1-15}$ alkylene group,
$R^{f4}$ represents a hydrogen atom, a substituted or unsubstituted $C_{1-15}$ alkyl group, or a substituted or unsubstituted $C_{6-20}$ aryl group, and two $R^{f4}$'s may be the same or different,
n represents an integer of 0 to 10,
p represents an integer of 0 to 15, and when p is an integer of 2 or more, multiple $-(R^{f2}O)-$ may be the same or different,
h represents an integer of 0 to 15, and when h is an integer of 2 or more, multiple $-(R^{f3})-$ may be the same or different,
g represents an integer of 1 to 1000, and when g is an integer of 2 or more, multiple $-(Si(R^{f4})_2O)-$ may be the same or different, and
a left side of each of the condensed structural formulas represented by $L^{11}$, $L^{12}$, and $L^{13}$ corresponds to an upper side of formula (1) (a main chain side of the polymer), and a right side of each of the condensed structural formulas corresponds to a lower side of formula (1) (a terminal side of a side chain of the polymer),

[Chem. 2]

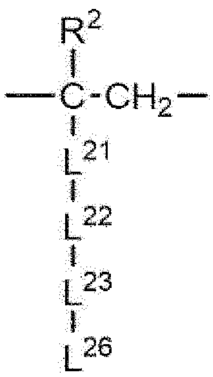

Formula (2)

in formula (2),

$R^2$ represents a hydrogen atom or a methyl group,
$L^{21}$ represents -CO-O-, -O-CO-, or -O-,
$L^{22}$ represents a single bond, $-CH_2-$, $-CH_2-CH_2-$, $-CH_2-CH_2-CH_2-$, $-CH(CH_3)-CH_2-$, $-CH_2-CH(CH_3)-$, $-CH_2-CH(OH)-CH_2-$, or $-CH_2-CH(CH_2OH)-$,
$L^{23}$ represents a single bond, -CO-O-, -O-CO-, -O-, - CO-NH-, -NH-CO-, -CO-NH-CO-, -NH-CO-NH-, -NH-, or $-N(CH_3)-$,
$L^{26}$ represents $-(CH_2)_m-(R^{r2}O)_q-R^{r1}$,
$R^{r1}$ represents a hydrogen atom, a $C_{1-15}$ alkyl group, or a $C_{1-20}$ aryl group,
$R^{r2}$ represents a $C_{1-15}$ alkylene group,
q represents an integer of 0 to 1000000, and m represents an integer of 0 to 10,
when q is an integer of 2 or more, multiple $-(R^{r2}O)$-may be the same or different, and
a left side of each of the condensed structural formulas represented by $L^{21}$, $L^{22}$, and $L^{23}$ corresponds to an upper side of formula (2) (a main chain side of the polymer), and a right side of each of the condensed structural formulas corresponds to a lower side of formula (2) (a terminal side of a side chain of the polymer).

[Invention 2]

The polymer according to Invention 1, further including at least one structural unit D selected from the group consisting of structural units represented by formula (3) below and a structural unit represented by formula (4) below,

[Chem. 3]

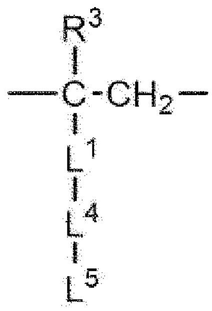

Formula (3)

[Chem. 4]

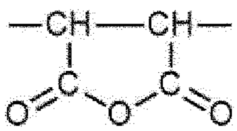

Formula (4)

in formula (3),

$R^3$ represents a hydrogen atom or a methyl group,
$L^1$ represents -CO-O-, -O-CO-, or -O-,
$L^4$ represents a single bond or a $C_{1-8}$ alkylene group,
$L^5$ represents a hydrogen atom, an epoxy group, - $CH(OH)-CH_2OH$, a carboxy group, a hydroxy group, an amino group, or a $C_{1-4}$ alkylamino group, and
a left side of each of the condensed structural formulas represented by $L^1$ corresponds to an upper side of formula (3) (a main chain side of the polymer), and a right side of each of the condensed structural formulas corresponds to a lower side of formula (3) (a terminal side of a side chain of the polymer).

[Invention 3]

The polymer according to Invention 1 or 2, wherein the number of the structural units A is from 70 to 99 mol%, and the total number of the structural units B, the structural units C, and the structural units D is from 30 to 1 mol%, relative to 100% of the total number of the structural units A, the structural units B, the structural units C, and the structural units D.

[Invention 4]

The polymer according to any one of Inventions 1 to 3, wherein the total number of the structural units B and the structural units C is from 1 to 99 mol%, and the total number of the structural units D is from 99 to 1 mol%, relative to 100 mol% of the total number of the structural units B, the structural units C, and the structural units D.

[Invention 5]

The polymer according to any one of Inventions 1 to 4, wherein a numerical ratio (B:C) of the structural units B to the structural units C is from 1:9 to 7:3.

[Invention 6]

The polymer according to any one of Inventions 1 to 5, wherein, in the structural unit (B) represented by formula (1) above, g in $L^{16}$ is 1 or more and 250 or less.

[Invention 7]

The polymer according to any one of Inventions 1 to 6, wherein, in the structural unit (C) represented by formula (2) above, q in $L^{26}$ is 1 or more and 250 or less.

[Invention 8]

The polymer according to any one of Inventions 1 to 7, wherein, in the structural unit (B) represented by formula (1) above, $L^{11}$ is -CO-O-.

[Invention 9]

The polymer according to any one of Inventions 1 to 8, wherein, in the structural unit (C) represented by formula (2) above, $L^{21}$ is -CO-O-.

[Invention 10]

The polymer according to any one of Inventions 1 to 9, wherein, in the structural unit (C) represented by formula (2) above, $R^{r1}$ in $L^{26}$ is a $C_{1-15}$ alkyl group.

[Invention 11]

The polymer according to any one of Inventions 1 to 10, wherein the polymer is crosslinked.

[Invention 12]

The polymer according to any one of Inventions 1 to 11, wherein the polymer has a gel fraction of 20% or more.

[Invention 13]

The polymer according to any one of Inventions 1 to 12, wherein the total number of the structural units A, the structural units B, the structural units C, and the structural units D is 90% or more relative to 100% of the total number of all the structural units contained in the polymer.

[Invention 14]

A composition including the polymer according to any one of Inventions 1 to 13.

[Invention 15]

The composition according to Invention 14, wherein the composition contains 1 wt% or more of the polymer.

[Invention 16]

The composition according to Invention 14, including a base resin.

[Invention 17]

The composition according to Invention 16, wherein the base resin is a thermoplastic resin.

[Invention 18]

The composition according to Invention 16, wherein the base resin is polyvinyl chloride.

[Invention 19]

The composition according to Invention 16, wherein the base resin is a thermosetting resin.

[Invention 20]

The composition according to Invention 16, wherein the base resin is an unsaturated polyester.

[Invention 21]

A molded body containing the polymer according to any one of Inventions 1 to 13.

[Invention 22]

A molded body containing the composition according to any one of Inventions 14 to 20.

[Invention 23]

The molded body according to Invention 21 or 22, wherein the molded body is an antifouling material.

[Invention 24]

The molded body according to Invention 21 or 22, wherein the molded body is a slime-resistant material.

[Invention 25]

A coating film containing the polymer according to any one of Inventions 1 to 13.

[Invention 26]

A coating film containing the composition according to any one of Inventions 14 to 20.

[Invention 27]

The coating film according to Invention 25 or 26, wherein the coating is an antifouling material.

[Invention 28]

The coating film according to Invention 25 or 26, wherein the coating is a slime-resistant material.

[Invention 29]

A method for producing the polymer according to any one of Inventions 1 to 13, the method including a step of carrying out a reaction of
a polymer containing a structural unit A derived from at least one selected from the group consisting of ethylene and propylene, and at least one structural unit D selected from the group consisting of structural units represented by formula

(3) below and a structural unit represented by formula (4) below, wherein the number of the structural units A is from 1% to 99% relative to 100% of the total number of the structural units A and the structural units D,

with at least one compound β selected from the group consisting of compounds represented by formula (β1) below, compounds represented by formula (β2) below, compounds represented by formula (β3) below, compounds represented by formula (β4) below, compounds represented by formula (β5) below, compounds represented by formula (β6) below, compounds represented by formula (β7) below, and compounds represented by formula (β8) below, and at least one compound γ selected from the group consisting of compounds represented by formula (γ1) below, compounds represented by formula (γ2) below, compounds represented by formula (γ3) below, compounds represented by formula (γ4) below, compounds represented by formula (γ5) below, compounds represented by formula (γ6) below, compounds represented by formula (γ7) below, and compounds represented by formula (γ8) below,

[Chem. 5]

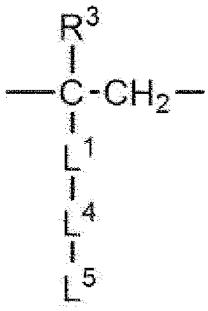

Formula (3)

in formula (3),

$R^3$ represents a hydrogen atom or a methyl group,
$L^1$ represents -CO-O-, -O-CO-, or -O-,
$L^4$ represents a single bond or a $C_{1-8}$ alkylene group,
$L^5$ represents a hydrogen atom, an epoxy group, - $CH(OH)-CH_2OH$, a carboxy group, a hydroxy group, an amino group, or a $C_{1-4}$ alkylamino group, and
a left side of each of the condensed structural formulas represented by $L^1$ corresponds to an upper side of formula (3) (a main chain side of the polymer), and a right side of each of the condensed structural formulas corresponds to a lower side of formula (3) (a terminal side of a side chain of the polymer),

[Chem. 6]

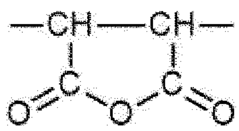

Formula (4)

$HO-(CH_2)_n-(R^{f2}O)_p-(R^{f3})_h-(Si(R^{f4})_2O)_g-Si(R^{f1})_3$ Formula (β1)

$H_2N-(CH_2)_n-(R^{f2}O)_p-(R^{f3})_h-(Si(R^{f4})_2O)_g-Si(R^{f1})_3$ Formula (β2)

$X-(CH_2)_n-(R^{f2}O)_p-(R^{f3})_h-(Si(R^{f4})_2O)_g-Si(R^{f1})_3$ Formula (β3)

$HO-C(=O)-(CH_2)_n-(R^{f2}O)_p-(R^{f3})_h-(Si(R^{f4})_2O)_g-Si(R^{f1})_3$ Formula (β4)

$H_2N-C(=O)-(CH_{2\ n}-(R^{f2}O)_p-(R^{f3})_h-(Si(R^{f4})_2O)_g-Si(R^{f1})_3$ Formula (β5)

$X-C(=O)-(CH_2)_n-(R^{f2}O)_p-(R^{f3})_h-(Si(R^{f4})_2O)_g-Si(R^{f1})_3$ Formula (β6)

$H_2N-C(=O)-HN-(CH_2)_n-(R^{f2}O)_p-(R^{f3})_h-(Si(R^{f4})_2O)_g-Si(R^{f1})_3$ Formula (β7)

$OCN\text{-}(CH_2)_n\text{-}(R^{f2}O)_p\text{-}(R^{f3})_h\text{-}(Si(R^{f4})_2O)_g\text{-}Si(R^{f1})_3$ Formula (β8)

in the formulas, $R^{f1}$, $R^{f2}$, $R^{f3}$, $R^{f4}$, p, g, h, and n are as defined in formula (1), and X represents a halogen atom, and when multiple compounds β are used, $R^{f1}$'s may be the same or different, and the same applies to $R^{f2}$'s, $R^{f3}$'s, $R^{f4}$'s, p's, g's, h's, and n's, and X's,

$HO\text{-}(CH_2)_m\text{-}(OR^{r2})_q\text{-}R^{r1}$ Formula (γ1)

$H_2N\text{-}(CH_2)_m\text{-}(OR^{r2})_q\text{-}R^{r1}$ Formula (γ2)

$X\text{-}(CH_2)_m\text{-}(OR^{r2})_q\text{-}R^{r1}$ Formula (γ3)

$HO\text{-}C(=O)\text{-}(CH_2)_m\text{-}(OR^{r2})_q\text{-}R^{r1}$ Formula (γ4)

$H_2N\text{-}C(=O)\text{-}(CH_2)_m\text{-}(OR^{r2})_q\text{-}R^{r1}$ Formula (γ5)

$X\text{-}C(=O)\text{-}(CH_2)_m\text{-}(OR^{r2})_q\text{-}R^{r1}$ Formula (γ6)

$H_2N\text{-}C(=O)\text{-}HN\text{-}(CH_2)_m\text{-}(OR^{r2})_q\text{-}R^{r1}$ Formula (γ7)

$OCN\text{-}(CH_2)_m\text{-}(OR^{r2})_q\text{-}R^{r1}$ Formula (γ8)

in the formulas, $R^{r1}$, $R^{r2}$, q, and m are as defined in formula (1), and X represents a halogen atom, and when multiple compounds γ are used, $R^{r1}$'s may be the same or different, and the same applied to $R^{r2}$'s, q's, and m's, and X's.

[Invention 30]

The method according to Invention 29, wherein a neutral compatibilizer and a cationic compatibilizer are added in the step.

[Invention 31]

A polymer that may be produced by using the production method according to Invention 29 or 30.

EFFECT OF THE INVENTION

The polymer of the present invention (may also be referred to as "polymer 1") or a resin composition containing the polymer 1 has good oil repellency in water and good antifouling performance in wet environments.

The polymer 1 of the present invention or the resin composition containing the polymer 1 allows a mesh pattern or other shapes to be transferred to the molded body during molding. In other words, the polymer 1 or the resin composition containing the polymer 1 has good shape transferability.

MODE FOR CARRYING OUT THE INVENTION

Definition

All numbers disclosed herein are approximate values, regardless of whether the word "about" or "approximately" is used in connection therewith. They may vary by 1%, 2%, 5%, or sometimes 10 to 20%. Whenever a numerical range with a lower limit $R^L$ and an upper limit $R^U$ is disclosed, any number falling within the range is specifically disclosed. In particular, the following numbers within the range are specifically disclosed. $R = R^L + k^*(R^U - R^L)$ (where k is a variable ranging from 1% to 100% with a 1% increment, i.e., k is 1%, 2%, 3%, 4%, 5%,..., 50%, 51%, 52%,..., 95%, 96%, 97%, 98%, 99%, or 100%). Moreover, any numerical range defined by two R's described above is also specifically disclosed.

The expression "lower limit to upper limit" indicating a numerical range means "the lower limit or more and the upper limit or less", and the expression "upper limit to lower limit" means "the upper limit or less and the lower limit or more". In other words, these expressions indicate numerical ranges including the lower limit and the upper limit.

Hereinafter, some embodiments of the present invention will be described in detail. The present invention is not

limited to the following embodiments.

Polymer 1

The polymer 1 includes a structural unit A derived from at least one selected from the group consisting of ethylene and propylene, a structural unit B represented by formula (1), and a structural unit C represented by formula (2).
Each structural unit will be described below.

Structural Unit A

The structural unit A is derived from at least one selected from the group consisting of ethylene and propylene, preferably derived from ethylene from the viewpoint of moldability.

Structural Unit B

The structural unit B is represented by formula (1), and each structural unit is selected independently of the other structural units.

[Chem. 7]

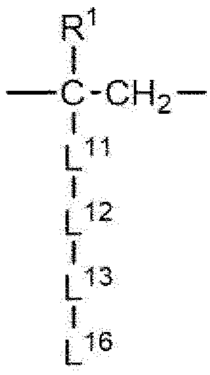

Formula (1)

In formula (1),

$R^1$ represents a hydrogen atom or a methyl group,
$L^{11}$ represents -CO-O-, -O-CO-, or -O-,
$L^{12}$ represents a single bond, $-CH_2-$, $-CH_2-CH_2-$, $-CH_2-CH_2-CH_2-$, $-CH(CH_3)-CH_2-$, $-CH_2-CH(CH_3)-$, $-CH_2-CH(OH)-CH_2-$, or $-CH_2-CH(CH_2OH)-$,
$L^{13}$ represents a single bond, -CO-O-, -O-CO-, -O-, - CO-NH-, -NH-CO-, -CO-NH-CO-, -NH-CO-NH-, -NH-, or $-N(CH_3)-$,
$L^{16}$ represents $-(CH_2)_n-(R^{f2}O)_p-(R^{f3})_h-(Si(R^{f4})_2O)_g-Si(R^{f1})_3$,
$R^{f1}$ represents a hydrogen atom or a $C_{1-15}$ alkyl group, and three $R^{f1}$'s may be the same or different,
$R^{f2}$ represents a $C_{1-15}$ alkylene group,
$R^{f3}$ represents a $C_{1-15}$ alkylene group,
$R^{f4}$ represents a hydrogen atom, a substituted or unsubstituted $C_{1-15}$ alkyl group, or a substituted or unsubstituted $C_{6-20}$ aryl group, and two $R^{f4}$'s may be the same or different,
n represents an integer of 0 to 10,
p represents an integer of 0 to 15, and when p is an integer of 2 or more, multiple $-(R^{f2}O)-$ may be the same or different,
h represents an integer of 0 to 15, and when h is an integer of 2 or more, multiple $-(R^{f3})-$ may be the same or different,
g represents an integer of 1 to 1000, and when g is an integer of 2 or more, multiple $-(Si(R^{f4})_2O)-$ may be the same or different.

The left side of each of the condensed structural formulas represented by $L^{11}$, $L^{12}$, and $L^{13}$ corresponds to the upper side of formula (1) (the main chain side of the polymer), and the right side of each of the condensed structural formulas corresponds to the lower side of formula (1) (the terminal side of a side chain of the polymer).
$R^1$ is preferably a hydrogen atom.

$L^{11}$ is preferably -CO-O- or -O-CO-, more preferably - CO-O- from the viewpoint of moisture permeability.
$L^{12}$ is preferably a single bond, $-CH_2-$, $-CH_2-CH_2-$, or $-CH_2-CH_2-CH_2-$, more preferably a single bond.
$L^{13}$ is preferably a single bond, -O-CO-, -NH-, or - $N(CH_3)$-, more preferably a single bond.
$R^{f1}$ in $L^{16}$ represents a hydrogen atom or a $C_{1-15}$ alkyl group, and three $R^{f1}$'s may be the same or different. Examples of the $C_{1-15}$ alkyl group include methyl, ethyl, propyl, and butyl groups.
$R^{f2}$ in $L^{16}$ represents a $C_{1-15}$ alkylene group. Examples of the $C_{1-15}$ alkylene group include methylene, ethylene, propylene, and butenylene groups.
$R^{f3}$ in $L^{16}$ represents a $C_{1-15}$ alkylene group. Examples of the $C_{1-15}$ alkylene group include methylene, ethylene, propylene, and butenylene groups.
$R^{f4}$ in $L^{16}$ represents a hydrogen atom, a substituted or unsubstituted $C_{1-15}$ alkyl group, or a substituted or unsubstituted $C_{6-20}$ aryl group, and two $R^{f4}$'s may be the same or different. Examples of the $C_{1-15}$ alkyl group include alkyl groups, such as methyl, ethyl, propyl, and butyl groups, and aryl groups, such as phenyl, tolyl, and xylyl groups. Some or all of the above hydrocarbon groups may be substituted by chlorine, bromine, iodine, oxygen, nitrogen, sulfur, phosphorus, and silicon atoms, or other atoms. $R^{f4}$ is preferably an unsubstituted $C_{1-3}$ alkyl group, more preferably a methyl group, to improve releasability during molding.
n represents an integer of 0 to 10, preferably an integer of 0 to 6, more preferably from 0 to 4, still more preferably from 0 to 2.
p represents an integer of 0 to 15, preferably an integer of 0 to 10, more preferably an integer of 0 to 5, still more preferably an integer of 1 or 2. When p is an integer of 2 or more, multiple $-(R^{f2}O)-$ may be the same or different.
h represents an integer of 0 to 15, preferably an integer of 0 to 10, more preferably an integer of 0 to 5, still more preferably from 0 to 3. When h is an integer of 2 or more, multiple $-(R^{f3})-$ may be the same or different.
g represents an integer of 1 to 1000, preferably an integer of 1 to 250, more preferably an integer of 1 to 100, still more preferably from 1 to 50. When g is an integer of 2 or more, multiple $-(Si(R^{f4})_2O)-$ may be the same or different.
In formula (1), consecutive single bonds if present are treated as one single bond.
Examples of the structural unit B represented by formula (1) include the following structural units.

[Chem. 8]

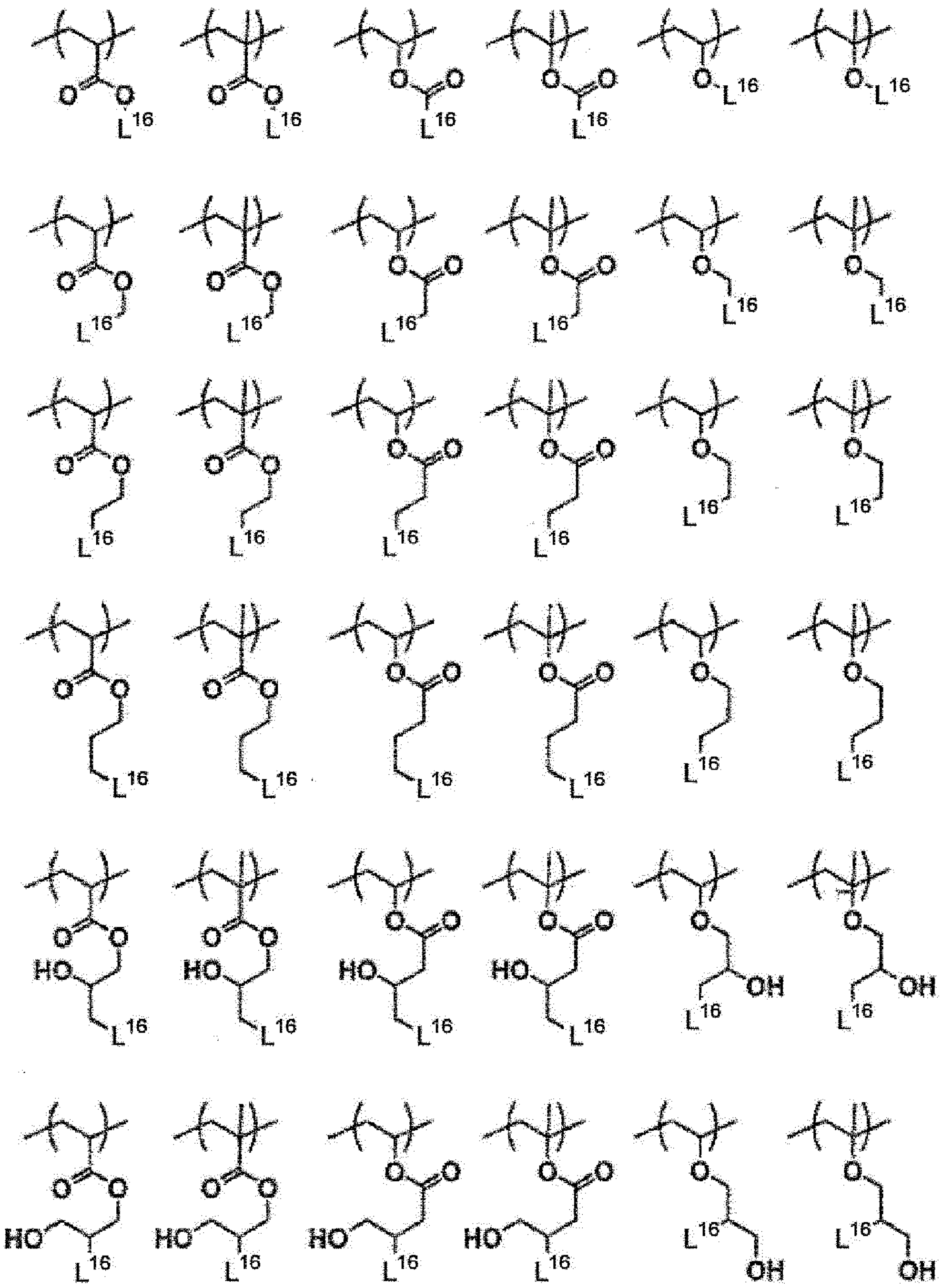

[Chem. 9]

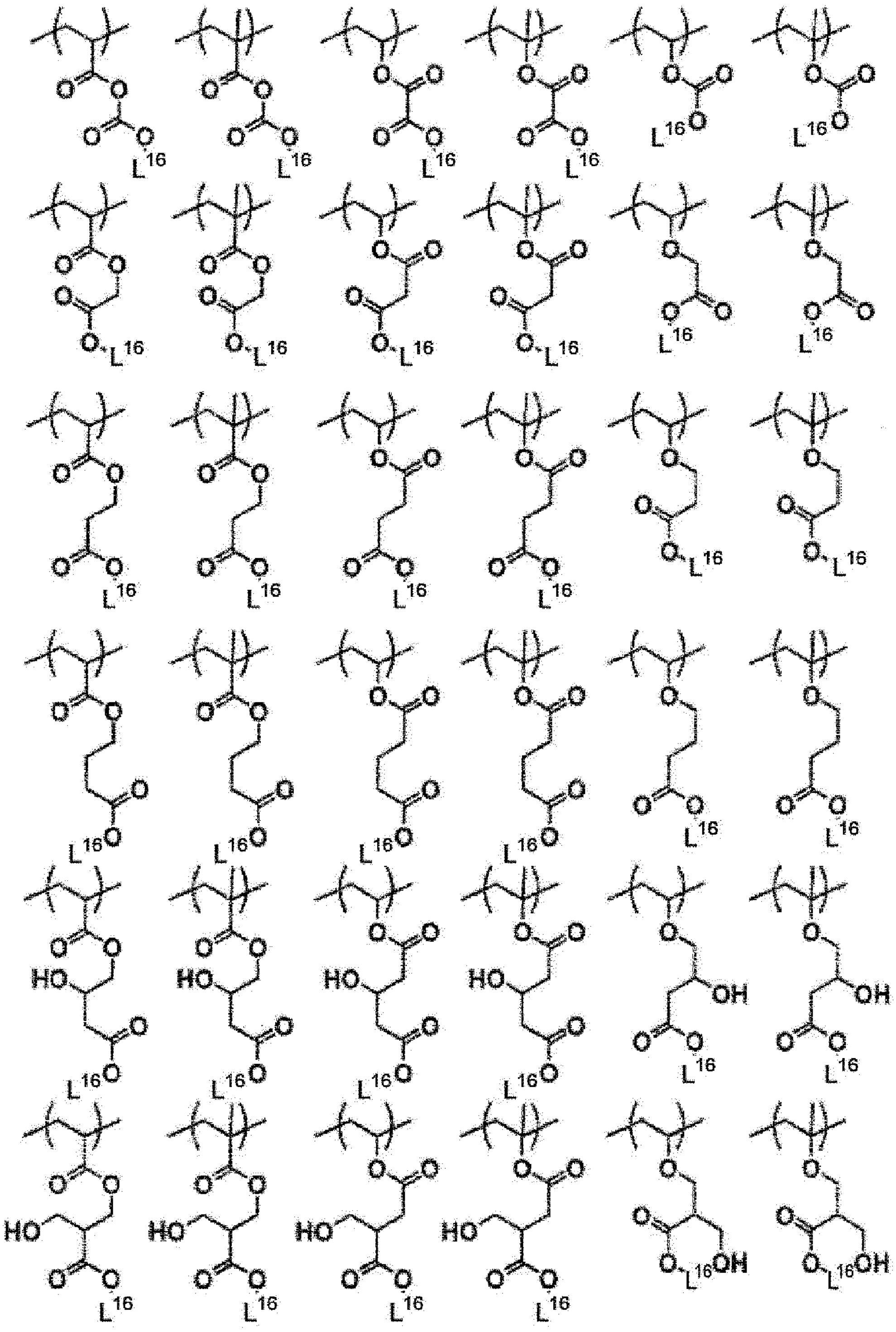

[Chem. 10]

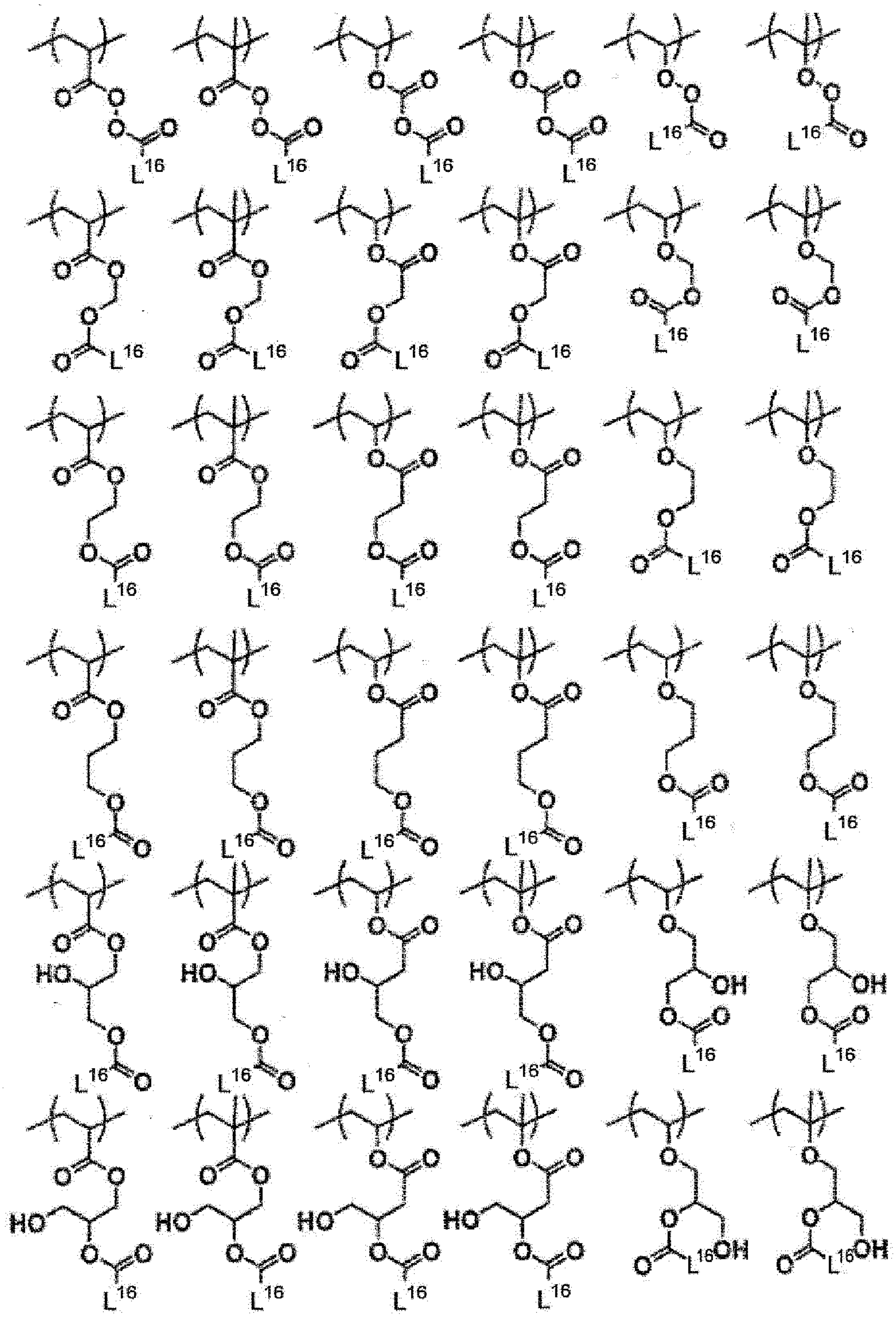

[Chem. 11]

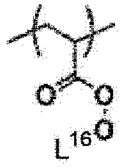 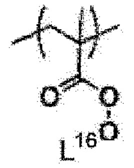 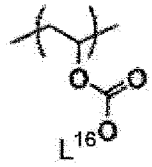 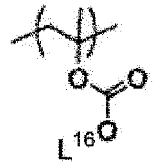 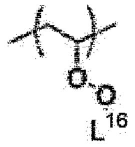 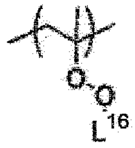

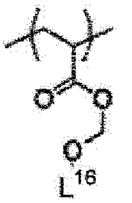 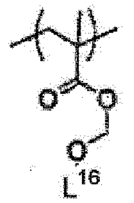 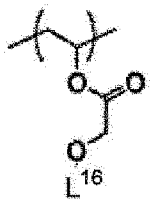 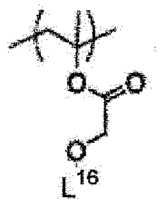 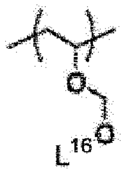 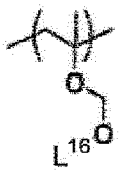

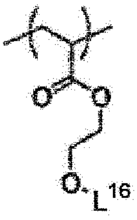 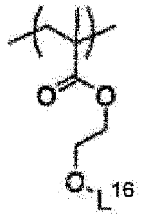 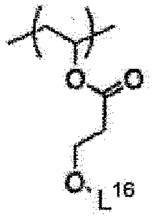 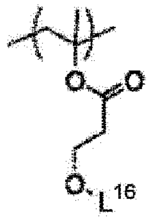 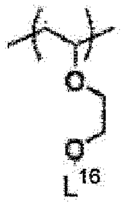 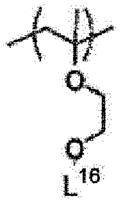

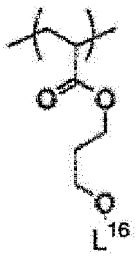 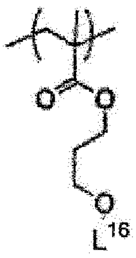 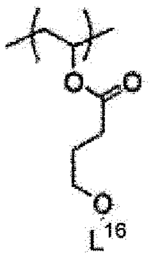 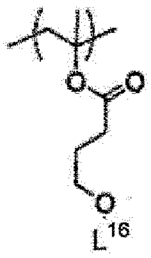 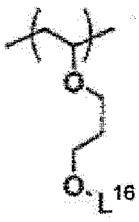 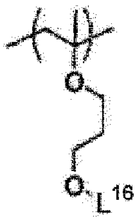

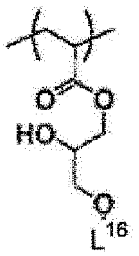 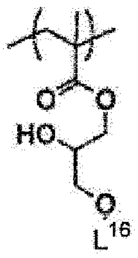 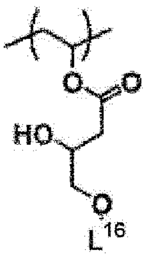 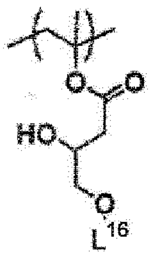 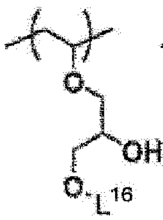 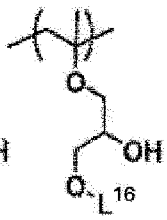

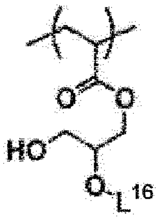 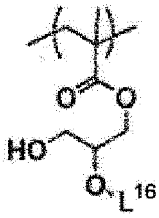 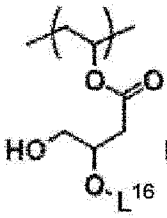 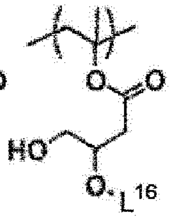 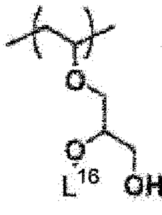 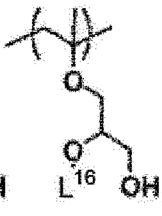

[Chem. 12]

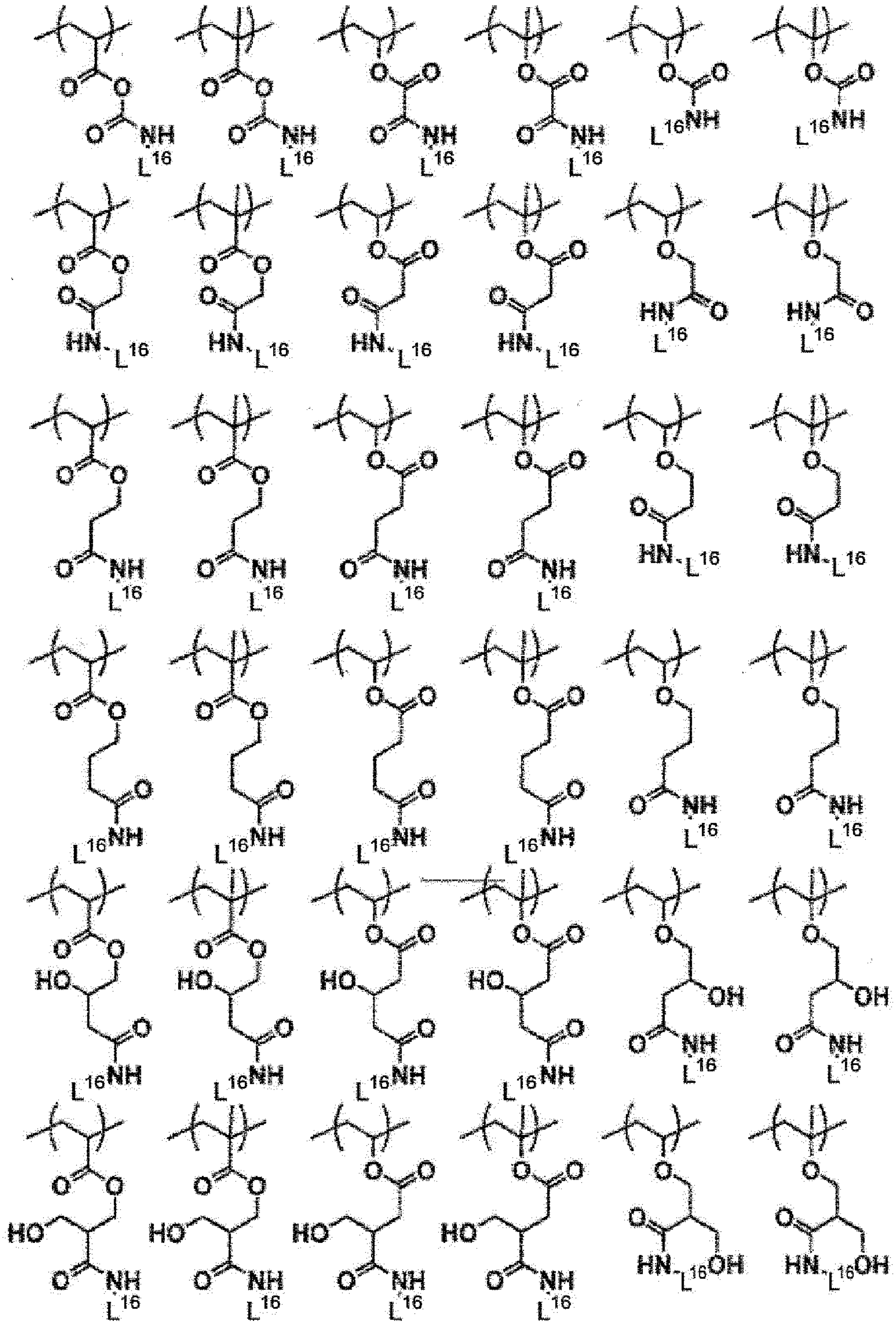

[Chem. 13]

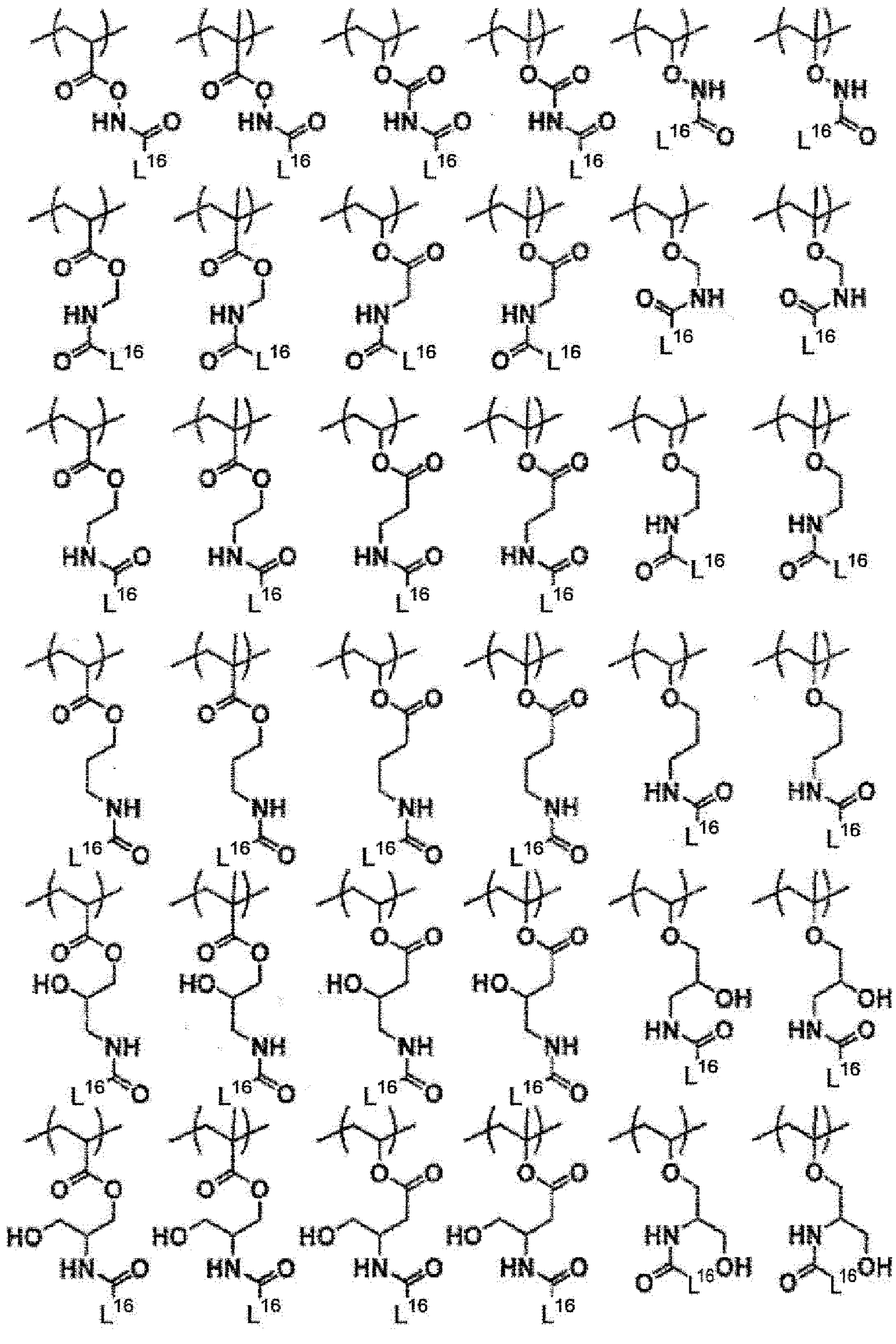

[Chem. 14]

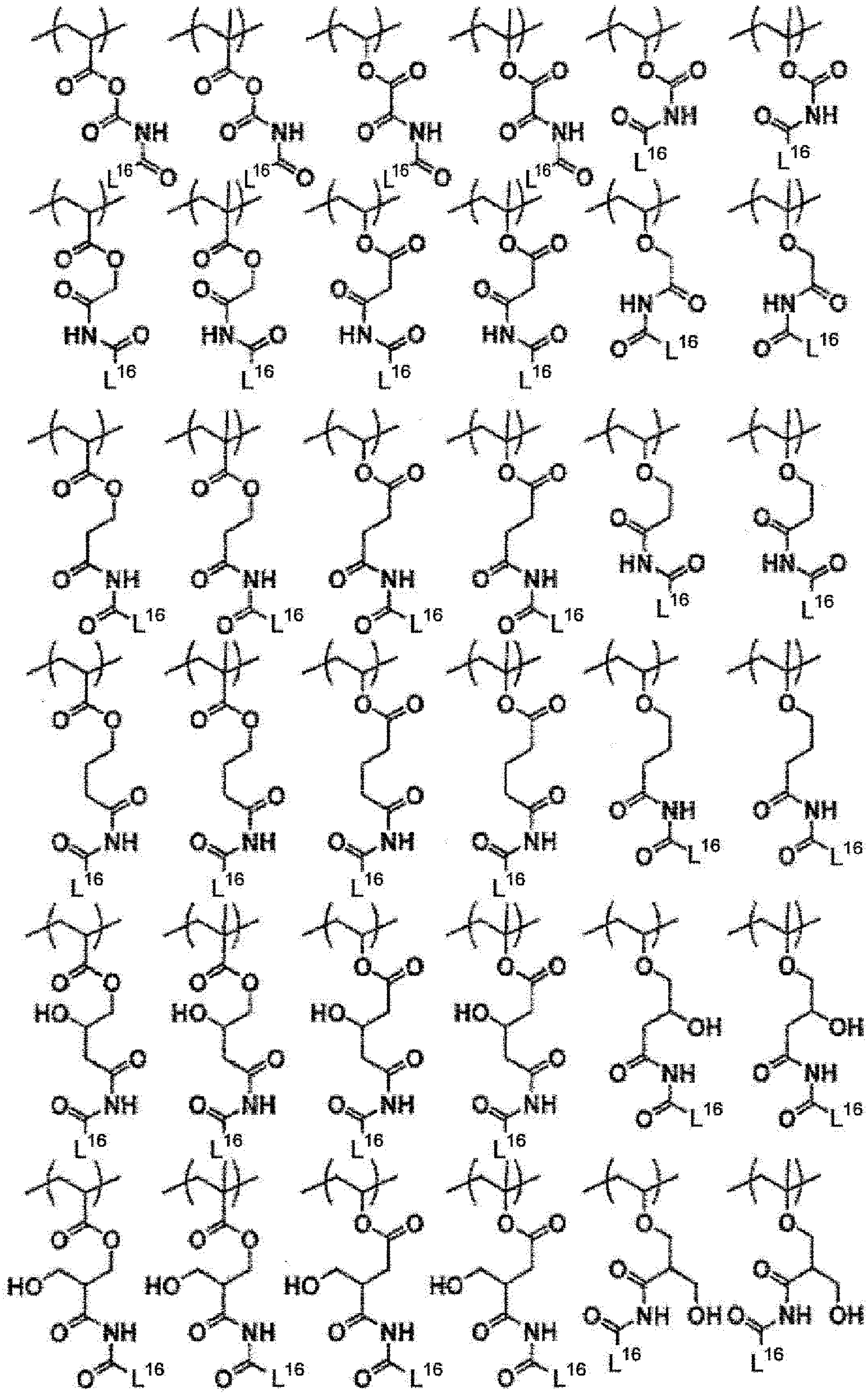

[Chem. 15]

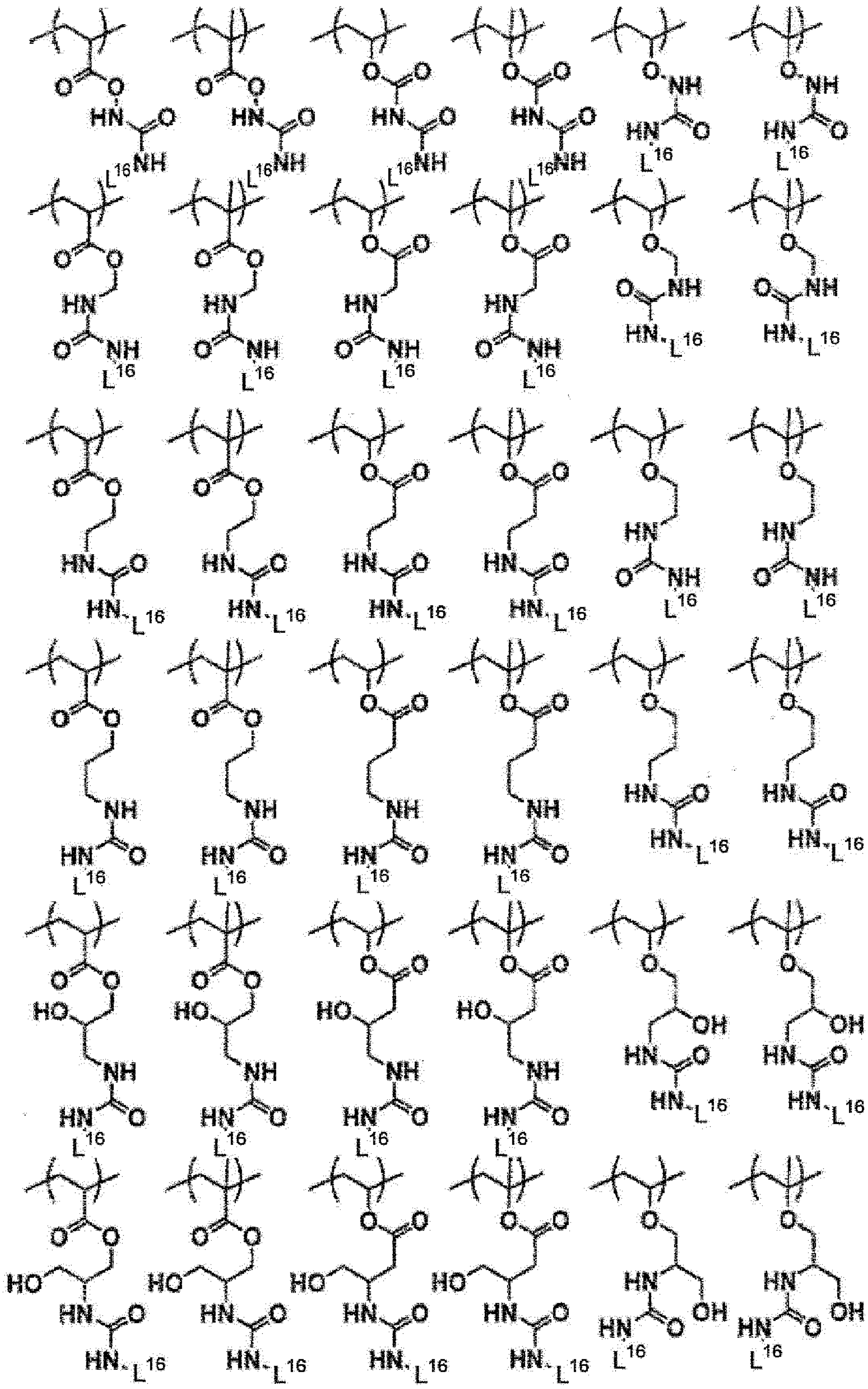

[Chem. 16]

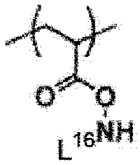 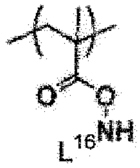 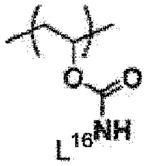 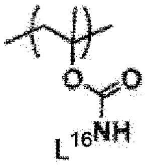 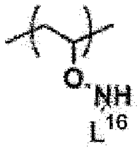 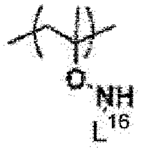

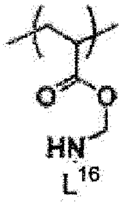 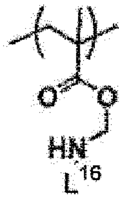 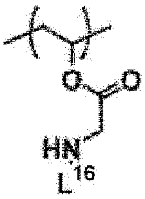 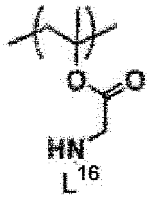 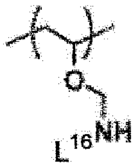 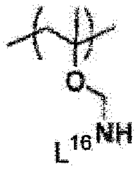

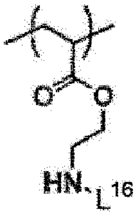 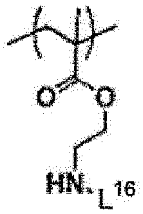 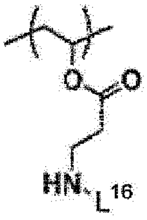 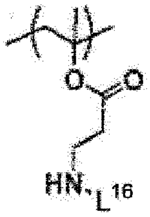 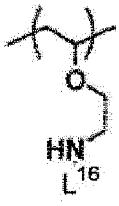 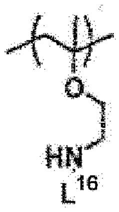

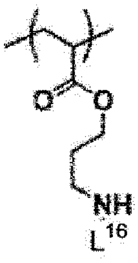 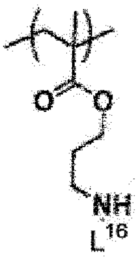 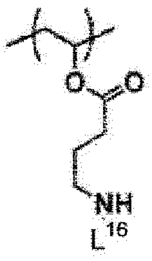 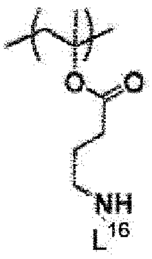 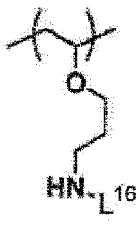 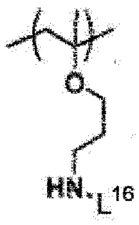

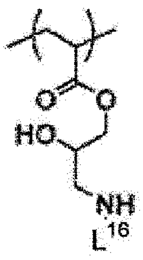 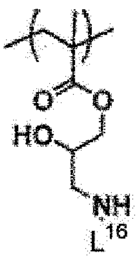 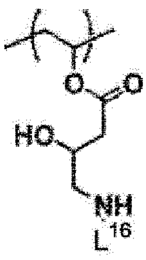 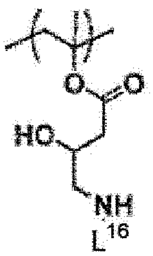 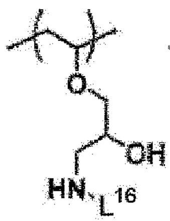 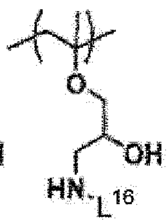

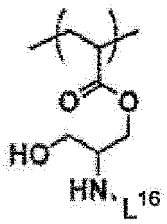 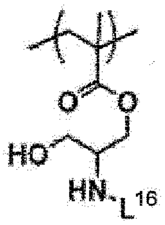 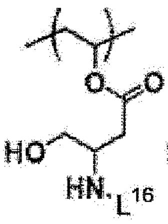 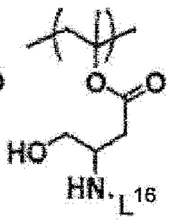 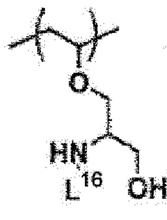 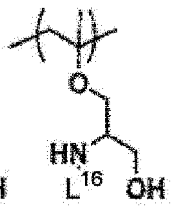

[Chem. 17]

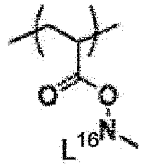 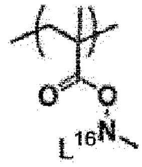 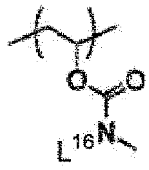 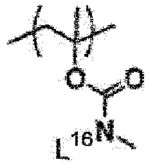 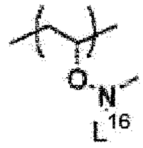 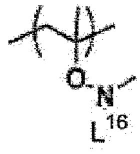

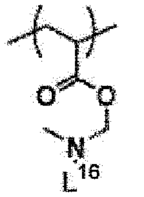 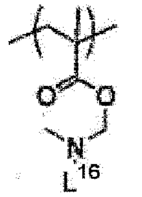 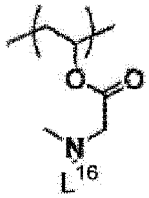 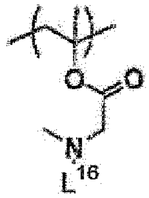 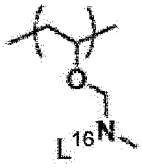 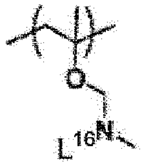

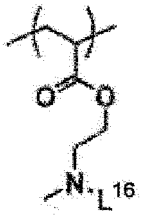 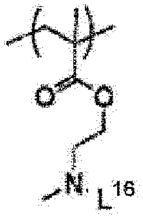 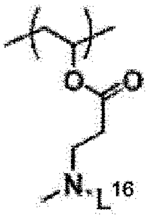 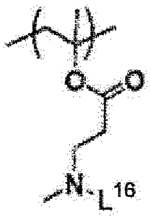 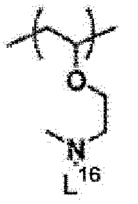 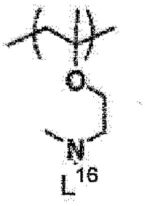

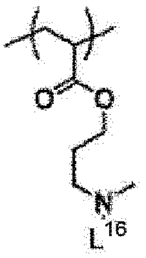 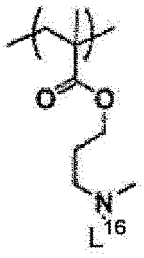 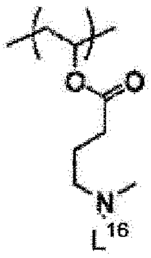 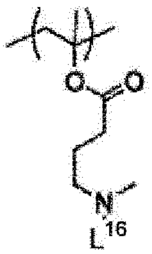 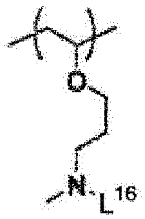 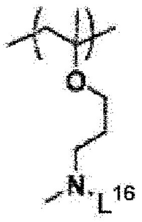

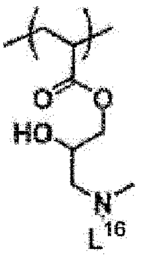 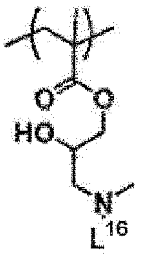 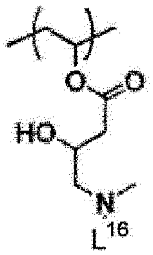 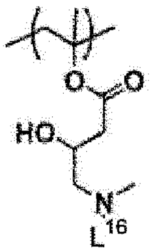 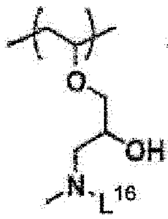 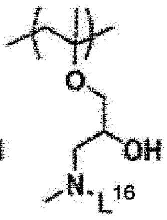

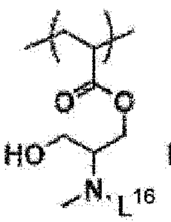 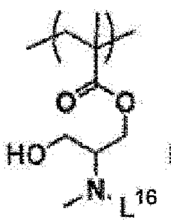 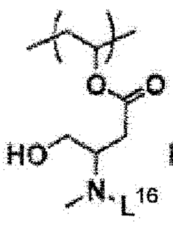 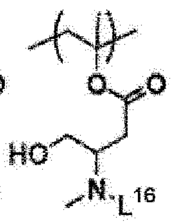 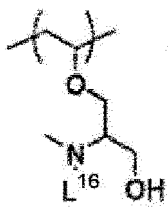 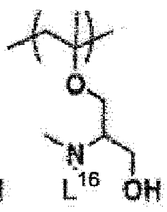

The structural unit B represented by formula (1) is preferably a structural unit represented by any one of the following formulas.

[Chem. 18]

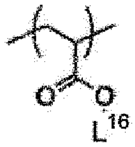
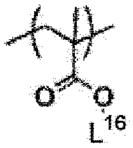
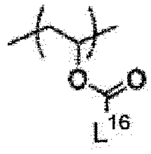
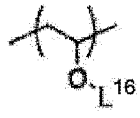
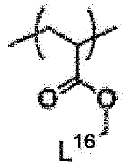
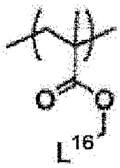
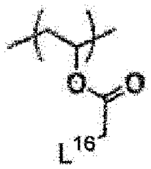
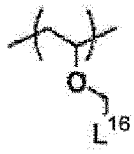
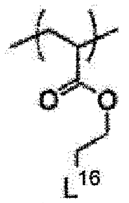
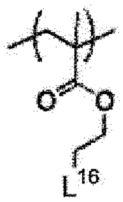
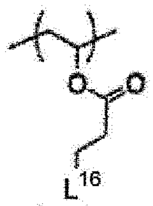
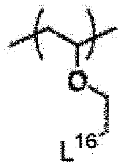
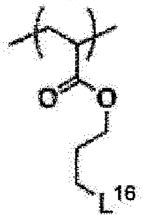
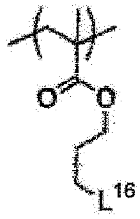
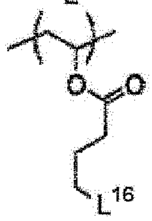
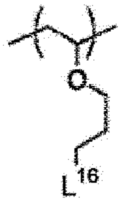
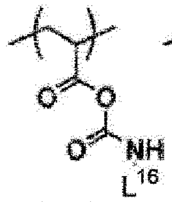
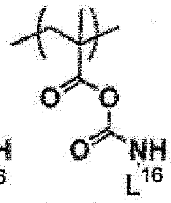
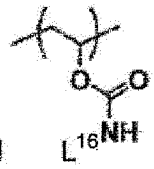
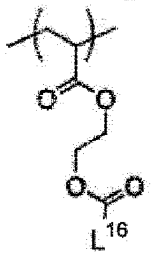
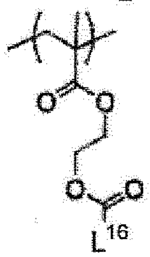
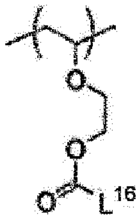

[Chem. 19]

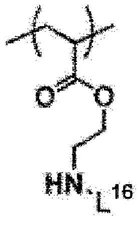 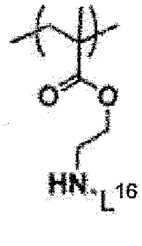 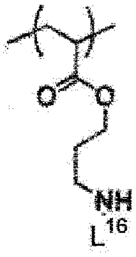 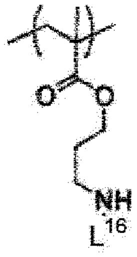

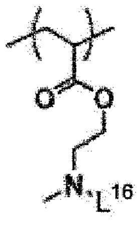 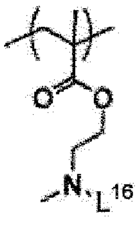 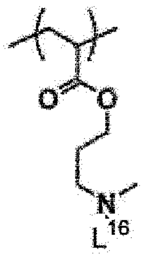 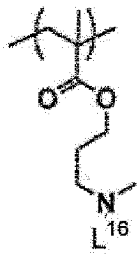

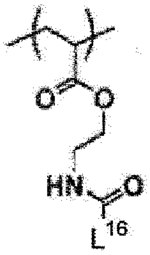 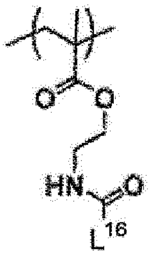 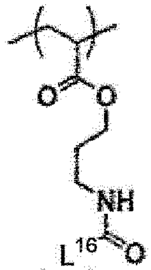 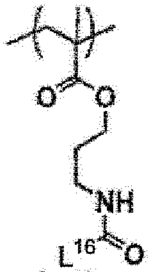

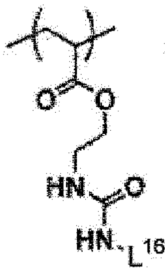 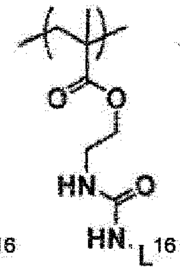 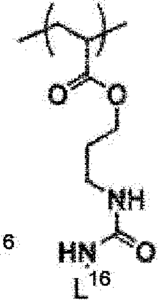 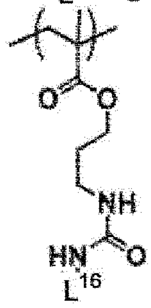

[Chem. 20]

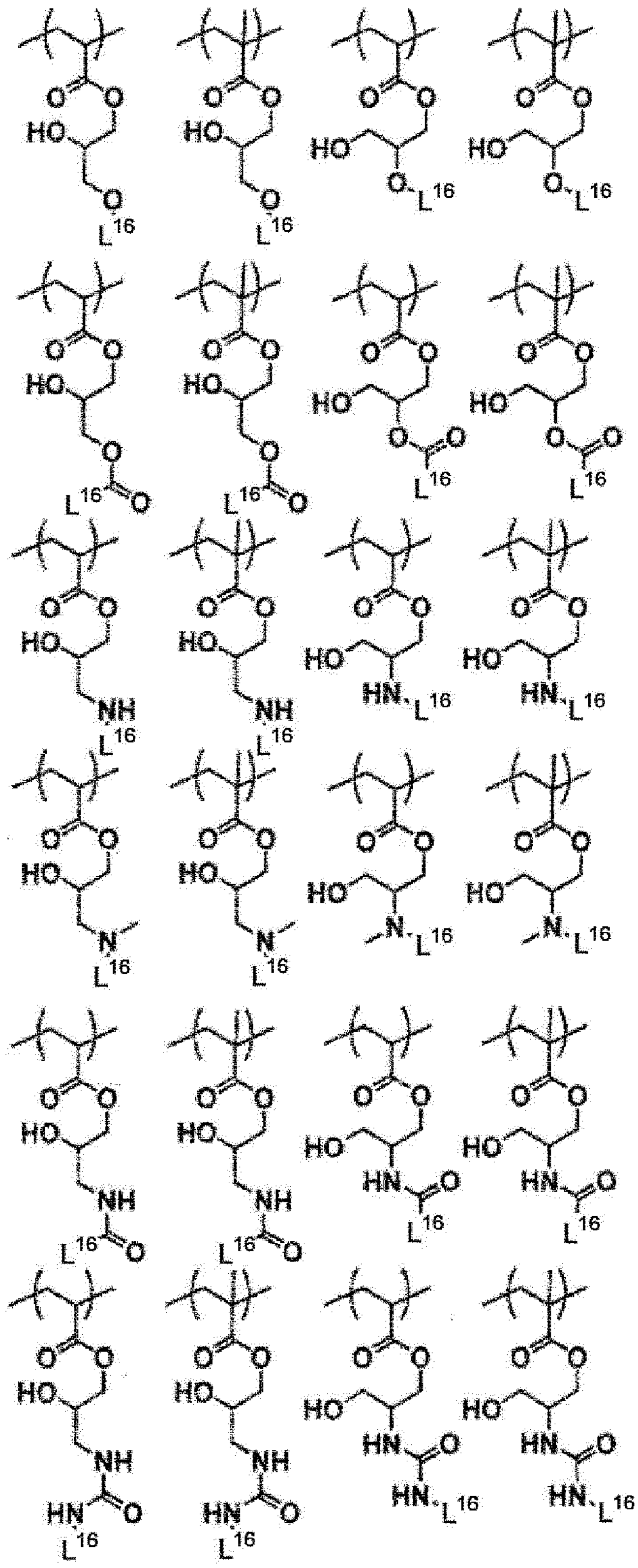

The structural unit B represented by formula (1) is more preferably a structural unit represented by any one of the following formulas.

[Chem. 21]

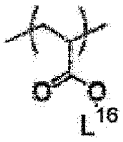 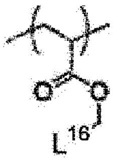 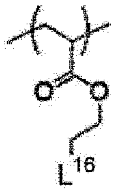 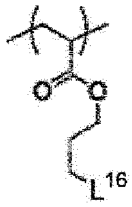

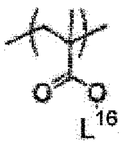 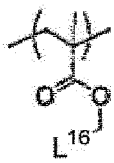 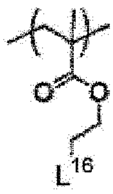 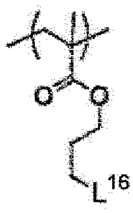

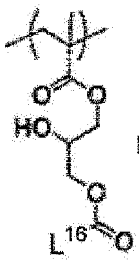 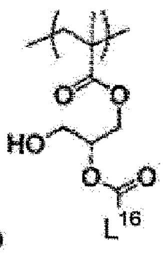

The structural unit B represented by formula (1) is still more preferably a structural unit represented by the following formula.

[Chem. 22]

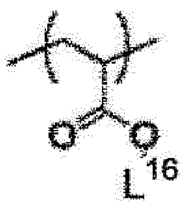

The structural unit B may be, for example, a structural unit derived from

2-(3-α-butyl-polydimethylsiloxanyl-propoxy)ethyl acrylate,
2-(3-α-propyl-polydimethylsiloxanyl-propoxy)ethyl acrylate,
2-(3-α-ethyl-polydimethylsiloxanyl-propoxy)ethyl acrylate,
2-(3-α-methyl-polydimethylsiloxanyl-propoxy)ethyl acrylate,
3-α-butyl-polydimethylsiloxanyl-propoxymethyl acrylate,
3-α-propyl-polydimethylsiloxanyl-propoxymethyl acrylate,
3-α-ethyl-polydimethylsiloxanyl-propoxymethyl acrylate,
3-α-methyl-polydimethylsiloxanyl-propoxymethyl acrylate,
3-α-butyl-polydimethylsiloxanyl-propyl acrylate,
3-α-propyl-polydimethylsiloxanyl-propyl acrylate,
3-α-ethyl-polydimethylsiloxanyl-propyl acrylate,
3-α-methyl-polydimethylsiloxanyl-propyl acrylate,
2-α-butyl-polydimethylsiloxanyl-ethyl acrylate,
2-α-propyl-polydimethylsiloxanyl-ethyl acrylate,
2-α-ethyl-polydimethylsiloxanyl-ethyl acrylate,
2-α-methyl-polydimethylsiloxanyl-ethyl acrylate,
2-(2-α-butyl-polydimethylsiloxanyl-ethoxy)ethyl acrylate,

2-(2-α-propyl-polydimethylsiloxanyl-ethoxy)ethyl acrylate,
2-(2-α-ethyl-polydimethylsiloxanyl-ethoxy)ethyl acrylate,
2-(2-α-methyl-polydimethylsiloxanyl-ethoxy)ethyl acrylate,
2-(4-α-butyl-polydimethylsiloxanyl-butoxy)ethyl acrylate,
2-(4-α-propyl-polydimethylsiloxanyl-butoxy)ethyl acrylate,
2-(4-α-ethyl-polydimethylsiloxanyl-butoxy)ethyl acrylate,
2-(4-α-methyl-polydimethylsiloxanyl-butoxy)ethyl acrylate,
4-(3-α-butyl-polydimethylsiloxanyl-propoxy)butyl acrylate,
4-(3-α-propyl-polydimethylsiloxanyl-propoxy)butyl acrylate,
4-(3-α-ethyl-polydimethylsiloxanyl-propoxy)butyl acrylate,
4-(3-α-methyl-polydimethylsiloxanyl-propoxy)butyl acrylate,
2-(3-α-butyl-polydimethylsiloxanyl-propoxy)ethyl acrylate,
2-(3-α-propyl-polydimethylsiloxanyl-propoxy)ethyl methacrylate,
2-(3-α-ethyl-polydimethylsiloxanyl-propoxy)ethyl methacrylate,
2-(3-α-methyl-polydimethylsiloxanyl-propoxy)ethyl methacrylate,
2-(4-α-butyl-polydimethylsiloxanyl-butoxy)ethyl methacrylate,
2-(4-α-propyl-polydimethylsiloxanyl-butoxy)ethyl methacrylate,
2-(4-α-ethyl-polydimethylsiloxanyl-butoxy)ethyl methacrylate,
2-(4-α-methyl-polydimethylsiloxanyl-butoxy)ethyl methacrylate,
3-α-butyl-polydimethylsiloxanyl-propyl methacrylate,
3-α-propyl-polydimethylsiloxanyl-propyl methacrylate,
3-α-ethyl-polydimethylsiloxanyl-propyl methacrylate,
3-α-methyl-polydimethylsiloxanyl-propyl methacrylate,
2-α-butyl-polydimethylsiloxanyl-ethyl methacrylate,
2-α-propyl-polydimethylsiloxanyl-ethyl methacrylate,
2-α-ethyl-polydimethylsiloxanyl-ethyl methacrylate,
2-α-methyl-polydimethylsiloxanyl-ethyl methacrylate,
3-(2-(3-α-butyl-polydimethylsiloxanyl-propoxy)ethoxy)-2-hydroxypropyl acrylate,
3-(2-(3-α-propyl-polydimethylsiloxanyl-propoxy)ethoxy)-2-hydroxypropyl acrylate,
3-(2-(3-α-ethyl-polydimethylsiloxanyl-propoxy)ethoxy)-2-hydroxypropyl acrylate,
3-(2-(3-α-methyl-polydimethylsiloxanyl-propoxy)ethoxy)-2-hydroxypropyl acrylate,
3-(2-(3-α-butyl-polydimethylsiloxanyl-propoxy)ethoxy)-2-hydroxypropyl methacrylate,
3-(2-(3-α-propyl-polydimethylsiloxanyl-propoxy)ethoxy)-2-hydroxypropyl methacrylate,
3-(2-(3-α-ethyl-polydimethylsiloxanyl-propoxy)ethoxy)-2-hydroxypropyl methacrylate,
3-(2-(3-α-methyl-polydimethylsiloxanyl-propoxy)ethoxy)-2-hydroxypropyl methacrylate,
3-α-butyl-polydimethylsiloxanyl-1-propene,
3-α-propyl-polydimethylsiloxanyl-1-propene,
3-α-ethyl-polydimethylsiloxanyl-1-propene,
3-α-methyl-polydimethylsiloxanyl-1-propene,
4-α-butyl-polydimethylsiloxanyl-1-butene,
4-α-propyl-polydimethylsiloxanyl-1-butene,
4-α-ethyl-polydimethylsiloxanyl-1-butene,
4-α-methyl-polydimethylsiloxanyl-1-butene,
2-α-butyl-polydimethylsiloxanyl-ethene,
2-α-propyl-polydimethylsiloxanyl-ethene,
2-α-ethyl-polydimethylsiloxanyl-ethene,
2-α-methyl-polydimethylsiloxanyl-ethene,
2-(3-α-butyl-polydimethylsiloxanyl-propoxy)ethene,
2-(3-α-propyl-polydimethylsiloxanyl-propoxy)ethene,
2-(3-α-ethyl-polydimethylsiloxanyl-propoxy)ethene,
2-(3-α-methyl-polydimethylsiloxanyl-propoxy)ethene,
2-(3-α-butyl-polydimethylsiloxanyl-propoxy)-1-propene,
2-(3-α-propyl-polydimethylsiloxanyl-propoxy)-1-propene,
2-(3-α-ethyl-polydimethylsiloxanyl-propoxy)-1-propene, or
2-(3-α-methyl-polydimethylsiloxanyl-propoxy)-1-propene,
preferably a structural unit derived from
2-(3-α-butyl-polydimethylsiloxanyl-propoxy)ethyl acrylate,
2-(3-α-methyl-polydimethylsiloxanyl-propoxy)ethyl acrylate,

3-α-butyl-polydimethylsiloxanyl-propyl acrylate,
3-α-methyl-polydimethylsiloxanyl-propyl acrylate,
2-(3-α-butyl-polydimethylsiloxanyl-propoxy)ethyl methacrylate,
2-(3-α-methyl-polydimethylsiloxanyl-propoxy)ethyl methacrylate,
3-(2-(3-α-butyl-polydimethylsiloxanyl-propoxy)ethoxy)-2-hydroxypropyl acrylate,
3-(2-(3-α-methyl-polydimethylsiloxanyl-propoxy)ethoxy)-2-hydroxypropyl acrylate,
3-(2-(3-α-butyl-polydimethylsiloxanyl-propoxy)ethoxy)-2-hydroxypropyl methacrylate,
3-(2-(3-α-methyl-polydimethylsiloxanyl-propoxy)ethoxy)-2-hydroxypropyl methacrylate,
2-α-butyl-polydimethylsiloxanyl-ethene,
2-α-methyl-polydimethylsiloxanyl-ethene,
2-(3-α-butyl-polydimethylsiloxanyl-propoxy)ethene, or
2-(3-α-methyl-polydimethylsiloxanyl-propoxy)ethene,
more preferably a structural unit derived from
2-(3-α-butyl-polydimethylsiloxanyl-propoxy)ethyl acrylate,
2-(3-α-methyl-polydimethylsiloxanyl-propoxy)ethyl acrylate,
2-(3-α-butyl-polydimethylsiloxanyl-propoxy)ethyl methacrylate,
2-(3-α-methyl-polydimethylsiloxanyl-propoxy)ethyl methacrylate,
3-(2-(3-α-butyl-polydimethylsiloxanyl-propoxy)ethoxy)-2-hydroxypropyl acrylate,
3-(2-(3-α-butyl-polydimethylsiloxanyl-propoxy)ethoxy)-2-hydroxypropyl methacrylate,
2-α-butyl-polydimethylsiloxanyl-ethene, or
2-(3-α-butyl-polydimethylsiloxanyl-propoxy)ethene,
still more preferably a structural unit derived from
2-(3-α-butyl-polydimethylsiloxanyl-propoxy)ethyl acrylate.

The polymer 1 may contain two or more types of structural units B. For example, the polymer 1 may contain a structural unit derived from 2-(3-α-butyl-polydimethylsiloxanyl-propoxy)ethyl acrylate and a structural unit derived from 2-(3-α-methyl-polydimethylsiloxanyl-propoxy)ethyl acrylate.

Structural Unit C

The structural unit C is represented by formula (2), and each structural unit is selected independently of the other structural units.

[Chem. 23]

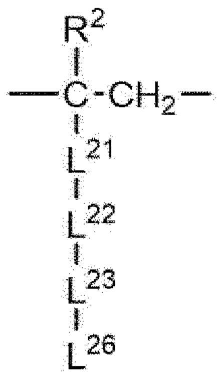

Formula (2)

In formula (2),

$R^2$ represents a hydrogen atom or a methyl group,
$L^{21}$ represents -CO-O-, -O-CO-, or -O-,
$L^{22}$ represents a single bond, $-CH_2-$, $-CH_2-CH_2-$, $-CH_2-CH_2-CH_2-$, $-CH(CH_3)-CH_2-$, $-CH_2-CH(CH_3)-$, $-CH_2-CH(OH)-CH_2-$, or $-CH_2-CH(CH_2OH)-$,
$L^{23}$ represents a single bond, -CO-O-, -O-CO-, -O-, - CO-NH-, -NH-CO-, -CO-NH-CO-, -NH-CO-NH-, -NH-, or $-N(CH_3)-$,
$L^{26}$ represents $-(CH_2)_m-(R^{r2}O)_q-R^{r1}$,

$R^{r1}$ represents a hydrogen atom, a $C_{1-15}$ alkyl group, or a $C_{1-20}$ aryl group,
$R^{r2}$ represents a $C_{1-15}$ alkylene group,
q represents an integer of 1 to 1000000, and m represents an integer of 0 to 10.

When q is an integer of 2 or more, multiple -($R^{r2}$O)-may be the same or different.
The left side of each of the condensed structural formulas represented by $L^{21}$, $L^{22}$, and $L^{23}$ corresponds to the upper side of formula (2) (the main chain side of the polymer), and the right side of each of the condensed structural formulas corresponds to the lower side of formula (2) (the terminal side of a side chain of the polymer).
$R^2$ is preferably a hydrogen atom.
$L^{21}$ is preferably -CO-O- or -O-CO-, more preferably - CO-O-, from the viewpoint of moisture permeability.
$L^{22}$ is preferably a single bond, $-CH_2$ -, $-CH_2-CH_2-$, or $-CH_2-CH_2-CH_2-$, more preferably a single bond.
$L^{23}$ is preferably a single bond, -NH-, or $-N(CH_3)-$, more preferably a single bond.
When $R^{r1}$ in $L^{26}$ is an alkyl group, $R^{r1}$ specifically represents $C_tH_{2t+1}-$, where t is an integer of 1 to 15. t is preferably from 1 to 3, more preferably 1.
$R^{r2}$ in $L^{26}$ is, for example, $-CH_2-$, $-CH_2-CH_2-$, $-CH_2-CH_2-CH_2-$, $-CH_2-CH_2-CH_2-CH_2-$, $-CH_2-CH(CH_3)-$, or $-CH(CH_3)-CH_2-$. When q is an integer of 2, multiple -($R^{r2}$O)- may be the same or different.
q in $L^{26}$ is preferably an integer of 1 to 250, more preferably from 10 to 250, still more preferably from 12 to 230, yet still more preferably from 15 to 100, particularly preferably from 20 to 50.
m in $L^{26}$ is preferably an integer of 0 to 4, more preferably from 0 to 2, still more preferably 0.
In formula (2), consecutive single bonds if present are treated as one single bond.
Examples of the structural unit C represented by formula (2) include the following structural units.

[Chem. 24]

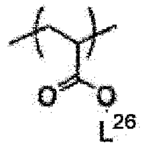 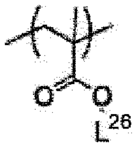 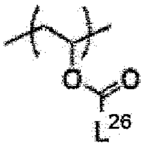 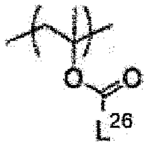 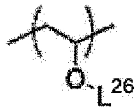 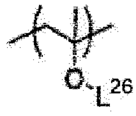

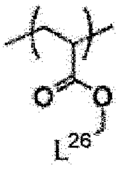 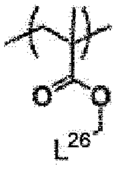 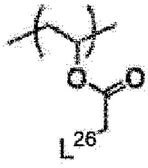 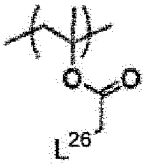 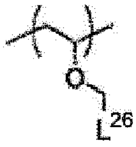 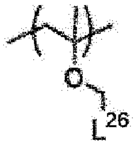

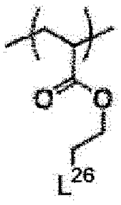 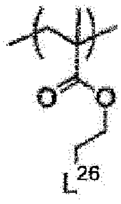 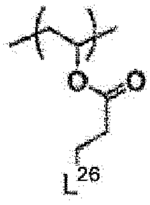 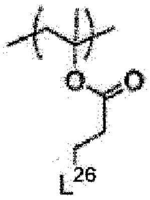 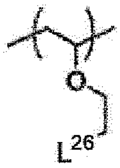 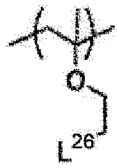

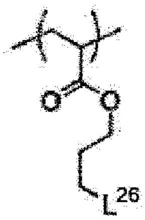 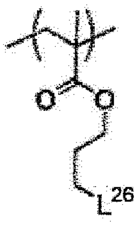 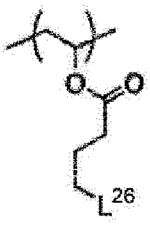 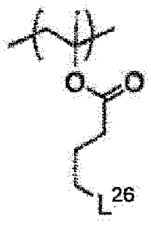 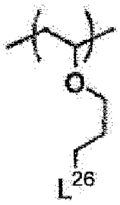 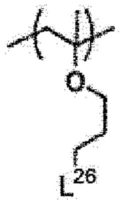

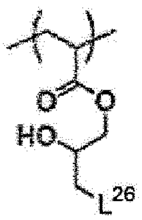 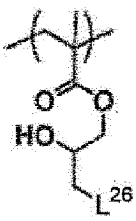 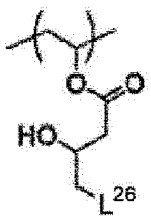 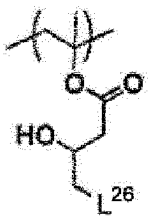 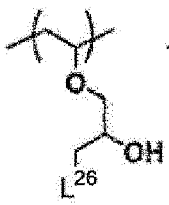 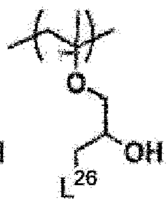

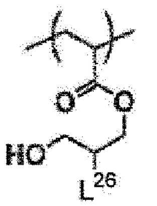 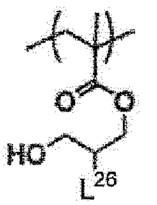 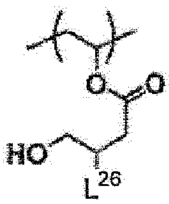 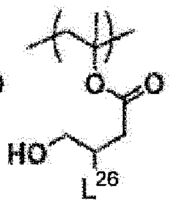 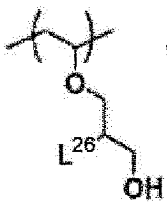 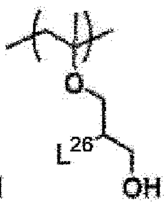

[Chem. 25]

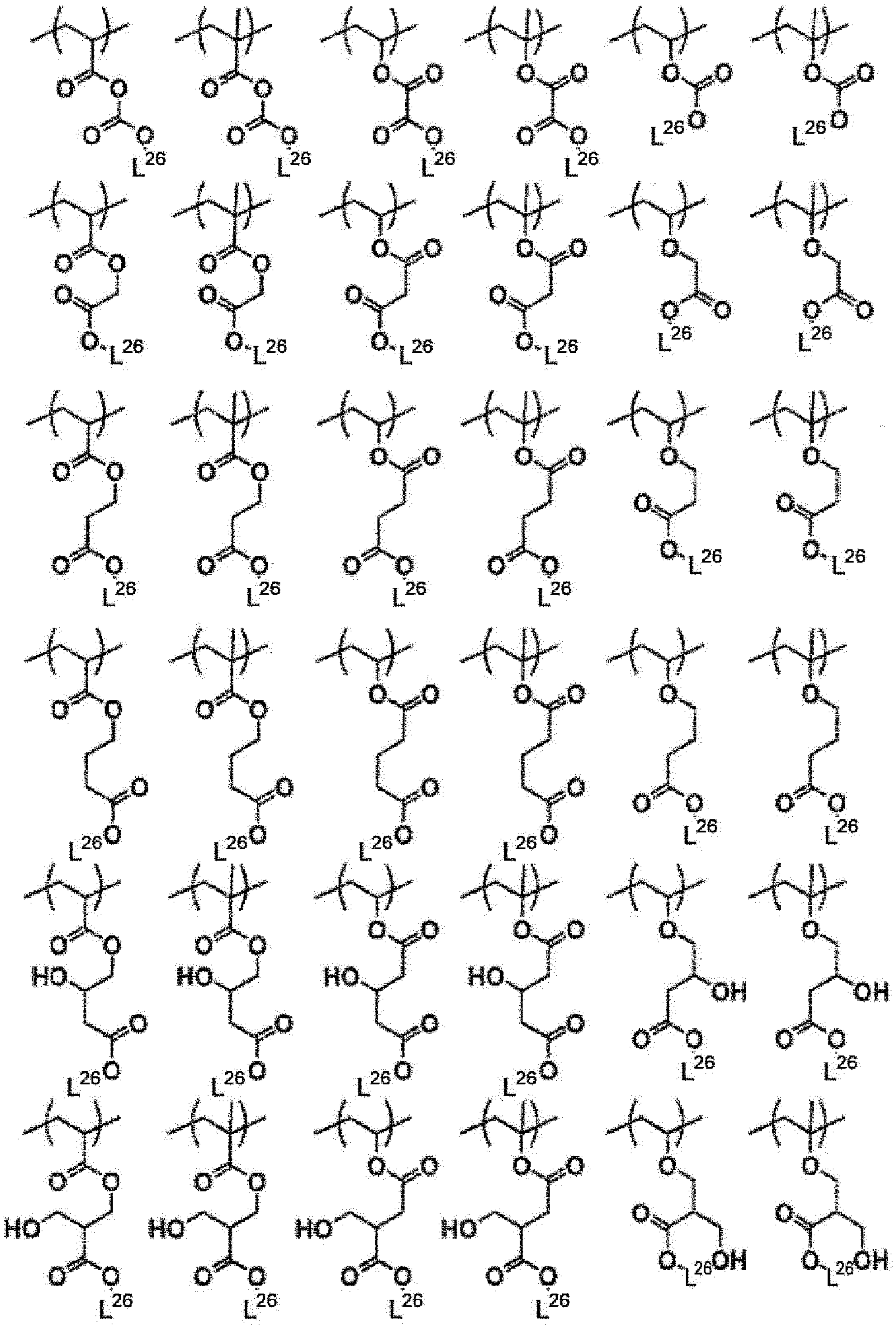

[Chem. 26]

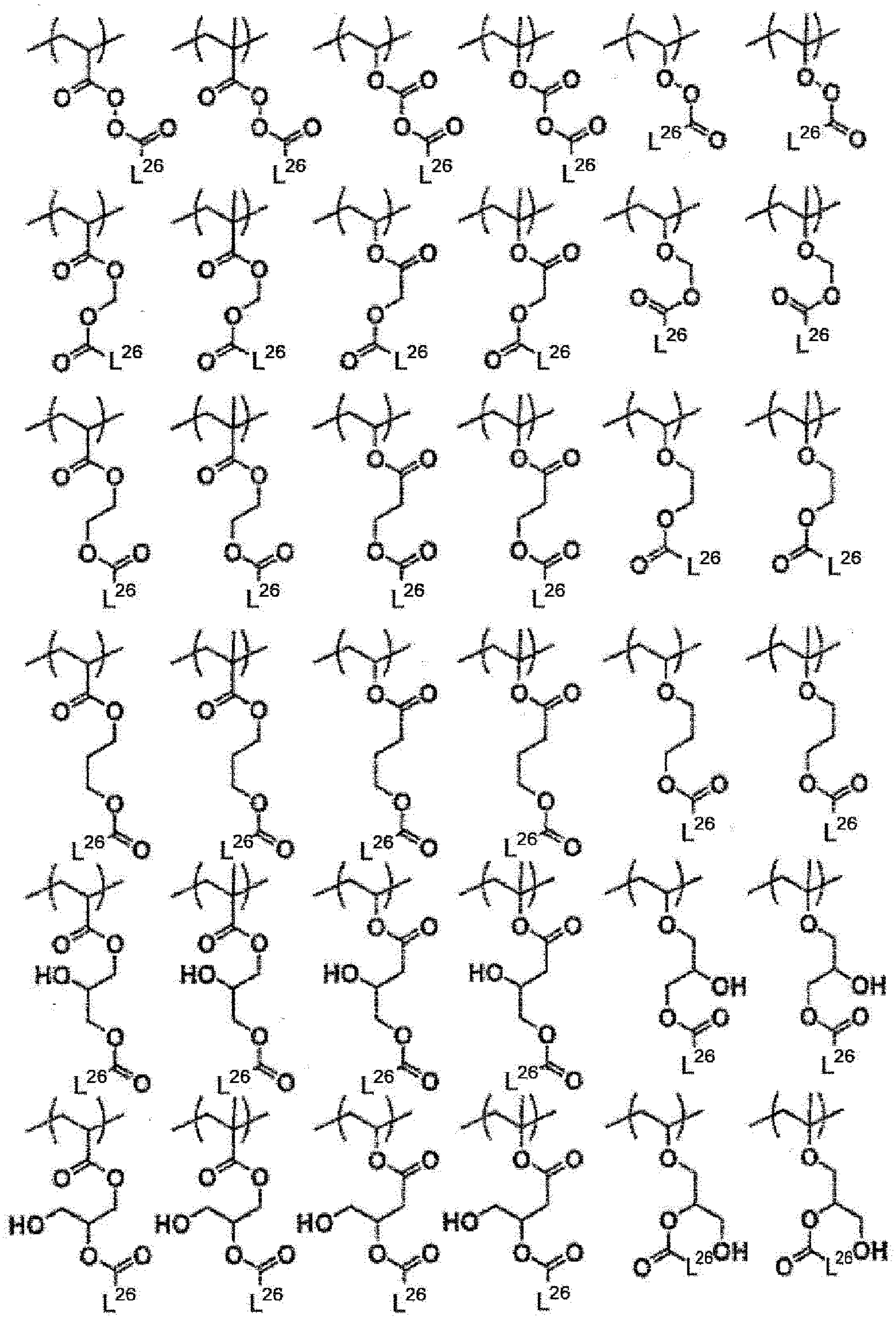

[Chem. 27]

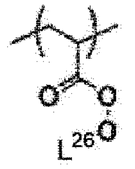 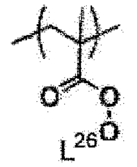 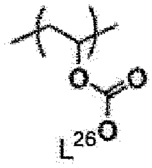 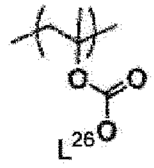 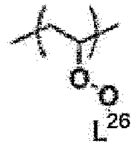 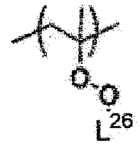

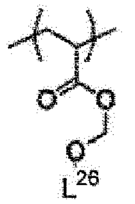 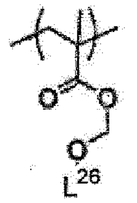 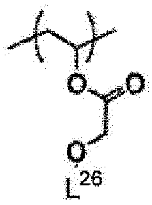 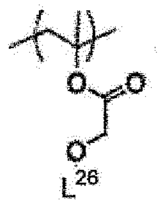 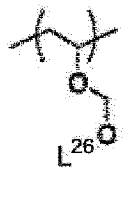 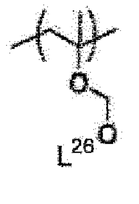

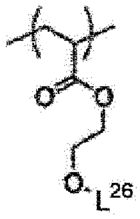 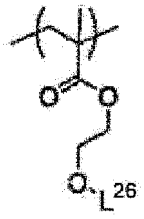 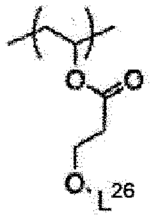 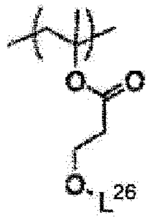 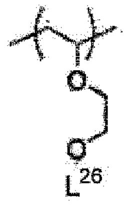 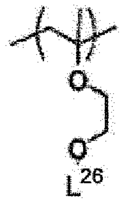

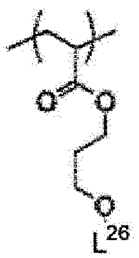 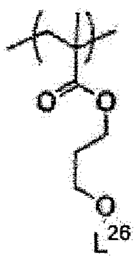 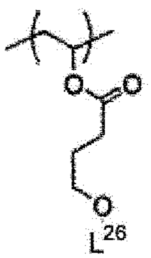 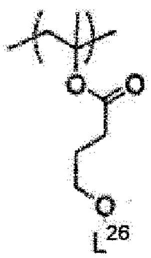 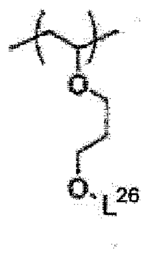 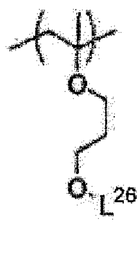

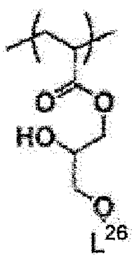 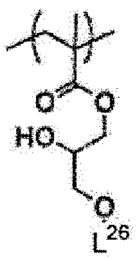 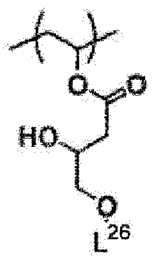 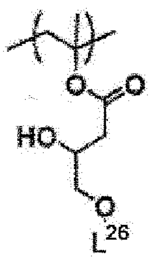 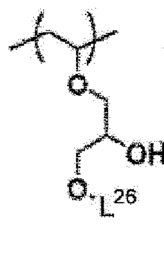 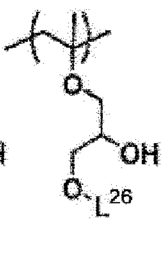

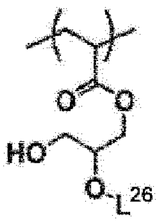 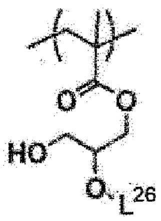 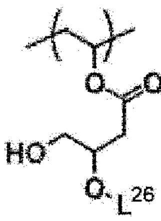 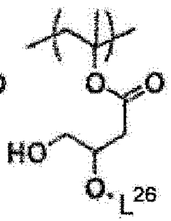 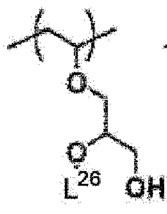 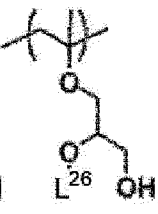

[Chem. 28]

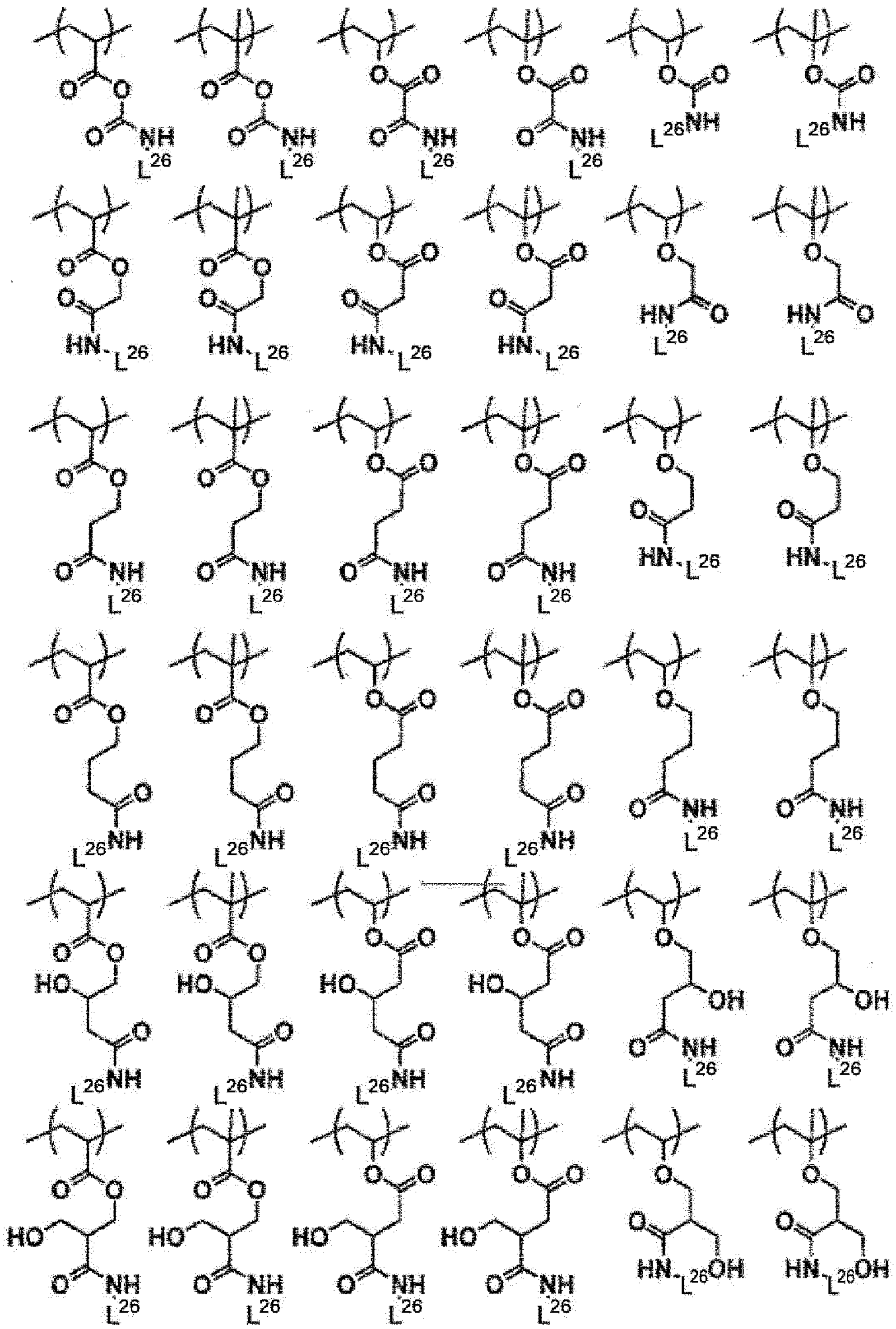

[Chem. 29]

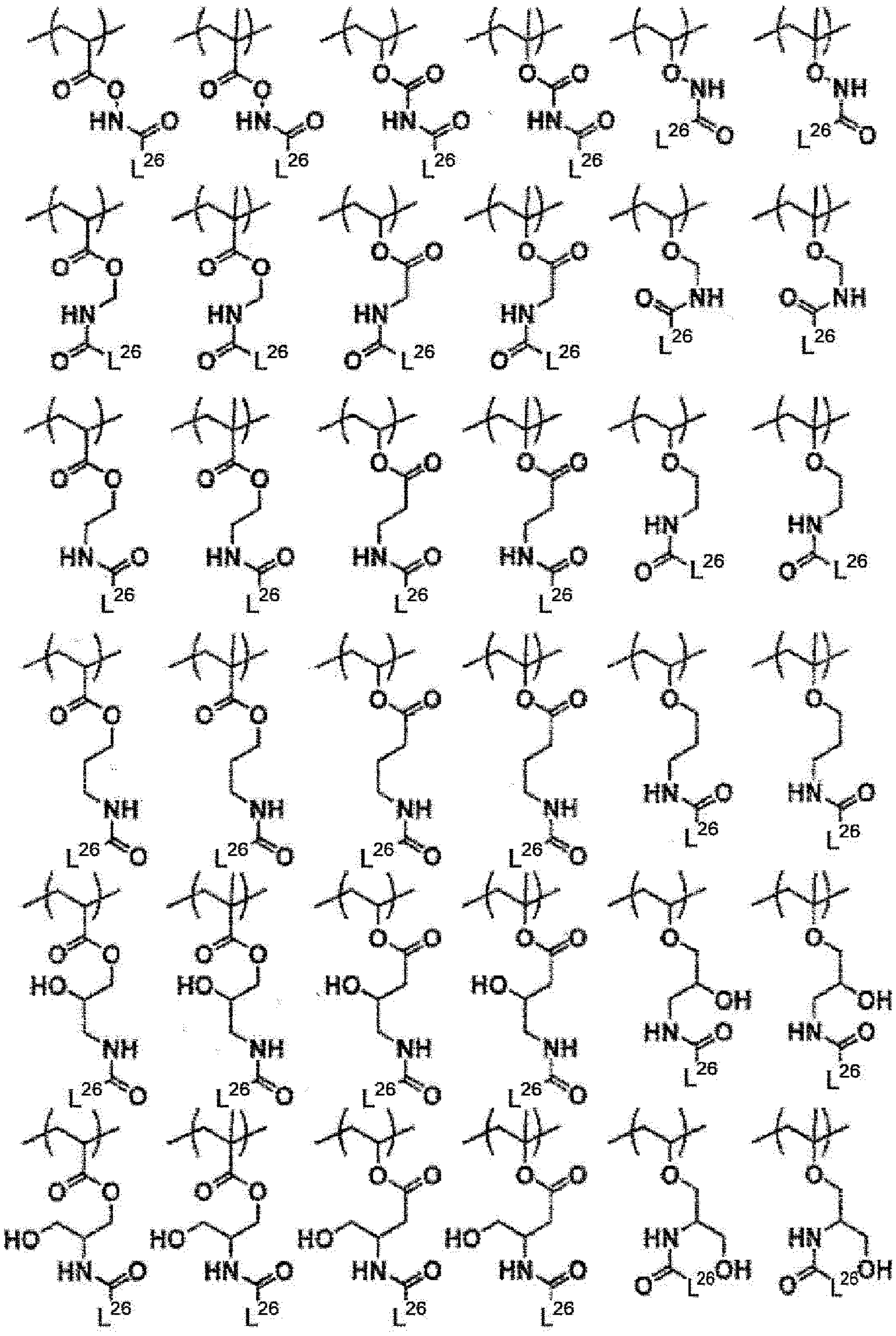

[Chem. 30]

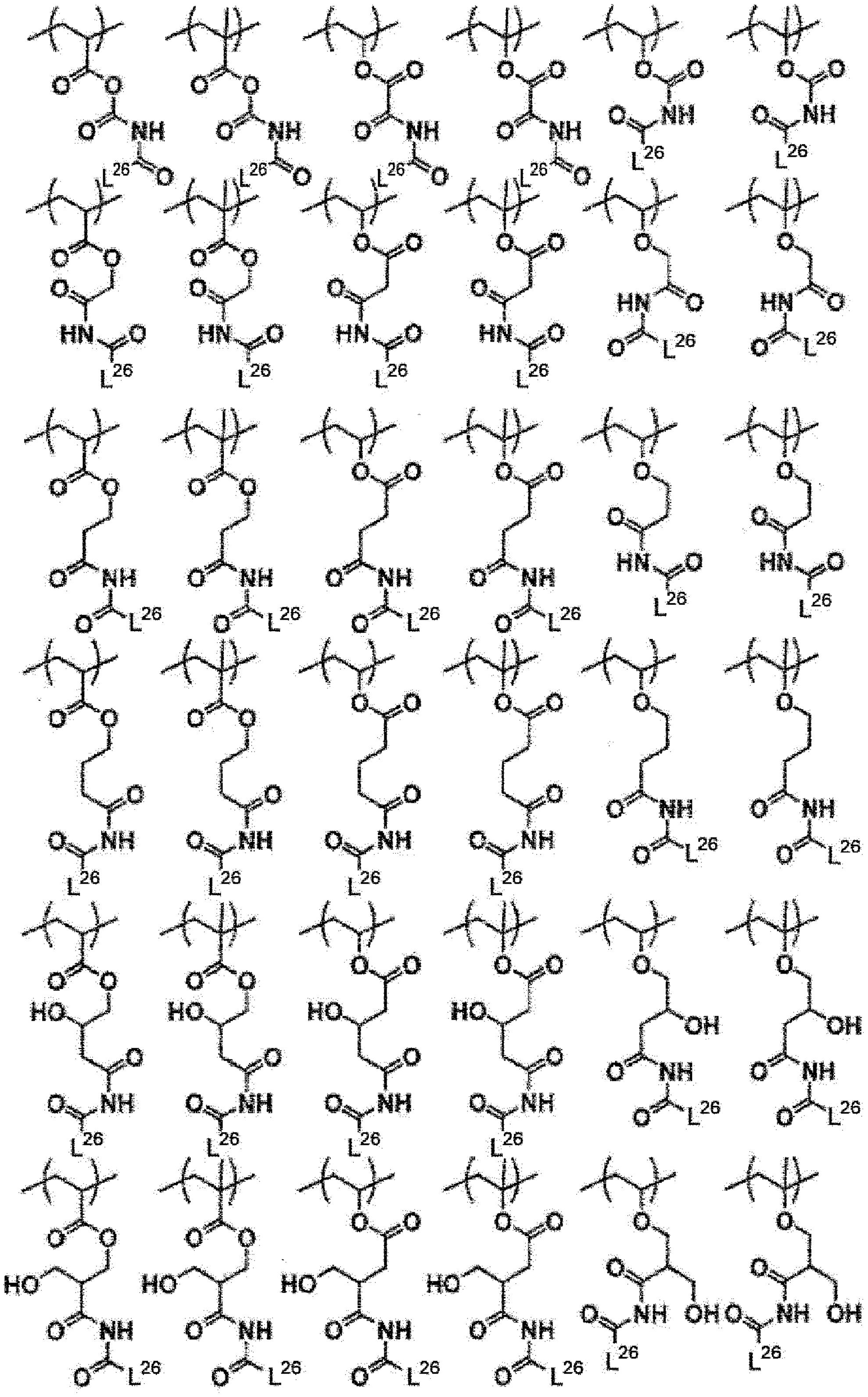

[Chem. 31]

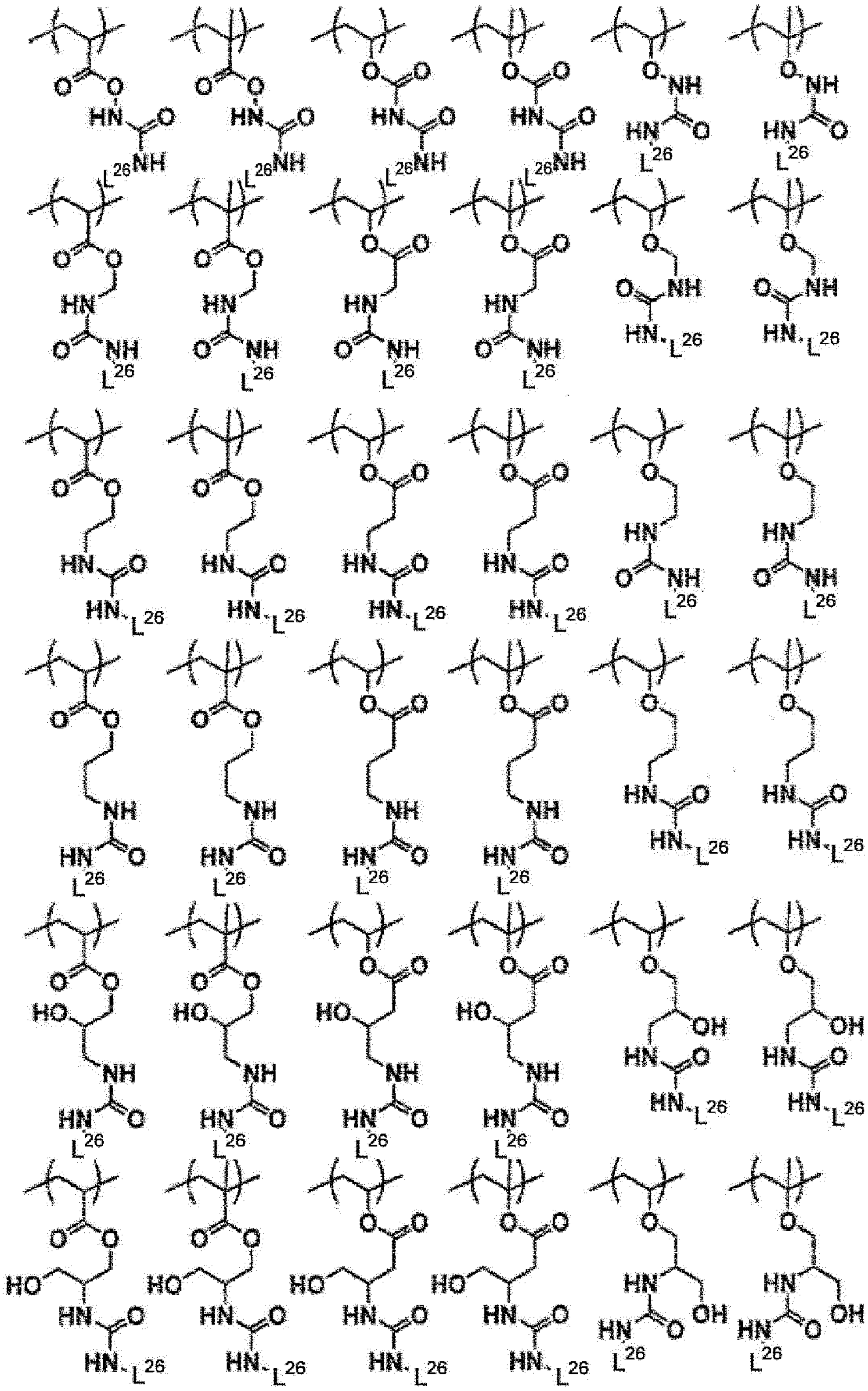

[Chem. 32]

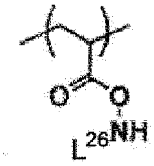 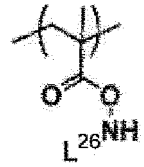 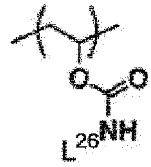 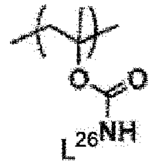 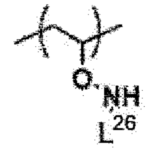 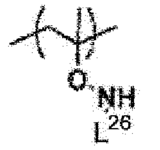

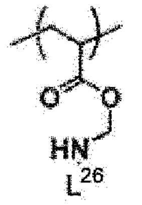 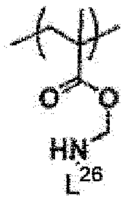 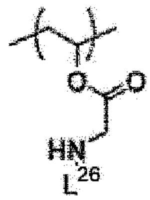 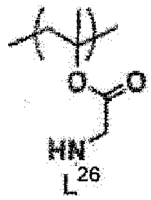 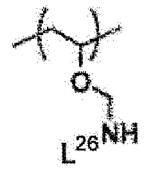 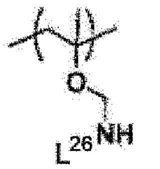

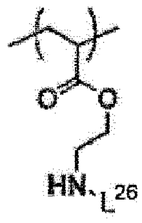 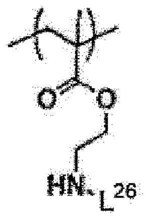 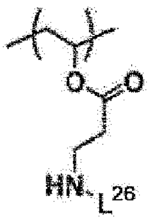 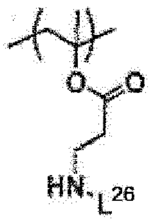 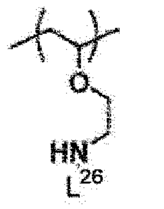 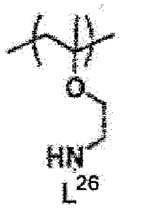

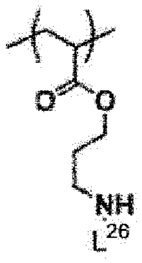 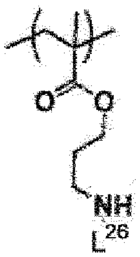 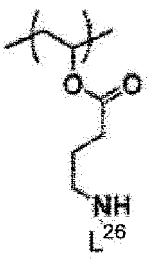 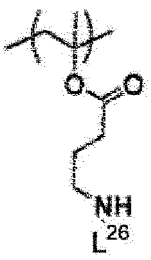 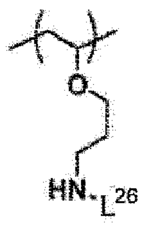 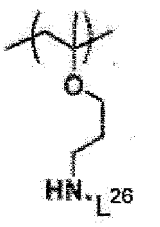

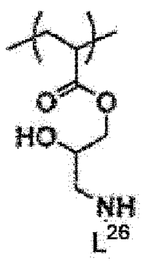 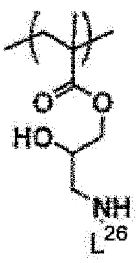 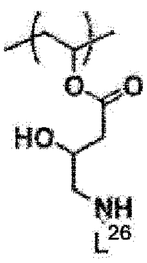 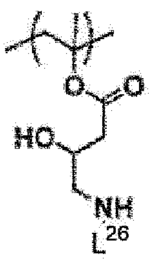 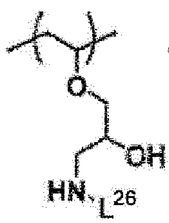 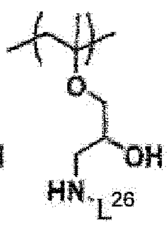

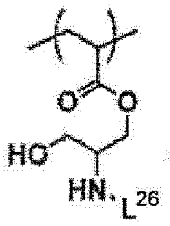 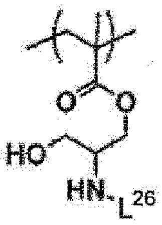 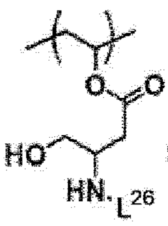 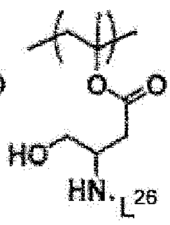 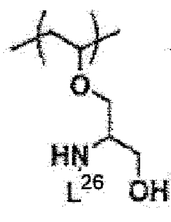 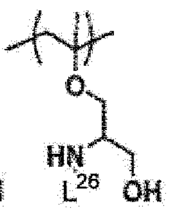

[Chem. 33]

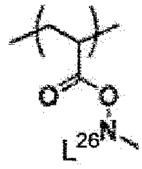 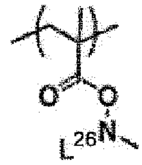 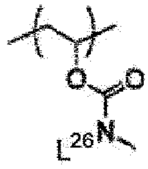 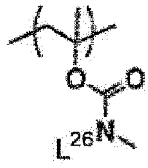 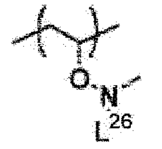 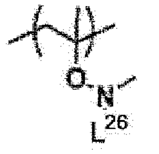

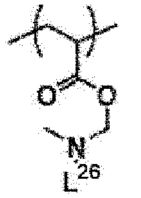 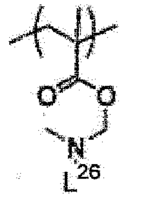 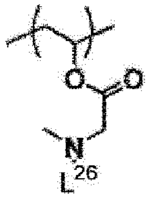 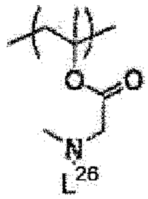 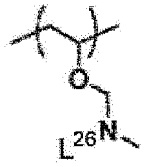 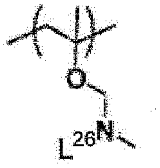

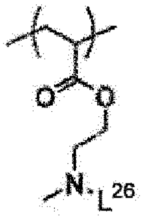 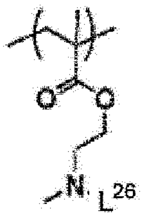 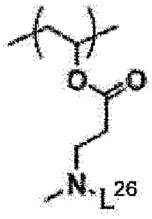 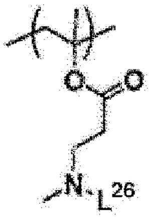 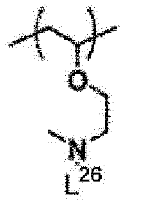 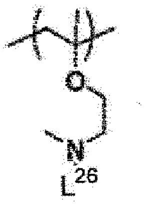

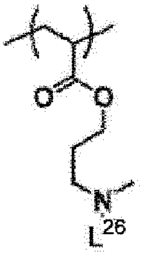 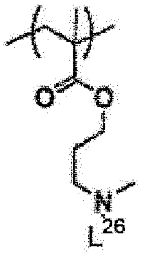 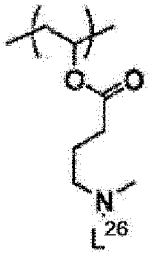 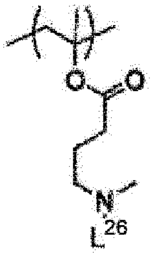 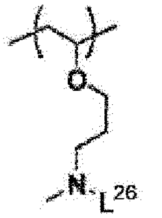 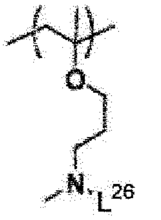

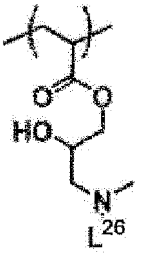 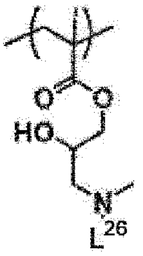 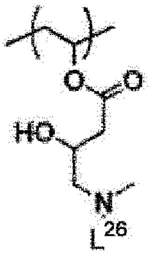 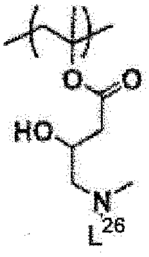 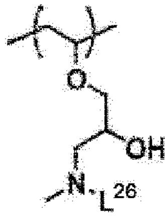 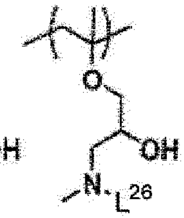

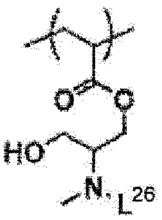 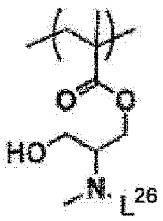 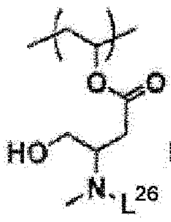 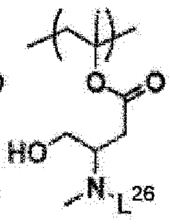 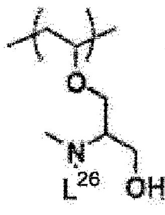 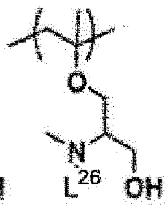

The structural unit C represented by formula (2) is preferably a structural unit represented by any one of the following formulas.

[Chem. 34]

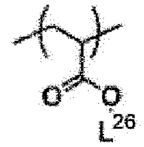
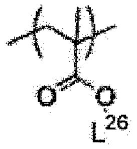
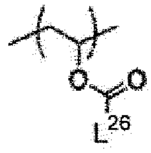
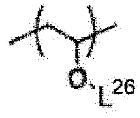
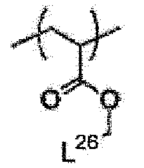
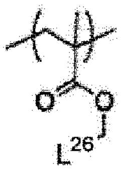
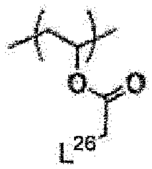
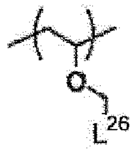
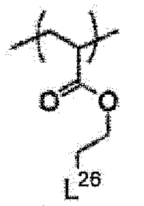
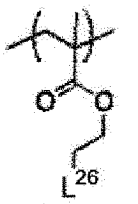
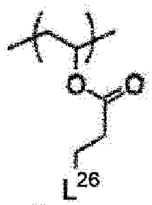
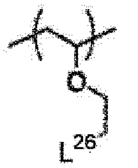
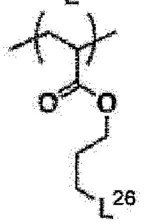
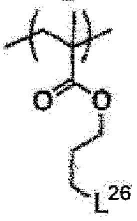
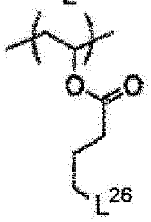
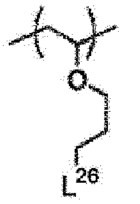
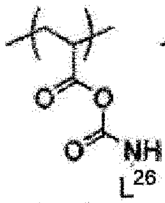
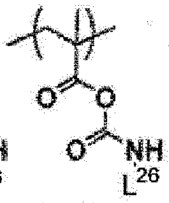
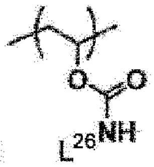
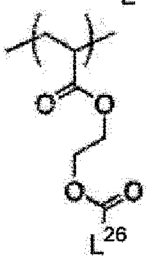
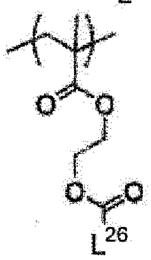
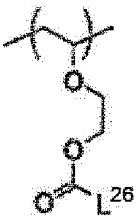

[Chem. 35]

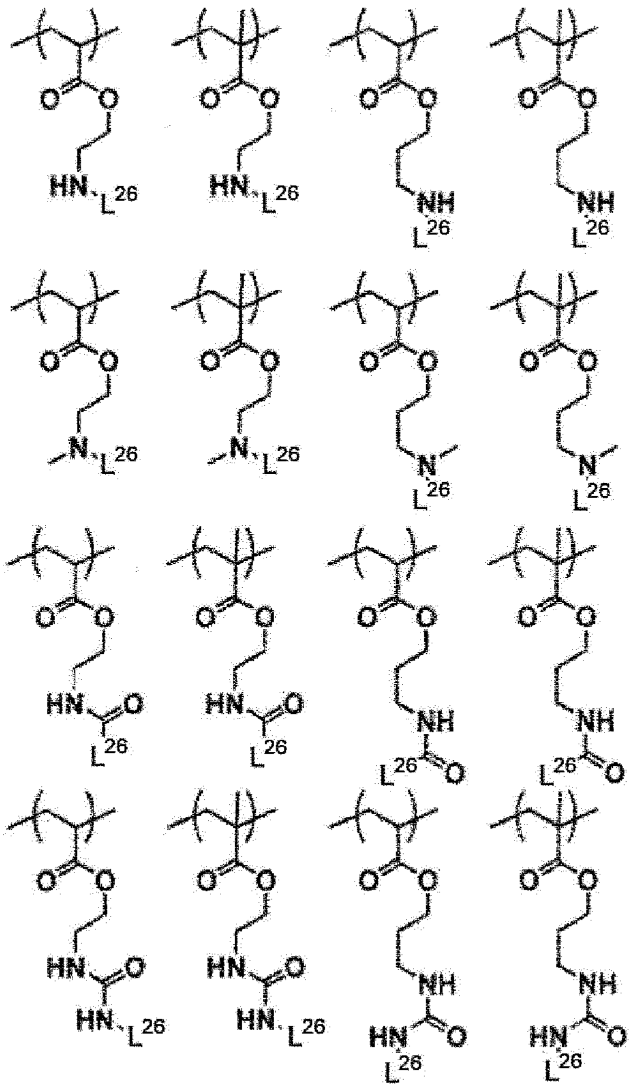

[Chem. 36]

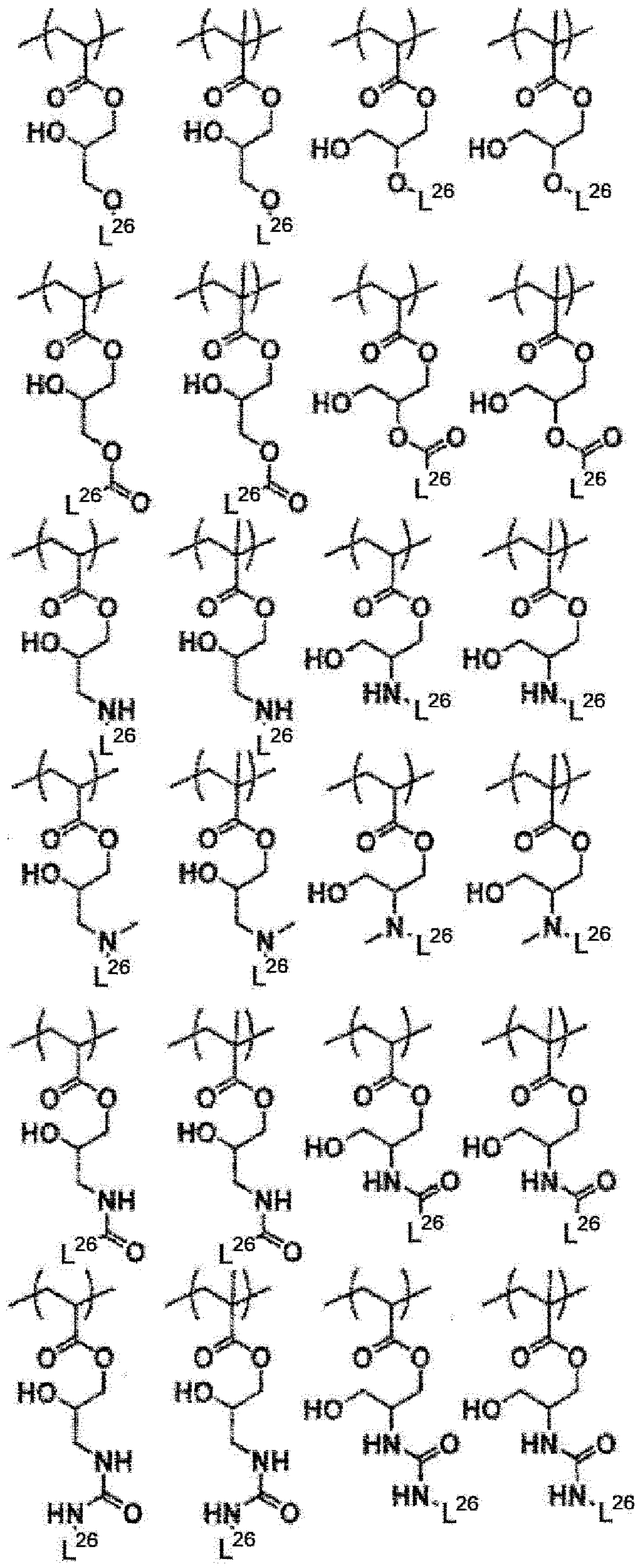

The structural unit C represented by formula (2) is more preferably a structural unit represented by any one of the following formulas.

[Chem. 37]

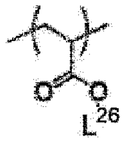
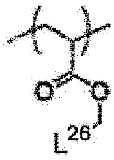
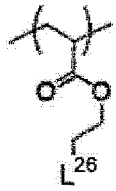
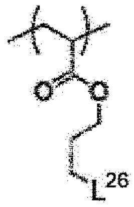
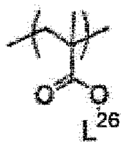
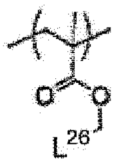
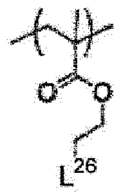
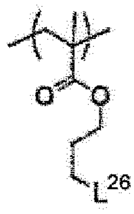
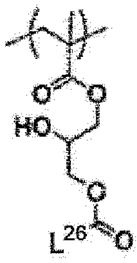
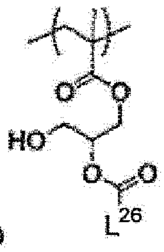

The structural unit C represented by formula (2) is still more preferably a structural unit represented by the following formula.

[Chem. 38]

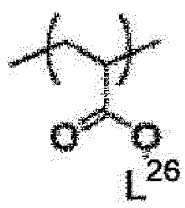

The structural unit C is, for example, a structural unit derived from

methoxypolyethylene glycol acrylate (α-methyl-ω-acryloyloxy-poly(oxyethylene)),
methoxypolyethylene glycol methacrylate (α-methyl-ω-methacryloyloxy-poly(oxyethylene)),
methoxypolypropylene glycol acrylate (α-methyl-ω-acryloyloxy-poly(oxypropylene)),
methoxypolypropylene glycol methacrylate (α-methyl-ω-methacryloyloxy-poly(oxypropylene)),
ethoxypolyethylene glycol acrylate (α-ethyl-ω-acryloyloxy-poly(oxyethylene)),
ethoxypolyethylene glycol methacrylate (α-ethyl-ω-methacryloyloxy-poly(oxyethylene)),
ethoxypolypropylene glycol acrylate (α-ethyl-ω-acryloyloxy-poly(oxypropylene)),
ethoxypolypropylene glycol methacrylate (α-ethyl-ω-methacryloyloxy-poly(oxypropylene)),
polyethylene glycol acrylate (α-hydro-ω-acryloyloxy-poly(oxyethylene)),
polyethylene glycol methacrylate (α-hydro-ω-methacryloyloxy-poly(oxyethylene)),
polypropylene glycol acrylate (α-hydro-ω-acryloyloxy-poly(oxypropylene)),
polypropylene glycol methacrylate (α-hydro-ω-methacryloyloxy-poly(oxypropylene)),
polyethylene glycol-polypropylene glycol copolymer acrylate,
polyethylene glycol-polypropylene glycol copolymer methacrylate
3-polyethylene glycol-2-hydroxypropyl acrylate (α-hydro-ω-(2-hydroxy-3-acryloyloxy-propyl)-poly(oxyethylene)),
3-polyethylene glycol-2-hydroxypropyl methacrylate (α-hydro-ω-(2-hydroxy-3-methacryloyloxy-propyl)-poly(oxyethylene)),

3-methoxypolyethylene glycol-2-hydroxypropyl acrylate (α-methyl-ω-(2-hydroxy-3-acryloyloxy-propyl)-poly(oxyethylene)),
3-methoxypolyethylene glycol-2-hydroxypropyl methacrylate (α-methyl-ω-(2-hydroxy-3-methacryloyloxy-propyl)-poly(oxyethylene)),
3-polypropylene glycol-2-hydroxypropyl acrylate (α-hydro-ω-(2-hydroxy-3-acryloyloxy-propyl)-poly(oxypropylene)),
3-polypropylene glycol-2-hydroxypropyl methacrylate (α-hydro-ω-(2-hydroxy-3-methacryloyloxy-propyl)-poly(oxypropylene)),
3-methoxypolypropylene glycol-2-hydroxypropyl acrylate (α-methoxy-ω-(2-hydroxy-3-acryloyloxy-propyl)-poly(oxypropylene)), or
3-methoxypolypropylene glycol-2-hydroxypropyl methacrylate (α-methoxy-ω-(2-hydroxy-3-methacryloyloxy-propyl)-poly(oxypropylene)),
preferably a structural unit derived from methoxypolyethylene glycol acrylate,
methoxypolyethylene glycol methacrylate,
ethoxypolyethylene glycol acrylate,
ethoxypolyethylene glycol methacrylate,
polyethylene glycol acrylate,
polyethylene glycol methacrylate,
polyethylene glycol-polypropylene glycol copolymer acrylate,
polyethylene glycol-polypropylene glycol copolymer methacrylate,
3-polyethylene glycol-2-hydroxypropyl acrylate,
3-polyethylene glycol-2-hydroxypropyl methacrylate,
3-methoxypolyethylene glycol-2-hydroxypropyl acrylate, or
3-methoxypolyethylene glycol-2-hydroxypropyl methacrylate,
more preferably a structural unit derived from methoxypolyethylene glycol acrylate,
polyethylene glycol acrylate,
polyethylene glycol-polypropylene glycol copolymer acrylate,
3-polyethylene glycol-2-hydroxypropyl acrylate, or
3-methoxypolyethylene glycol-2-hydroxypropyl acrylate,
still more preferably a structural unit derived from methoxypolyethylene glycol acrylate.

The polymer 1 may contain two or more types of structural units C. For example, the polymer 1 may contain a structural unit derived from methoxypolyethylene glycol acrylate and a structural unit derived from methoxypolypropylene glycol acrylate.

Structural Unit D

The polymer 1 may further include at least one structural unit D selected from the group consisting of structural units represented by formula (3) below and a structural unit represented by formula (4) below.

[Chem. 39]

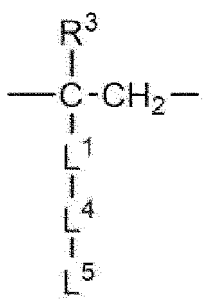

Formula (3)

[Chem. 40]

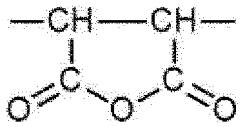

Formula (4)

In formula (3),

$R^3$ represents a hydrogen atom or a methyl group,
$L^1$ represents -CO-O-, -O-CO-, or -O-,
$L^4$ represents a single bond or a $C_{1-8}$ alkylene group,
$L^5$ represents a hydrogen atom, an epoxy group, - $CH(OH)-CH_2OH$, a carboxy group, a hydroxy group, an amino group, or a $C_{1-4}$ alkylamino group.

The left side of each of the condensed structural formulas represented by $L^1$ corresponds to the upper side of formula (3) (the main chain side of the polymer), and the right side of each of the condensed structural formulas corresponds to the lower side of formula (3) (the terminal side of a side chain of the polymer).

Structural Unit Represented by Formula (3)

Preferred forms of the structural units represented by formula (3) are described below.
$R^3$ is preferably a hydrogen atom.
$L^1$ is preferably -CO-O- or -O-CO-, more preferably - CO-O-, from the viewpoint of moisture permeability.
Examples of the $C_{1-8}$ alkylene group represented by $L^4$ include methylene, ethylene, n-propylene, 1-methylethylene, n-butylene, 1,2-dimethylethylene, 1,1-dimethylethylene, 2,2-dimethylethylene, n-pentylene, n-hexylene, n-heptalene, n-octylene, and 2-ethyl-n-hexylene groups.
$L^4$ is preferably a single bond, a methylene group, an ethylene group, or an n-propylene group, more preferably a methylene group.
Examples of the $C_{1-4}$ alkylamino group represented by $L^5$ include methylamino, ethylamino, propylamino, butylamino, dimethylamino, and diethylamino groups.
$L^5$ is preferably a hydrogen atom, an epoxy group, or $-CH(OH)-CH_2OH$, more preferably a hydrogen atom.
Examples of the structural unit D represented by formula (3) include the following structural units.

[Chem. 41]

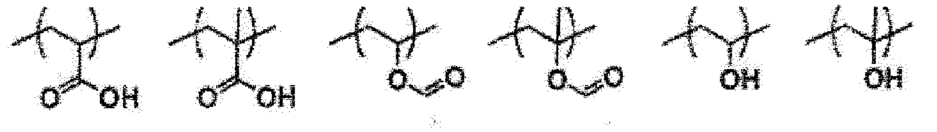

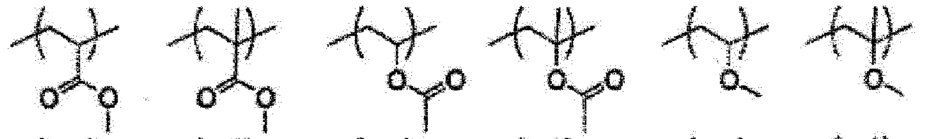

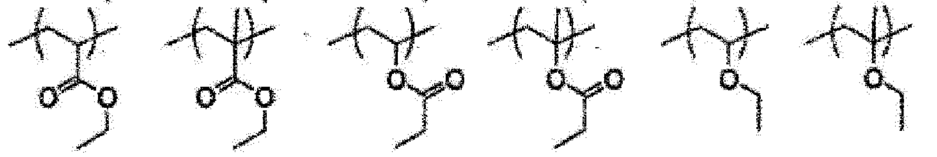

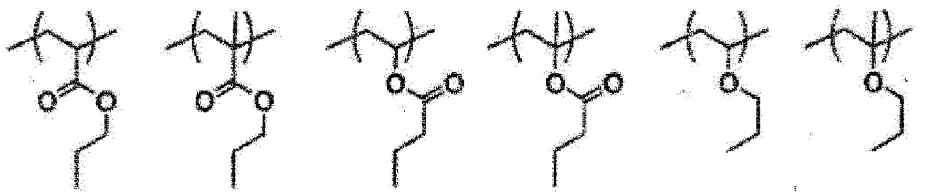

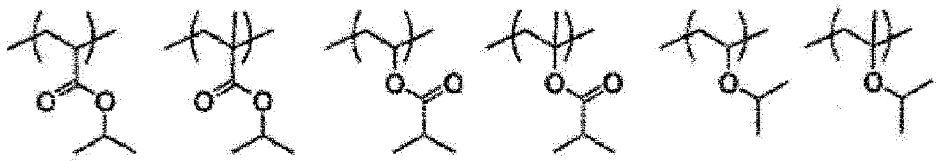

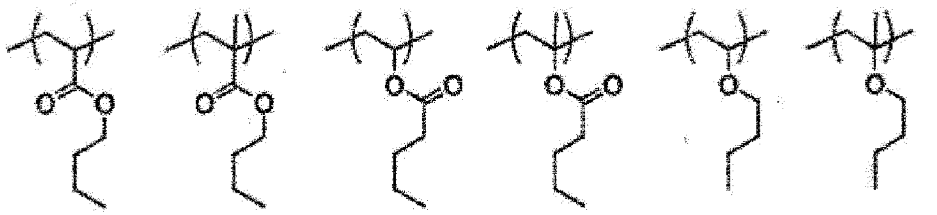

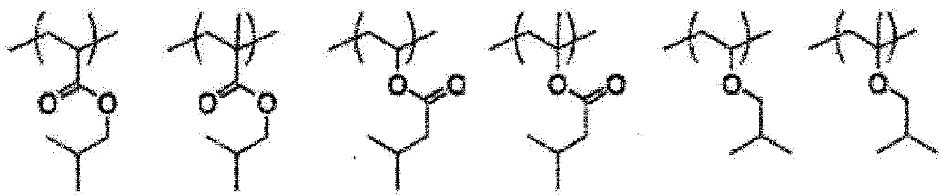

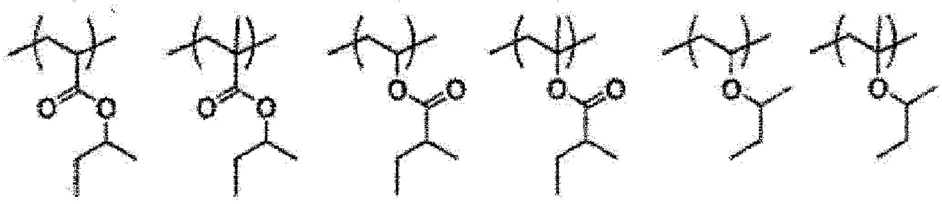

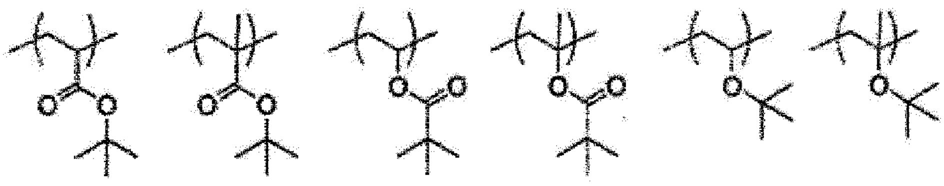

[Chem. 42]

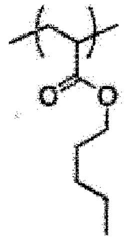 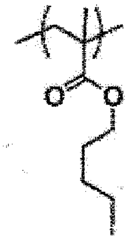 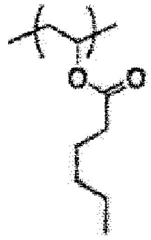 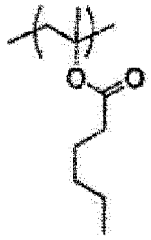 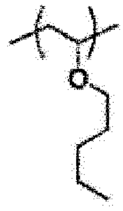 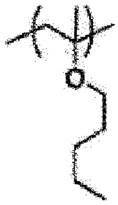

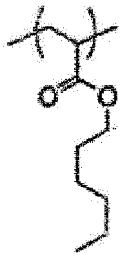 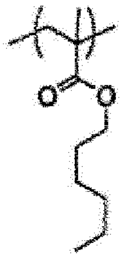 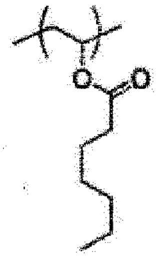 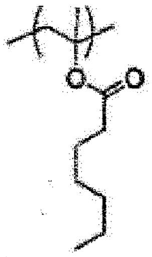 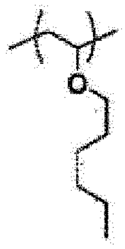 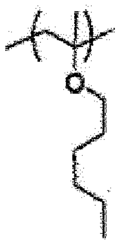

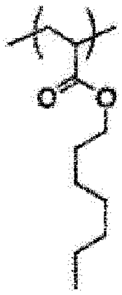 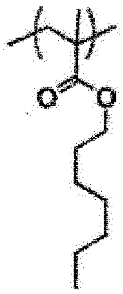 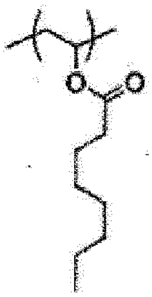 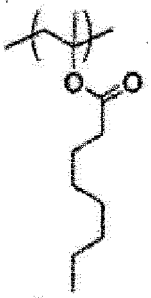 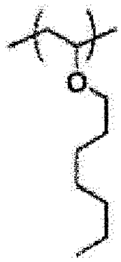 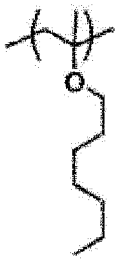

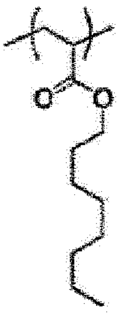 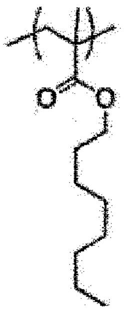 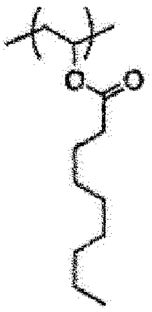 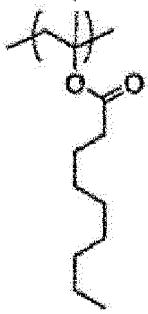 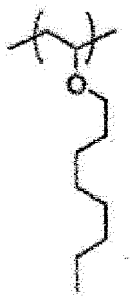 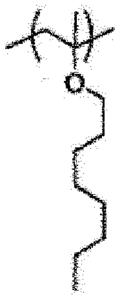

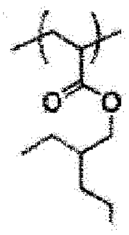 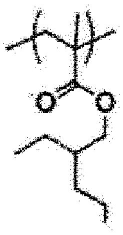 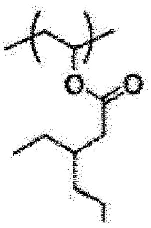 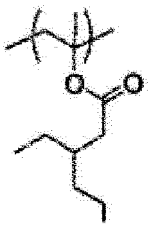 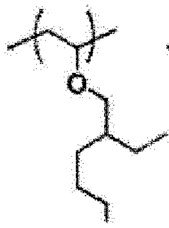 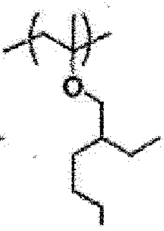

[Chem. 43]

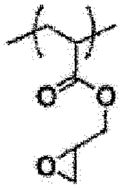 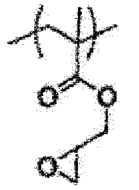 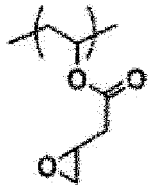 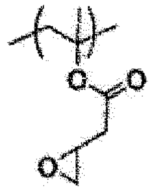 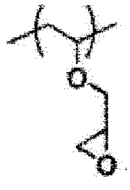 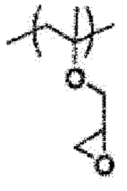

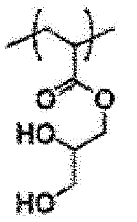 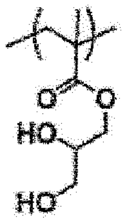 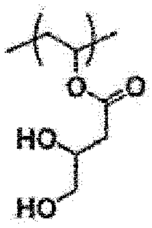 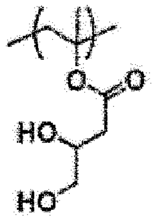 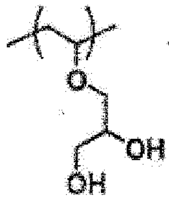 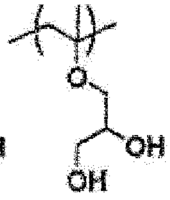

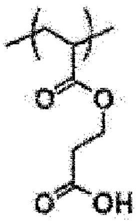 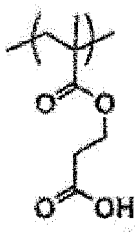 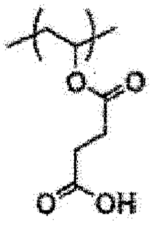 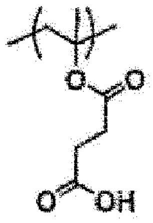 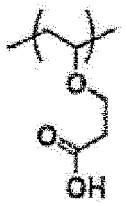 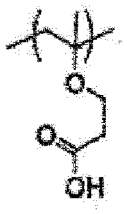

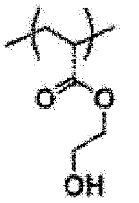 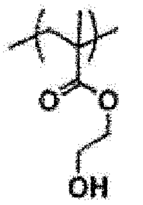 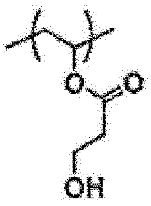 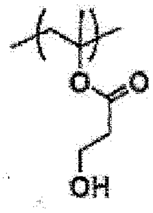 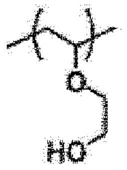 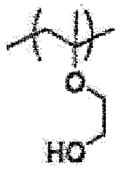

[Chem. 44]

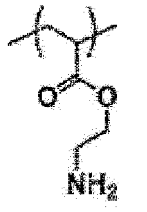 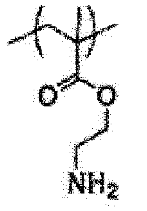 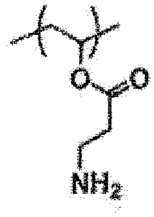 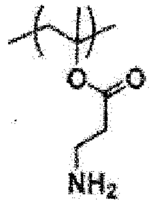 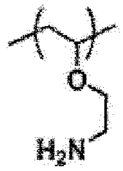 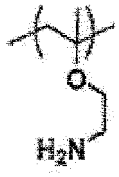

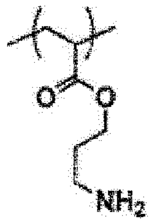 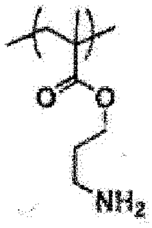 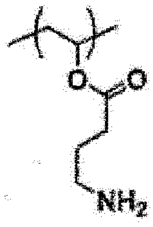 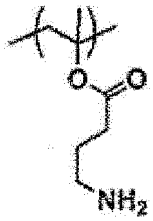 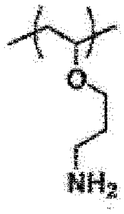 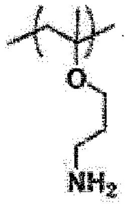

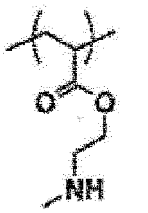 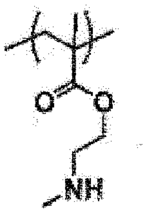 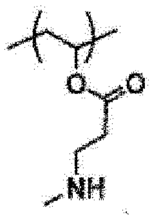 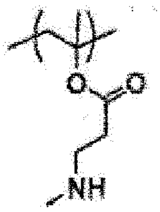 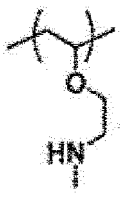 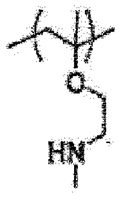

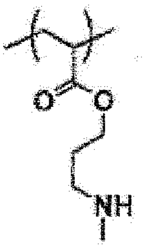 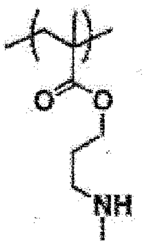 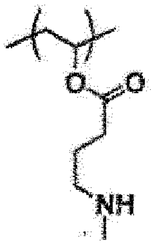 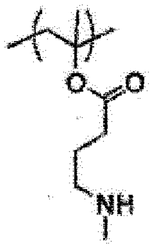 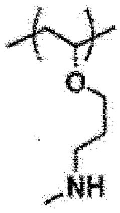 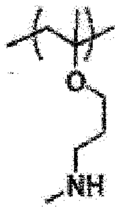

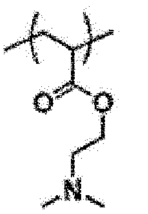 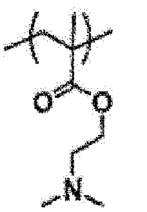 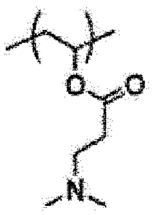 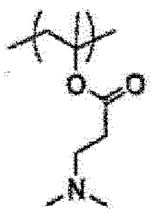 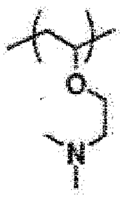 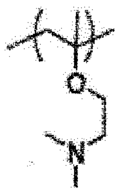

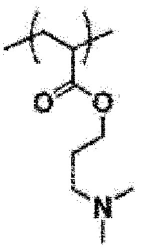 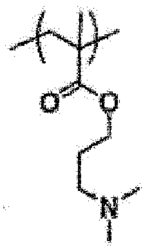 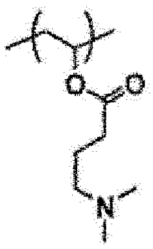 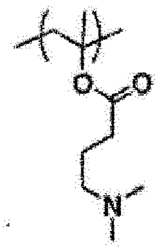 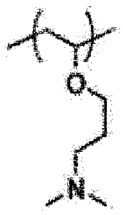 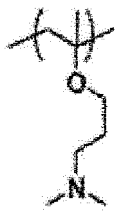

The structural unit D represented by formula (3) is preferably a structural unit represented by any one of the following formulas.

[Chem. 45]

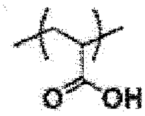 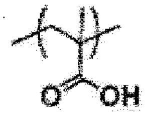 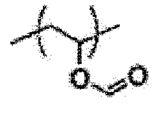 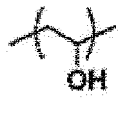

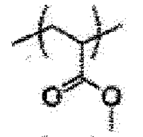 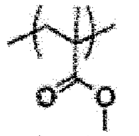 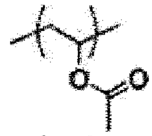 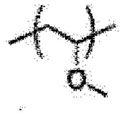

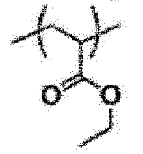 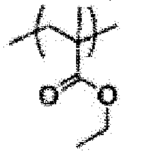 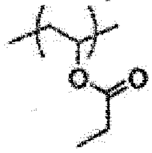 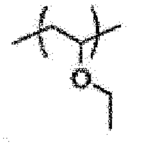

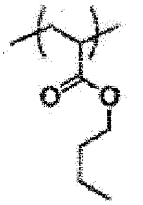 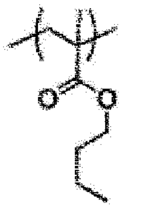 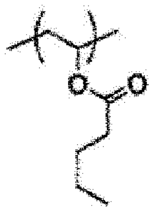 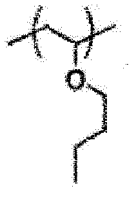

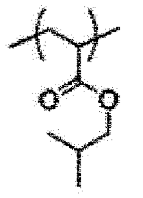 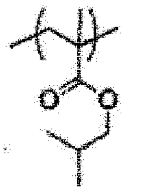 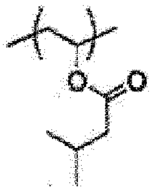 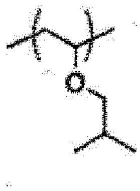

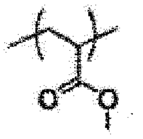 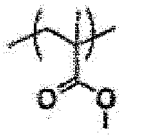 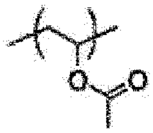 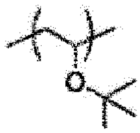

[Chem. 46]

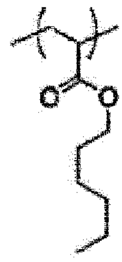 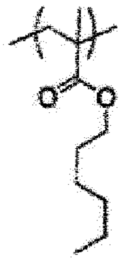 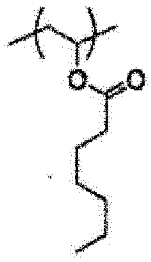 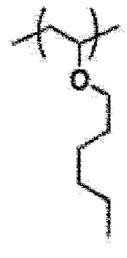

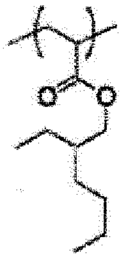 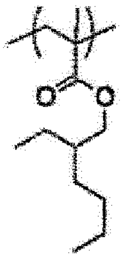 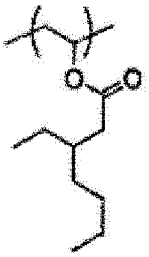 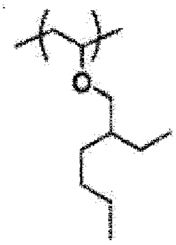

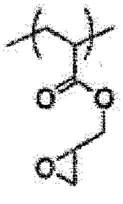 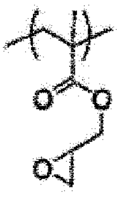 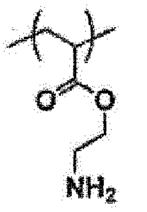 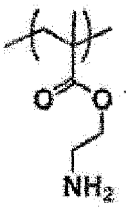

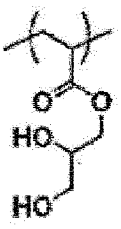 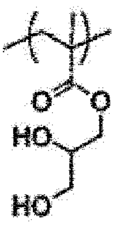 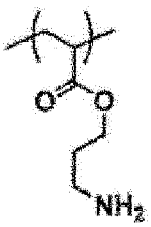 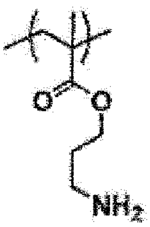

[Chem. 47]

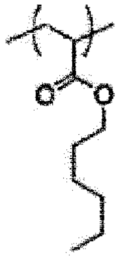 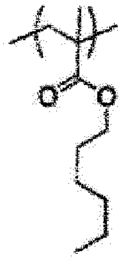 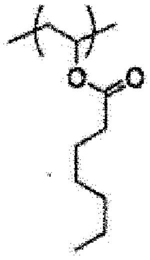 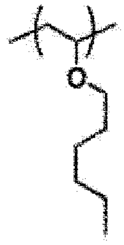

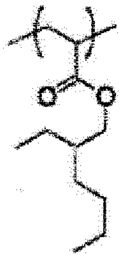 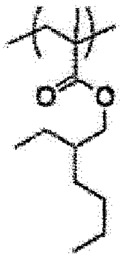 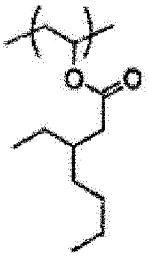 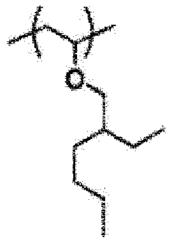

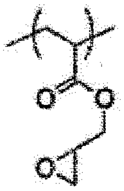 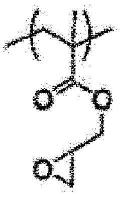 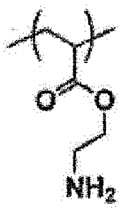 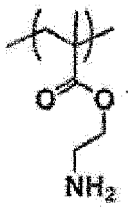

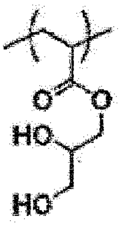 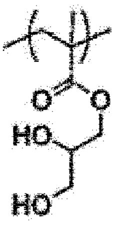 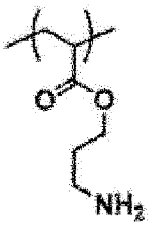 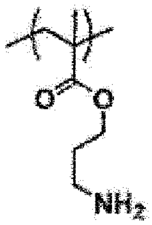

[Chem. 48]

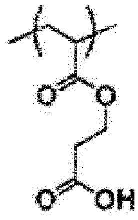
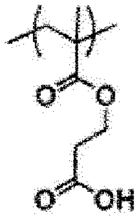
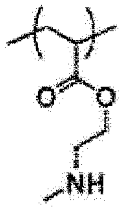
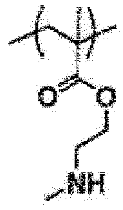
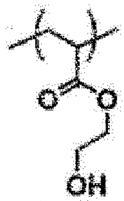
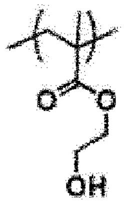
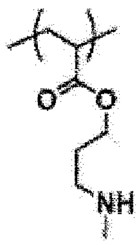
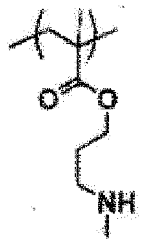
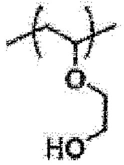
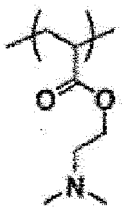
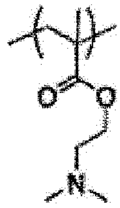
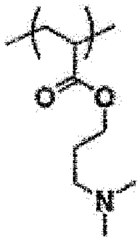
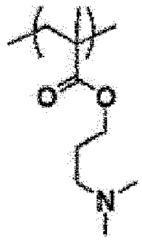

The structural unit D represented by formula (3) is more preferably a structural unit represented by any one of the following formulas.

[Chem. 49]

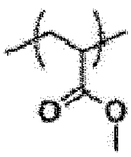
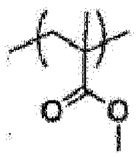
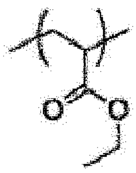
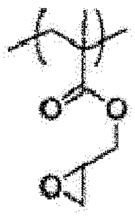
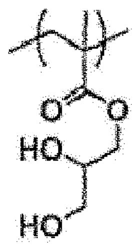

[Chem. 50]

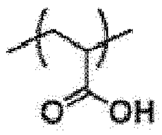
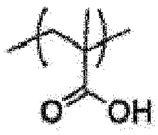

[Chem. 51]

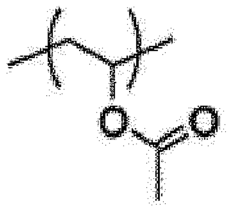

The structural unit D represented by formula (3) is still more preferably a structural unit represented by the following formula.

[Chem. 52]

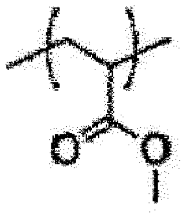

The structural unit D represented by formula (3) is derived from, for example, acrylic acid, methacrylic acid, vinyl alcohol, methyl acrylate, ethyl acrylate, n-propyl acrylate, isopropyl acrylate, n-butyl acrylate, isobutyl acrylate, sec-butyl acrylate, tert-butyl acrylate, methyl methacrylate, ethyl methacrylate, n-propyl methacrylate, isopropyl methacrylate, n-butyl methacrylate, isobutyl methacrylate, sec-butyl methacrylate, tert-butyl methacrylate, vinyl formate, vinyl acetate, vinyl propionate, vinyl (n-butyrate), vinyl (isobutyrate), methyl vinyl ether, ethyl vinyl ether, n-propyl vinyl ether, isopropyl vinyl ether, n-butyl vinyl ether, isobutyl vinyl ether, sec-butyl vinyl ether, tert-butyl vinyl ether, glycidyl acrylate, glycidyl methacrylate, 2,3-dihydroxypropyl acrylate, 2,3-dihydroxypropyl methacrylate, 3-(dimethylamino)propyl acrylate, or 3-(dimethylamino)propyl methacrylate. Preferably, the structural unit D represented by formula (3) is derived from acrylic acid, methacrylic acid, vinyl alcohol, methyl acrylate, ethyl acrylate, isopropyl acrylate, methyl methacrylate, ethyl methacrylate, isopropyl methacrylate, vinyl formate, vinyl acetate, glycidyl acrylate, glycidyl methacrylate, 2,3-dihydroxypropyl acrylate, 2,3-dihydroxypropyl methacrylate, 3-(dimethylamino)propyl acrylate, or 3-(dimethylamino)propyl methacrylate. More preferably, the structural unit D represented by formula (3) is derived from acrylic acid, methacrylic acid, methyl acrylate, ethyl acrylate, methyl methacrylate, vinyl acetate, glycidyl methacrylate, or 2,3-dihydroxypropyl methacrylate. Still more preferably, the structural unit D represented by formula (3) is derived from methyl acrylate.

Structural Unit Represented by Formula (4)

Preferred forms of the structural unit represented by formula (4) are described below.

The structural unit D represented by formula (4) may be derived from two structural units that may be selected in duplicate from the structural units B, the structural units C, and the structural units D represented by formula (3). The details will be described below.

The structural unit D represented by formula (4) may be derived from maleic anhydride.

The polymer 1 may contain two or more types of structural units D. For example, the polymer 1 may contain a structural unit derived from methyl acrylate, a structural unit derived from ethyl acrylate, and a structural unit derived from glycidyl methacrylate.

The polymer 1 is, for example, a polymer containing

the structural unit A,
the structural unit B represented by formula (1) where $R^1$ is a hydrogen atom or a methyl group, $L^{11}$ is -COO-, $L^{12}$ and $L^{13}$ are single bonds, and $L^{16}$ is $-(CH_2)_n-(R^{f2}O)_p-(R^{f3})_h-(Si(R^{f4})_2O)_g-Si(R^{f1})_3$,
the structural unit C represented by formula (2) where $R^2$ is a hydrogen atom or a methyl group, $L^{21}$ is -COO-, $L^{22}$ and $L^{23}$ are single bonds, and $L^{26}$ is $-(CH_2)_m-R^{r1}$, and
the structural unit D represented by formula (3) where $R^3$ is a hydrogen atom or a methyl group, $L^1$ is -COO-, $L^4$ is a C1

alkylene group, and $L^5$ is a hydrogen atom.

The polymer 1 may be a random polymer or a block polymer. The polymer 1 may be a mixture of a random polymer and a block polymer.

In one aspect, the total number of the structural units A, the structural units B, the structural units C, and the structural units D is 90 mol% or more relative to 100 mol% of the total number of all the structural units contained in the polymer 1.

In one aspect, the number of the structural units A in the polymer 1 is preferably from 70 to 99 mol%, more preferably from 75 to 99 mol%, still more preferably from 80 to 99 mol%, relative to 100 mol% of the total number of the structural units A, the structural units B, the structural units C, and the structural units D to improve the moldability of a molded body containing the polymer.

In one aspect, the total number of the structural units B, the structural units C, and the structural units D in the polymer 1 is preferably from 1 to 30 mol%, more preferably from 1 to 25 mol%, still more preferably from 1 to 20 mol%, relative to 100 mol% of the total number of the structural units A, the structural units B, the structural units C, and the structural units D to improve the hydrophilicity, oil repellency, and dyeability of a molded body containing the polymer.

In one aspect, the total number of the structural units B and the structural units C in the polymer 1 is preferably from 1 to 99 mol%, more preferably from 10 to 99 mol%, still more preferably from 20 to 99 mol%, yet still more preferably from 20 to 80 mol%, relative to 100 mol% of the total number of the structural units B, the structural units C, and the structural units D to improve the hydrophilicity of a molded body containing the polymer.

In one aspect, the number of the structural units D in the polymer 1 is preferably from 1 to 99 mol%, more preferably from 1 to 90 mol%, still more preferably from 1 to 80 mol%, yet still more preferably from 20 to 80 mol%, relative to 100 mol% of the total number of the structural units B, the structural units C, and the structural units D to improve the moldability of a molded body containing the polymer.

In one aspect, the number of the structural units B in the polymer 1 is preferably from 1 to 99 mol%, more preferably from 10 to 70 mol%, still more preferably from 10 to 60 mol%, yet still more preferably from 10 to 50 mol%, relative to 100 mol% of the total number of the structural units B and the structural units C to improve the balance between hydrophilicity and oil repellency.

In one aspect, the number of the structural units C in the polymer 1 is preferably from 1 to 99 mol%, more preferably from 30 to 90 mol%, still more preferably from 40 to 90 mol%, yet still more preferably from 50 to 90 mol%, relative to 100 mol% of the total number of the structural units B and the structural units C to improve the balance between hydrophilicity and oil repellency.

In one aspect, the numerical ratio (B:C) of the structural units B to the structural units C in the polymer 1 is preferably from 1:9 to 7:3, more preferably from 1:9 to 6:4, more preferably from 1:9 to 5:5, to improve the balance between hydrophilicity and oil repellency.

The number of the structural units A, the number of the structural units B, the number of the structural units C, and the number of the structural units D in the polymer 1 can be determined, for example, from the integral values of signals relating to the corresponding structural units in a $^{13}C$ nuclear magnetic resonance spectrum (hereinafter, $^{13}C$-NMR spectrum) or $^{1}H$ nuclear magnetic resonance spectrum (hereinafter, $^{1}H$-NMR spectrum).

When the polymer 1 is a polymer produced by a production method including a step of carrying out a reaction of a precursor polymer P described below with a compound β and a compound γ described below, the number of the structural units A, the number of the structural units B, the number of the structural units C, and the number of the structural units D can be determined, for example, by using the following method.

Numbers of Structural Units $A_1$ Derived from Ethylene and Structural Units $D_1$ Derived from Methyl Acrylate When Precursor Polymer P is Ethylene-Methyl Acrylate Copolymer (Unit: %)

In the $^{13}C$-NMR spectrum of the precursor polymer P (ethylene-methyl acrylate copolymer), the integral values ($A_1$, $B_1$, $C_1$, $D_1$, and $E_1$) in the ranges of $a_1$, $b_1$, $c_1$, $d_1$, and $e_1$ below are determined, and the number of the structural units $A_1$ derived from ethylene and the number of the structural units $D_1$ derived from methyl acrylate are calculated from the content (number) of three dyads (EE, EA, AA) determined from the following formulas. EE denotes ethylene-ethylene dyad, EA denotes ethylene-methyl acrylate dyad, and AA denotes methyl acrylate-methyl acrylate dyad.

$a_1$: 28.1-30.5 ppm
$b_1$: 31.9-32.6 ppm
$c_1$: 41.7 ppm
$d_1$: 43.1-44.2 ppm
$e_1$: 45.0-46.5 ppm

$$EE = A_1/4 + B_1/2$$

$$EA = E_1$$

$$AA = C_1 + D_1$$

The number of the structural units $A_1$ = 100 - the number of the structural units $D_1$

The number of structural units $D_1$ = 100 × (EA/2 + AA)/(EE + EA + AA)

Conversion Rates $X_B$ and $X_C$ of Structural unit $D_1$ Derived from Methyl Acrylate to Structural Unit $B_2$ Represented by Formula (1) and to Structural Unit $C_2$ Represented by Formula (2) (Unit: %)

In the $^1$H-NMR spectrum of the polymer 1 obtained by carrying out the reaction of ethylene-methyl acrylate copolymer with the compound β and the compound γ, the integral values ($F_1$, $G_1$, and $H_1$) in the ranges of $f_1$, $g_1$, and $h_1$ below are determined. Next, the conversion rates $X_B$ and $X_C$ of the structural unit $D_1$ derived from methyl acrylate in the ethylene-methyl acrylate copolymer to the structural unit $B_2$ represented by formula (1) and to the structural unit $C_2$ represented by formula (2) of the polymer 1 are determined from the following formulas.

$f_1$: 0.4-0.6 ppm
$g_1$: 2.1-2.4 ppm
$h_1$: 3.1-3.3 ppm

$$\text{Conversion rate } X_B = 100 \times (F_1/4)/(G_1/1)$$

$$\text{Conversion rate } X_C = 100 \times (H_1/3)/(G_1/1)$$

Numbers of Structural Units $A_2$ Derived from Ethylene, Structural Units $B_2$ Represented by Formula (1), Structural Units $C_2$ Represented by Formula (2), and Structural Units $D_2$ Derived from Methyl Acrylate in Polymer 1 (Unit: %)

The numbers of the structural units $A_2$ derived from ethylene, the structural units $B_2$ represented by formula (1), the structural units $C_2$ represented by formula (2), and the structural units $D_2$ derived from methyl acrylate in the polymer 1 are calculated from the following formulas.

The number of the structural units $A_2$ in the polymer 1 = the number of the structural units $A_1$ in the ethylene-methyl acrylate copolymer

The number of the structural units $B_2$ in the polymer 1 = (the number of the structural units $D_1$ in the ethylene-methyl acrylate copolymer) × the conversion rate $X_B$/100

The number of the structural units $C_2$ in the polymer 1 = (the number of the structural units $D_1$ in the ethylene-methyl acrylate copolymer) × the conversion rate $X_C$/100

The number of the structural units $D_2$ in the polymer 1 = (the number of the structural units $D_1$ in the ethylene-methyl acrylate copolymer) - (the number of the structural units $B_2$ in the polymer 1) - (the number of the structural units $C_2$ in the polymer 1)

The number of the structural units $A_2$, the number of the structural units $B_2$, the number of the structural units $C_2$, and the number of the structural units $D_2$ thus obtained respectively correspond to the number (unit: %) of the structural units A derived from ethylene, the number of the structural units B represented by formula (1) above, the number of the structural units C represented by formula (2) above, and the number of the structural units D represented by formula (3) above and formula (4) above in the polymer 1.

The contents (wt%) of the structural unit A, the structural unit B, the structural unit C, and the structural unit D in the polymer 1 according to the present invention can be calculated from the following formulas.

The weight percentage of the structural units A = (the number of the structural units A × the molecular weight of the structural unit A)/(the number of the structural units A × the molecular weight of the structural unit A + the number of the structural units B × the molecular weight of the structural unit B + the number of the structural units C × the molecular weight of the structural unit C + the number of the structural units D × the molecular weight of the structural unit D)

The weight percentage of the structural unit B = (the number of the structural units B × the molecular weight of the structural unit B)/(the number of the structural units A × the molecular weight of the structural unit A + the number of the structural units B × the molecular weight of the structural unit B + the number of the structural units C × the molecular weight of the structural unit C + the number of the structural units D × the molecular weight of the structural unit D)

The weight percentage of the structural unit C = (the number of the structural units C × the molecular weight of the structural unit C)/(the number of the structural units A × the molecular weight of the structural unit A + the number of the structural units B × the molecular weight of the structural unit B + the number of the structural units C × the molecular weight of the structural unit C + the number of the structural units D × the molecular weight of the structural unit D)

The weight percentage of the structural unit D = (the number of the structural units D × the molecular weight of the structural unit D)/(the number of the structural units A × the molecular weight of the structural unit A + the number of the structural units B × the molecular weight of --> the structural unit B + the number of the structural units C × the molecular weight of the structural unit C + the number of the structural units D × the molecular weight of the structural unit D)

Crosslinked Polymer

In one aspect, the polymer 1 is crosslinked. In other words, at least some of the molecules of the polymer are linked to each other by covalent bonds between the molecules.

Examples of methods for crosslinking the uncrosslinked polymer of the present invention include crosslinking by exposure to ionizing radiation, and crosslinking using an organic peroxide.

In the crosslinking of the uncrosslinked polymer of the present invention by exposure to ionizing radiation, the uncrosslinked polymer of the present invention that has been molded into a desired shape in advance is usually exposed to ionizing radiation. For molding, a known method is used, and extrusion molding, injection molding, or press molding are preferably used. The molded body to be exposed to ionizing radiation may be a molded body containing only the uncrosslinked polymer of the present invention or a molded body containing the uncrosslinked polymer of the present invention and a different polymer. Examples of the polymer different from the uncrosslinked polymer of the present invention include a base resin described below. When the molded body contains the uncrosslinked polymer of the present invention and the base resin described below, the content of the uncrosslinked polymer of the present invention is preferably from 1 to 99 wt% relative to 100 wt% of the total amount of the uncrosslinked polymer of the present invention and the base resin.

Examples of the ionizing radiation include α rays, β rays, γ rays, electron rays, neutron rays, and X-rays. The ionizing radiation is preferably γ rays of cobalt-60, or electron rays. When the molded body containing the polymer has a sheet shape, at least one surface of the sheet-shaped molded body is exposed to ionizing radiation.

The exposure to ionizing radiation is performed by using a known ionizing radiation emitter. The irradiation dose is typically from 5 to 300 kGy, preferably from 10 to 150 kGy. The polymer 1 can provide a polymer with a high degree of crosslinking at low irradiation dose.

When the crosslinked polymer 1 is obtained by exposure to ionizing radiation, the crosslinked polymer 1 with a higher degree of crosslinking can be obtained by adding a crosslinking agent to a molded body to be exposed to ionizing radiation. The crosslinking agent is used to increase the degree of crosslinking of the polymer 1 to improve the mechanical properties of the polymer 1. The crosslinking agent is preferably a compound having multiple double bonds in the molecule. Examples of the crosslinking agent include N,N'-m-phenylenebismaleimide, toluylene bismaleimide, polyfunctional isocyanate, triallyl isocyanurate, triallyl cyanurate, p-quinone dioxime, nitrobenzene, diphenylguanidine, divinylbenzene, trivinylbenzene, buta-1,3-diene, diallyl phthalate, dihydrodicyclopentadienyl acrylate, diallyl maleate, ethylene glycol di(meth)acrylate, polyethylene glycol di(meth)acrylate, trimethylolpropane tri(meth)acrylate, trimethylolpropane triacrylate, and allyl (meth)acrylate. The crosslinking agents may be used singly or in combination of two or more.

The amount of the crosslinking agent added is preferably from 0.01 to 4.0 parts by weight, more preferably from

0.05 to 2.0 parts by weight, relative to 100 parts by weight of the total weight of the uncrosslinked polymer of the present invention and a different polymer in a molded body to be exposed to ionizing radiation.

A crosslinking method using an organic peroxide involves, for example, subjecting the composition containing the uncrosslinked polymer of the present invention and the organic peroxide to a known molding method involving heating to crosslink the uncrosslinked polymer of the present invention. Examples of the known molding method involving heating include extrusion molding, injection molding, and press molding. The composition containing the uncrosslinked polymer of the present invention and the organic peroxide may contain, as polymer component(s), only the polymer 1, or the polymer 1 and a polymer different from the polymer 1.

The composition containing the uncrosslinked polymer of the present invention and the organic peroxide may contain a polymer different from that polymer. Examples of the polymer include base resins described below. The content of the uncrosslinked polymer of the present invention is preferably from 1 to 99 wt% relative to 100 wt% of the total amount of the uncrosslinked polymer of the present invention and the base resin.

In the crosslinking of the uncrosslinked polymer of the present invention using an organic peroxide, the organic peroxide preferably has a decomposition temperature higher than or equal to the flow onset temperature of the polymer component in the composition containing the uncrosslinked polymer of the present invention and the organic peroxide. Preferred examples of the organic peroxide include dicumyl peroxide, 2,5-dimethyl-2,5-di-tert-butylperoxyhexane, 2,5-dimethyl-2,5-di-tert-butylperoxyhexyne, $\alpha$,$\alpha$-di-tert-butylperoxyisopropylbenzene, and tert-butylperoxy-2-ethylhexyl carbonate.

The crosslinked polymer 1 preferably has a gel fraction of 20 wt% or more, more preferably a gel fraction of 40 wt% or more, still more preferably a gel fraction of 60 wt% or more, most preferably a gel fraction of 70 wt% or more. The gel fraction indicates the degree of crosslinking of a crosslinked polymer. As the polymer has a higher gel fraction, the polymer has more crosslinks and a stronger network. When the polymer has a high gel fraction, the polymer strongly retains its shape and is less deformable.

The gel fraction is determined by using the method described below.

About 500 mg of the polymer and an empty mesh basket made from wire mesh (mesh size: 400 mesh) are weighed. The mesh basket containing the polymer and 50 mL of xylene (available from Kanto Chemical Co., Inc., Cica special grade or equivalent grade: a mixture of o-xylene, m-xylene, p-xylene, and ethylbenzene, where the total weight of o-xylene, m-xylene, and p-xylene is 85 wt% or more) are introduced into a 100 mL test tube and subjected to heat extraction at 110°C for 6 hours. After extraction, the mesh basket containing the extraction residue is removed from the test tube and vacuum-dried in a vacuum dryer at 80°C for 8 hours, and the mesh basket containing the extraction residue after drying is weighed. The gel weight is calculated from the difference in weight between the mesh basket containing the extraction residue after drying and the empty mesh basket. The gel fraction (wt%) is calculated by using the following formula.

$$\text{Gel fraction} = (\text{gel weight}/\text{measured sample weight}) \times 100$$

Production Method

The polymer 1 is obtained, for example, by producing a precursor polymer containing the structural unit A and the structural unit D and then carrying out the reaction of the structural unit D in the precursor polymer with the compound $\beta$ and the compound $\gamma$. The details will be described below.

Precursor Polymer

The precursor polymer is obtained, for example, by copolymerizing ethylene, used as the raw material for the structural unit A, and acrylic acid ester, used as the raw material for the structural unit D. The copolymerization may be either random copolymerization or block copolymerization, or a mixture of block polymerization and random polymerization. The precursor polymer may contain a structural unit different from the structural unit A to the structural unit D. The polymerization reaction may be carried out by a known method (or a combination of known methods). A commercially available polymer may be used as a precursor polymer as long as the polymer has the structural unit A and the structural unit D.

Examples of the precursor polymer include ethylene-acrylic acid copolymer, ethylene-methacrylic acid copolymer, ethylene-vinyl alcohol copolymer, ethylene-methyl acrylate (EMA) copolymer, ethylene-ethyl acrylate copolymer, ethylene-n-propyl acrylate copolymer, ethylene-n-butyl acrylate copolymer, ethylene-methyl methacrylate copolymer, ethylene-ethyl methacrylate copolymer, ethylene-n-propyl methacrylate copolymer, ethylene-n-butyl methacrylate copolymer, ethylene-vinyl formate copolymer, ethylene-vinyl acetate copolymer, ethylene-vinyl propionate copolymer, ethylene-vinyl (n-butylate) copolymer, ethylene-methyl vinyl ether copolymer, ethylene-ethyl vinyl ether copolymer, ethylene-n-propyl vinyl ether copolymer, ethylene-n-butyl vinyl ether copolymer, ethylene-maleic anhydride copolymer,

ethylene-glycidyl acrylate copolymer, ethylene-glycidyl methacrylate copolymer, ethylene-3-(dimethylamino)propyl acrylate copolymer, and ethylene-3-(dimethylamino)propyl methacrylate copolymer. Each of the copolymers described above where the structural unit A is derived from "propylene" instead of "ethylene" or where the structural unit A is derived from both ethylene and propylene may also be the precursor polymer P.

Compound β

The structural unit D in the precursor polymer may be converted into the structural unit B by reacting with the compound β. The compound β is preferably at least one compound selected from the group consisting of compounds represented by formula (β1), compounds represented by formula (β1), compounds represented by formula (β2), compounds represented by formula (β3), compounds represented by formula (β4), compounds represented by formula (β5), compounds represented by formula (β6), compounds represented by formula (β7), and compounds represented by formula (β8).

$HO\text{-}(CH_2)_n\text{-}(R^{f2}O)_p\text{-}(R^{f3})_n\text{-}(Si(R^{f4})_2O)_g\text{-}Si(R^{f1})_3$ Formula (β1)

$H_2N\text{-}(CH_2)_n\text{-}(R^{f2}O)_p\text{-}(R^{f3})_h\text{-}(Si(R^{f4})_2O)_g\text{-}Si(R^{f1})_3$ Formula (β2)

$X\text{-}(CH_2)_n\text{-}(R^{f2}O)_p\text{-}(R^{f3})_n\text{-}(Si(R^{f4})_2O)_g\text{-}Si(R^{f1})_3$ Formula (β3)

$HO\text{-}C(=O)\text{-}(CH_2)_n\text{-}(R^{f2}O)_p\text{-}(R^{f3})_n\text{-}(Si(R^{f4})_2O)_g\text{-}Si(R^{f1})_3$ Formula (β4)

$H_2N\text{-}C(=O)\text{-}(CH_2)_n\text{-}(R^{f2}O)_p\text{-}(R^{f3})_n\text{-}(Si(R^{f4})_2O)_g\text{-}Si(R^{f1})_3$ Formula (β5)

$X\text{-}C(=O)\text{-}(CH_2)_n\text{-}(R^{f2}O)_p\text{-}(R^{f3})_n\text{-}(Si(R^{f4})_2O)_g\text{-}Si(R^{f1})_3$ Formula (β6)

$H_2N\text{-}C(=O)\text{-}HN\text{-}(CH_2)_n\text{-}(R^{f2}O)_p\text{-}(R^{f3})_h\text{-}(Si(R^{f4})_2O)_g\text{-}Si(R^{f1})_3$ Formula (β7)

$OCN\text{-}(CH_2)_n\text{-}(R^{f2}O)p\text{-}(R^{f3})_h\text{-}(Si(R^{f4})_2O)_q\text{-}Si(R^{f1})_3$ Formula (β8)

In the formulas, $R^{f1}$, $R^{f2}$, $R^{f3}$, $R^{f4}$, p, g, h, and n are as defined in formula (1). X represents a halogen atom. When multiple compounds β are used, $R^{f1}$'s may be the same or different, and the same applies to $R^{f2}$'s, p's, and n's and X's. A commercially available compound may be used as the compound β.

Examples of the compounds represented by formula (β1) include α-methyl-ω-[3-(2-hydroxyethoxy)propyl]polydimethylsiloxane, α-ethyl-ω-[3-(2-hydroxyethoxy)propyl]polydimethylsiloxane, α-propyl-ω-[3-(2-hydroxyethoxy)propyl]polydimethylsiloxane, and α-butyl-ω-[3-(2-hydroxyethoxy)propyl]polydimethylsiloxane.

Examples of the compounds represented by formula (β2) include α-methyl-ω-[3-(2-aminoethoxy)propyl]polydimethylsiloxane, α-ethyl-ω-[3-(2-aminoethoxy)propyl]polydimethylsiloxane, α-propyl-ω-[3-(2-aminoethoxy)propyl]polydimethylsiloxane, and α-butyl-ω-[3-(2-aminoethoxy)propyl]polydimethylsiloxane.

Examples of the compounds represented by formula (β3) include α-methyl-ω-[3-(2-chloroethoxy)propyl]polydimethylsiloxane, α-ethyl-ω-[3-(2-chloroethoxy)propyl]polydimethylsiloxane, α-propyl-ω-[3-(2-chloroethoxy)propyl]polydimethylsiloxane, α-butyl-ω-[3-(2-chloroethoxy)propyl]polydimethylsiloxane, α-methyl-ω-[3-(2-bromoethoxy)propyl]polydimethylsiloxane, α-ethyl-ω-[3-(2-bromoethoxy)propyl]polydimethylsiloxane, α-propyl-ω-[3-(2-bromoethoxy)propyl]polydimethylsiloxane, α-butyl-ω-[3-(2-bromoethoxy)propyl]polydimethylsiloxane, α-methyl-ω-[3-(2-iodoethoxy)propyl]polydimethylsiloxane, α-ethyl-ω-[3-(2-iodoethoxy)propyl]polydimethylsiloxane, α-propyl-ω-[3-(2-iodoethoxy)propyl]polydimethylsiloxane, and α-butyl-ω-[3-(2-iodoethoxy)propyl]polydimethylsiloxane.

Examples of the compounds represented by formula (β4) include α-methyl-ω-[3-(2-carboxyethoxy)propyl]polydimethylsiloxane, α-ethyl-ω-[3-(2-carboxyethoxy)propyl]polydimethylsiloxane, α-propyl-ω-[3-(2-carboxyethoxy)propyl]polydimethylsiloxane, and α-butyl-w-[3-(2-carboxyethoxy)propyl]polydimethylsiloxane.

Examples of the compounds represented by formula (β5) include α-methyl-ω-[3-(2-carboxamidoethoxy)propyl]polydimethylsiloxane, α-ethyl-ω-[3-(2-carboxamidoethoxy)propyl]polydimethylsiloxane, α-propyl-ω-[3-(2-carboxamidoethoxy)propyl]polydimethylsiloxane, and α-butyl-w-[3-(2-carboxamidoethoxy)propyl]polydimethylsiloxane.

Examples of the compounds represented by formula (β6) include 3-(3-α-methyl-polydimethylsiloxanyl-propoxy)propanoyl chloride, 3-(3-α-ethyl-polydimethylsiloxanyl-propoxy)propanoyl

chloride, 3-(3-α-propyl-polydimethylsiloxanyl-propoxy)propanoyl chloride, 3-(3-α-butyl-polydimethylsiloxanyl-propoxy) propanoyl chloride, 3-(3-a-methyl-polydimethylsiloxanyl-propoxy)propanoyl bromide, 3-(3-α-ethyl-polydimethylsiloxanyl-propoxy)propanoyl bromide, 3-(3-α-propyl-polydimethylsiloxanyl-propoxy)propanoyl bromide, 3-(3-α-butyl-polydimethylsiloxanyl-propoxy)propanoyl bromide, 3-(3-α-methyl-polydimethylsiloxanyl-propoxy)propanoyl iodide, 3-(3-α-ethyl-polydimethylsiloxanyl-propoxy)propanoyl iodide, 3-(3-α-propyl-polydimethylsiloxanyl-propoxy)propanoyl iodide, and 3-(3-α-butyl-polydimethylsiloxanyl-propoxy)propanoyl iodide.

Examples of the compounds represented by formula (β7) include
1-(2-(3-α-methyl-polydimethylsiloxanyl-propoxy)ethyl)urea, 1-(2-(3-α-ethyl-polydimethylsiloxanyl-propoxy)ethyl)urea, 1-(2-(3-α-propyl-polydimethylsiloxanyl-propoxy)ethyl)urea, and 1-(2-(3-α-butyl-polydimethylsiloxanyl-propoxy)ethyl) urea.

Examples of the compounds represented by formula (β8) include
α-methyl-ω-[3-(2-isocyanatoethoxy)propyl]polydimethylsiloxane, α-ethyl-ω-[3-(2-isocyanatoethoxy)propyl]polydimethylsiloxane, α-propyl-ω-[3-(2-isocyanatoethoxy)propyl]polydimethylsiloxane, and α-butyl-ω-[3-(2-isocyanatoethoxy)propyl]polydimethylsiloxane.

Examples of the method for carrying out the reaction of the structural unit D in the precursor polymer with the compound β include:

a method involving the reaction between the structural unit D in the precursor polymer and a compound represented by formula (β1) above, formula (β2) above, or formula (β4) above when the structural unit D has an ester group as a functional group;
a method involving the reaction between the structural unit D in the precursor polymer and a compound represented by formula (β1) above, formula (β2) above, formula (β3) above, formula (β5) above, formula (β6) above, formula (β7) above, or formula (β8) above when the structural unit D has a carboxy group as a functional group;
a method involving the reaction between the structural unit D in the precursor polymer and a compound represented by formula (β3) above, formula (β4) above, formula (β6) above, or formula (β8) above when the structural unit D has a hydroxyl group as a functional group;
a method involving the reaction between the structural unit D in the precursor polymer and a compound represented by formula (β3) above, formula (β4) above, formula (β5) above, formula (β6) above, formula (β7) above, or formula (β8) above when the structural unit D has an amino group as a functional group; and
a method involving the reaction between the structural unit D in the precursor polymer and a compound represented by formula (β1) above, formula (β2) above, formula (β4) above, formula (β5) above, or formula (β7) above when the structural unit D has an epoxy group as a functional group.

The method for carrying out the reaction of the structural unit D in the precursor polymer with the compound β is more preferably a method involving the reaction between the structural unit D in the precursor polymer and a compound represented by formula (β1) above, formula (β2) above, or formula (β4) above when the structural unit D has an ester group as a functional group.

The method for carrying out the reaction of the structural unit D in the precursor polymer with the compound β is still more preferably a method involving the reaction between the structural unit D in the precursor polymer and the compound represented by formula (β1) above when the structural unit D has an ester group as a functional group.

When the structural unit B is obtained through the ester exchange reaction of the structural unit D with the compound β, a known method (or a combination of known methods) may be used. A compatibilizer may be added in this reaction. Examples of the compatibilizer include polyols, such as diethylene glycol dibutyl ether (DEG-DBE), which is a neutral compatibilizer, and tetraalkylammonium salts, such as hexadecyltrimethylammonium chloride (HTAC), which is a cationic compatibilizer.

In the reaction of the structural unit D with the compound β, a catalyst may be added to accelerate the reaction. Examples of the catalyst include alkali metal salts and Group 4 metal complexes. Examples of the alkali metal salts include alkali metal hydroxides, such as lithium hydroxide, sodium hydroxide, and potassium hydroxide; and alkali metal alkoxides, such as lithium methoxide and sodium methoxide. Examples of the Group 4 metal complexes include tetra(isopropyl) orthotitanate, tetra(n-butyl) orthotitanate, and tetraoctadecyl orthotitanate. The amount of the catalyst added is preferably from 0.01 to 50 parts by weight, more preferably from 0.01 to 5 parts by weight, relative to 100 parts by weight of the total amount of the precursor polymer P and the compound β used in the reaction.

In one aspect of the present invention, the raw material monomer for the structural unit B may be polymerized with ethylene without going through the structural unit D. For example, the raw material monomer of the structural unit B and ethylene are polymerized using an organic peroxide, such as tert-butyl peroxypivalate, or an azo compound, such as azobisisobutyronitrile, as a polymerization initiator.

Examples of the raw material monomer for the structural unit B include the following:

2-(3-α-butyl-polydimethylsiloxanyl-propoxy)ethyl acrylate,
2-(3-α-propyl-polydimethylsiloxanyl-propoxy)ethyl acrylate,
2-(3-α-ethyl-polydimethylsiloxanyl-propoxy)ethyl acrylate,
2-(3-α-methyl-polydimethylsiloxanyl-propoxy)ethyl acrylate,
3-α-butyl-polydimethylsiloxanyl-propoxymethyl acrylate,
3-α-propyl-polydimethylsiloxanyl-propoxymethyl acrylate,
3-α-ethyl-polydimethylsiloxanyl-propoxymethyl acrylate,
3-α-methyl-polydimethylsiloxanyl-propoxymethyl acrylate,
3-α-butyl-polydimethylsiloxanyl-propyl acrylate,
3-α-propyl-polydimethylsiloxanyl-propyl acrylate,
3-α-ethyl-polydimethylsiloxanyl-propyl acrylate,
3-α-methyl-polydimethylsiloxanyl-propyl acrylate,
2-α-butyl-polydimethylsiloxanyl-ethyl acrylate,
2-α-propyl-polydimethylsiloxanyl-ethyl acrylate,
2-α-ethyl-polydimethylsiloxanyl-ethyl acrylate,
2-α-methyl-polydimethylsiloxanyl-ethyl acrylate,
2-(2-α-butyl-polydimethylsiloxanyl-ethoxy)ethyl acrylate,
2-(2-α-propyl-polydimethylsiloxanyl-ethoxy)ethyl acrylate,
2-(2-α-ethyl-polydimethylsiloxanyl-ethoxy)ethyl acrylate,
2-(2-α-methyl-polydimethylsiloxanyl-ethoxy)ethyl acrylate,
2-(4-α-butyl-polydimethylsiloxanyl-butoxy)ethyl acrylate,
2-(4-α-propyl-polydimethylsiloxanyl-butoxy)ethyl acrylate,
2-(4-α-ethyl-polydimethylsiloxanyl-butoxy)ethyl acrylate,
2-(4-α-methyl-polydimethylsiloxanyl-butoxy)ethyl acrylate,
4-(3-α-butyl-polydimethylsiloxanyl-propoxy)butyl acrylate,
4-(3-α-propyl-polydimethylsiloxanyl-propoxy)butyl acrylate,
4-(3-α-ethyl-polydimethylsiloxanyl-propoxy)butyl acrylate,
4-(3-α-methyl-polydimethylsiloxanyl-propoxy)butyl acrylate,
2-(3-α-butyl-polydimethylsiloxanyl-propoxy)ethyl methacrylate,
2-(3-α-propyl-polydimethylsiloxanyl-propoxy)ethyl methacrylate,
2-(3-α-ethyl-polydimethylsiloxanyl-propoxy)ethyl methacrylate,
2-(3-α-methyl-polydimethylsiloxanyl-propoxy)ethyl methacrylate,
2-(4-α-butyl-polydimethylsiloxanyl-butoxy)ethyl methacrylate,
2-(4-α-propyl-polydimethylsiloxanyl-butoxy)ethyl methacrylate,
2-(4-α-ethyl-polydimethylsiloxanyl-butoxy)ethyl methacrylate,
2-(4-α-methyl-polydimethylsiloxanyl-butoxy)ethyl methacrylate,
3-α-butyl-polydimethylsiloxanyl-propyl methacrylate,
3-α-propyl-polydimethylsiloxanyl-propyl methacrylate,
3-α-ethyl-polydimethylsiloxanyl-propyl methacrylate,
3-α-methyl-polydimethylsiloxanyl-propyl methacrylate,
2-α-butyl-polydimethylsiloxanyl-ethyl methacrylate,
2-α-propyl-polydimethylsiloxanyl-ethyl methacrylate,
2-α-ethyl-polydimethylsiloxanyl-ethyl methacrylate,
2-α-methyl-polydimethylsiloxanyl-ethyl methacrylate,
3-(2-(3-α-butyl-polydimethylsiloxanyl-propoxy)ethoxy)-2-hydroxypropyl acrylate,
3-(2-(3-α-propyl-polydimethylsiloxanyl-propoxy)ethoxy)-2-hydroxypropyl acrylate,
3-(2-(3-α-ethyl-polydimethylsiloxanyl-propoxy)ethoxy)-2-hydroxypropyl acrylate,
3-(2-(3-α-methyl-polydimethylsiloxanyl-propoxy)ethoxy)-2-hydroxypropyl acrylate,
3-(2-(3-α-butyl-polydimethylsiloxanyl-propoxy)ethoxy)-2-hydroxypropyl methacrylate,
3-(2-(3-α-propyl-polydimethylsiloxanyl-propoxy)ethoxy)-2-hydroxypropyl methacrylate,
3-(2-(3-α-ethyl-polydimethylsiloxanyl-propoxy)ethoxy)-2-hydroxypropyl methacrylate,
3-(2-(3-α-methyl-polydimethylsiloxanyl-propoxy)ethoxy)-2-hydroxypropyl methacrylate,
3-α-butyl-polydimethylsiloxanyl-1-propene,
3-α-propyl-polydimethylsiloxanyl-1-propene,
3-α-ethyl-polydimethylsiloxanyl-1-propene,
3-α-methyl-polydimethylsiloxanyl-1-propene,
4-α-butyl-polydimethylsiloxanyl-1-butene,
4-α-propyl-polydimethylsiloxanyl-1-butene,

4-α-ethyl-polydimethylsiloxanyl-1-butene,
4-α-methyl-polydimethylsiloxanyl-1-butene,
2-α-butyl-polydimethylsiloxanyl-ethene,
2-α-propyl-polydimethylsiloxanyl-ethene,
2-α-ethyl-polydimethylsiloxanyl-ethene,
2-α-methyl-polydimethylsiloxanyl-ethene,
2-(3-α-butyl-polydimethylsiloxanyl-propoxy)ethene,
2-(3-α-propyl-polydimethylsiloxanyl-propoxy)ethene,
2-(3-α-ethyl-polydimethylsiloxanyl-propoxy)ethene,
2-(3-α-methyl-polydimethylsiloxanyl-propoxy)ethene,
2-(3-α-butyl-polydimethylsiloxanyl-propoxy)-1-propene,
2-(3-α-propyl-polydimethylsiloxanyl-propoxy)-1-propene,
2-(3-α-ethyl-polydimethylsiloxanyl-propoxy)-1-propene, and
2-(3-α-methyl-polydimethylsiloxanyl-propoxy)-1-propene.

Compound γ

In one aspect of the present invention, the structural unit D in the precursor polymer may be converted into the structural unit C by reacting with the compound γ. The compound γ is at least one compound selected from the group consisting of compounds represented by formula (γ1), compounds represented by formula (γ2), compounds represented by formula (γ3), compounds represented by formula (γ4), compounds represented by formula (γ5), compounds represented by formula (γ6), compounds represented by formula (γ7), and compounds represented by formula (γ8).

$HO-(CH_2)_m-(OR^{r2})_q-R^{r1}$ Formula (γ1)

$H_2N-(CH_2)_m-(OR^{r2})_q-R^{r1}$ Formula (γ2)

$X-(CH_2)_m-(OR^{r2})_q-R^{r1}$ Formula (γ3)

$HO-C(=O)-(CH_2)_m-(OR^{r2})_q-R^{r1}$ Formula (γ4)

$H_2N-C(=O)-(CH_2)_m-(OR^{r2})_q-R^{r1}$ Formula (γ5)

$X-C(=O)-(CH_2)_m-(OR^{r2})_q-R^{r1}$ Formula (γ6)

$H_2N-C(=O)-HN-(CH_2)_m-(OR^{r2})_q-R^{r1}$ Formula (γ7)

$OCN-(CH_2)_m-(OR^{r2})_q-R^{r1}$ Formula (γ8)

In the formulas, $R^{r1}$, $R^{r2}$, q, and m are as defined in formula (1). X represents a halogen atom. When multiple compounds γ are used, $R^{r1}$'s may be the same or different, and the same applied to $R^{r2}$'s, q's, and m's, and X's. A commercially available compound may be used as the compound γ.

Examples of the compounds represented by formula (γ1) include α-methyl-ω-hydroxypoly(oxyethylene), α-methyl-ω-hydroxypoly(oxypropylene), α-hydro-ω-hydroxypoly(oxyethylene), and α-hydro-ω-hydroxypoly(oxypropylene).

Examples of the compounds represented by formula (γ2) include α-methyl-ω-aminopoly(oxyethylene), α-methyl-ω-aminopoly(oxypropylene), α-hydro-ω-aminopoly(oxyethylene), and α-hydro-ω-aminopoly(oxypropylene).

Examples of the compounds represented by formula (γ3) include α-methyl-ω-chloropoly(oxyethylene), α-methyl-ω-chloropoly(oxypropylene), α-hydro-ω-chloropoly(oxyethylene), α-hydro-ω-chloropoly(oxypropylene), α-methyl-ω-bromidepoly(oxyethylene), α-methyl-ω-bromidepoly(oxypropylene), α-hydro-ω-bromidepoly(oxyethylene), α-hydro-ω-bromidepoly(oxypropylene), α-methyl-ω-iodidepoly(oxyethylene), α-methyl-ω-iodidepoly(oxypropylene), α-hydro-ω-iodidepoly(oxyethylene), and α-hydro-ω-iodidepoly(oxypropylene).

Examples of the compounds represented by formula (γ4) include α-methyl-ω-carboxypoly(oxyethylene), α-methyl-ω-carboxypoly(oxypropylene), α-hydro-ω-carboxypoly(oxyethylene), and α-hydro-ω-carboxypoly(oxypropylene).

Examples of the compounds represented by formula (γ5) include α-methyl-ω-carboxamide poly(oxyethylene), α-methyl-ω-carboxamide poly(oxypropylene), α-hydro-ω-carboxamide

poly(oxyethylene), and α-hydro-ω-carboxamide poly(oxypropylene).

Examples of the compounds represented by formula (γ6) include 3-(w-methoxypoly(oxyethylene))propanoyl chloride, 3-(ω-methoxypoly(oxypropylene))propanoyl chloride, 3-(ω-hydroxypoly(oxyethylene))propanoyl chloride, 3-(ω-hydroxypoly(oxypropylene))propanoyl chloride, 3-(ω-methoxypoly(oxyethylene))propanoyl bromide, 3-(ω-methoxypoly(oxypropylene))propanoyl bromide, 3-(ω-hydroxypoly(oxyethylene))propanoyl bromide, 3-(ω-hydroxypoly(oxypropylene))propanoyl bromide, 3-(ω-methoxypoly(oxyethylene))propanoyl iodide, 3-(ω-methoxypoly(oxypropylene))propanoyl iodide, 3-(ω-hydroxypoly(oxyethylene))propanoyl iodide, and 3-(ω-hydroxypoly(oxypropylene))propanoyl iodide.

Examples of the compounds represented by formula (γ7) include 1-(2-(ω-methoxypoly(oxyethylene))ethyl)urea, 1-(2-(w-methoxypoly(oxypropylene))ethyl)urea, 1-(2-(ω-hydroxypoly(oxyethylene))ethyl)urea, and 1-(2-(ω-hydroxypoly(oxypropylene))ethyl)urea.

Examples of the compounds represented by formula (γ8) include α-methyl-ω-(2-isocyanatoethoxy)-poly(oxyethylene), α-methyl-ω-(2-isocyanatoethoxy)-poly(oxypropylene), α-hydro-ω-(2-isocyanatoethoxy)-poly(oxyethylene), and α-hydro-e-(2-isocyanatoethoxy)-poly(oxypropylene).

Examples of the method for carrying out the reaction of the structural unit D in the precursor polymer with the compound γ include:

a method involving the reaction between the structural unit D in the precursor polymer and a compound represented by formula (γ1) above, formula (γ2) above, or formula (γ4) above when the structural unit D has an ester group as a functional group;
a method involving the reaction between the structural unit D in the precursor polymer and a compound represented by formula (γ1) above, formula (γ2) above, formula (γ3) above, formula (γ5) above, formula (γ6) above, formula (γ7) above, or formula (γ8) above when the structural unit D has a carboxy group as a functional group;
a method involving the reaction between the structural unit D in the precursor polymer and a compound represented by formula (γ3) above, formula (γ4) above, formula (γ6) above, or formula (γ8) above when the structural unit D has a hydroxyl group as a functional group;
a method involving the reaction between the structural unit D in the precursor polymer and a compound represented by formula (γ3) above, formula (γ4) above, formula (γ5) above, formula (γ6) above, formula (γ7) above, or formula (γ8) above when the structural unit D has an amino group as a functional group; and
a method involving the reaction between the structural unit D in the precursor polymer and a compound represented by formula (γ1) above, formula (γ2) above, formula (γ4) above, formula (γ5) above, or formula (γ7) above when the structural unit D has an epoxy group as a functional group.

The method for carrying out the reaction of the structural unit D in the precursor polymer with the compound γ is more preferably a method involving the reaction between the structural unit D in the precursor polymer and a compound represented by formula (γ1) above, formula (γ2) above, or formula (γ4) above when the structural unit D has an ester group as a functional group.

The method for carrying out the reaction of the structural unit D in the precursor polymer with the compound γ is still more preferably a method involving the reaction between the structural unit D in the precursor polymer and the compound represented by formula (γ1) above when the structural unit D has an ester group as a functional group.

When the structural unit C is obtained through the ester exchange reaction of the structural unit D with the compound γ, a known method (or a combination of known methods) may be used. A compatibilizer may be added in this reaction. Examples of the compatibilizer include polyols, such as diethylene glycol dibutyl ether (DEG-DBE), which is a neutral compatibilizer, and tetraalkylammonium salts, such as hexadecyltrimethylammonium chloride (HTAC), which is a cationic compatibilizer.

In the reaction of the structural unit D with the compound γ, a catalyst may be added to accelerate the reaction. Examples of the catalyst include alkali metal salts and Group 4 metal complexes. Examples of the alkali metal salts include alkali metal hydroxides, such as lithium hydroxide, sodium hydroxide, and potassium hydroxide; and alkali metal alkoxides, such as lithium methoxide and sodium methoxide. Examples of the Group 4 metal complexes include tetra(isopropyl) orthotitanate, tetra(n-butyl) orthotitanate, and tetraoctadecyl orthotitanate. The amount of the catalyst added is preferably from 0.01 to 50 parts by weight, more preferably from 0.01 to 5 parts by weight, relative to 100 parts by weight of the total amount of the precursor polymer P and the compound γ used in the reaction.

In one aspect of the present invention, the raw material monomer for the structural unit C may be polymerized with ethylene without going through the structural unit D. For example, the raw material monomer of the structural unit C and ethylene are polymerized using an organic peroxide, such as tert-butyl peroxypivalate, or an azo compound, such as azobisisobutyronitrile, as a polymerization initiator.

Examples of the raw material monomer for the structural unit C include the following:

methoxypolyethylene glycol acrylate (α-methyl-ω-acryloyloxy-poly(oxyethylene)),
methoxy polyethylene glycol methacrylate (α-methyl-ω-methacryloyloxy-poly(oxyethylene)),
methoxy polypropylene glycol acrylate (α-methyl-ω-acryloyloxy-poly(oxypropylene)),
methoxy polypropylene glycol methacrylate (α-methyl-ω-methacryloyloxy-poly(oxypropylene)),
ethoxy polyethylene glycol acrylate (α-ethyl-ω-acryloyloxy-poly(oxyethylene)),
ethoxy polyethylene glycol methacrylate (α-ethyl-ω-methacryloyloxy-poly(oxyethylene)),
ethoxy polypropylene glycol acrylate (α-ethyl-ω-acryloyloxy-poly(oxypropylene)),
ethoxy polypropylene glycol methacrylate (α-ethyl-ω-methacryloyloxy-poly(oxypropylene)),
polyethylene glycol acrylate (α-hydro-ω-acryloyloxy-poly(oxyethylene)),
polyethylene glycol methacrylate (α-hydro-ω-methacryloyloxy-poly(oxyethylene)),
polypropylene glycol acrylate (α-hydro-ω-acryloyloxy-poly(oxypropylene)),
polypropylene glycol methacrylate (α-hydro-ω-methacryloyloxy-poly(oxypropylene)),
polyethylene glycol-polypropylene glycol copolymer acrylate,
polyethylene glycol-polypropylene glycol copolymer methacrylate
3-polyethylene glycol-2-hydroxypropyl acrylate (α-hydro-ω-(2-hydroxy-3-acryloyloxy-propyl)-poly(oxyethylene)),
3-polyethylene glycol-2-hydroxypropyl methacrylate (α-hydro-ω-(2-hydroxy-3-methacryloyloxy-propyl)-poly(oxyethylene)),
3-methoxypolyethylene glycol-2-hydroxypropyl acrylate (α-methyl-ω-(2-hydroxy-3-acryloyloxy-propyl)-poly(oxyethylene)),
3-methoxypolyethylene glycol-2-hydroxypropyl methacrylate (α-methyl-ω-(2-hydroxy-3-methacryloyloxy-propyl)-poly(oxyethylene)),
3-polypropylene glycol-2-hydroxypropyl acrylate (α-hydro-ω-(2-hydroxy-3-acryloyloxy-propyl)-poly(oxypropylene)),
3-polypropylene glycol-2-hydroxypropyl methacrylate (α-hydro-ω-(2-hydroxy-3-methacryloyloxy-propyl)-poly(oxypropylene)),
3-methoxypolypropylene glycol-2-hydroxypropyl acrylate (α-methoxy-ω-(2-hydroxy-3-acryloyloxy-propyl)-poly(oxypropylene)), and
3-methoxypolypropylene glycol-2-hydroxypropyl methacrylate (α-methoxy-ω-(2-hydroxy-3-methacryloyloxy-propyl)-poly(oxypropylene)).

When the polymer 1 contains the structural unit D, and the structural unit D is represented by formula (3), the structural unit D may be the structural unit D that is unconverted in the reaction of the structural unit D in the precursor polymer with the compound β and the compound γ.

When the polymer 1 contains the structural unit D, and the structural unit D is represented by formula (4), the structural unit D may be derived from maleic anhydride. The structural unit D may be formed by a condensation reaction of two structural units that may be selected in duplicate from the structural units B, the structural units C, and the structural units D represented by formula (3).

The structural unit D in the precursor polymer may be converted into the structural unit B by reacting with the compound β, and the structural unit B may be then converted into the structural unit C by reacting with the compound γ. The structural unit D in the precursor polymer may be converted into the structural unit C by reacting with the compound γ, and the structural unit C may be then converted into the structural unit B by reacting with the compound β. The structural unit D in the precursor polymer may be converted into the structural unit B and the structural unit C by simultaneously reacting with the compound β and the compound γ. Preferably, the structural unit D in the precursor polymer is converted into the structural unit B and the structural unit C by simultaneously reacting with the compound β and the compound γ.

When the raw material monomers of the structural unit B and the structural unit C are polymerized with ethylene without going through the structural unit D, ethylene and the structural unit B may be polymerized with each other and then polymerized with the structural unit C, ethylene and the structural unit C may be polymerized with each other and then polymerized with the structural unit B, or ethylene, the structural unit B, and the structural unit C may be polymerized simultaneously. Preferably, ethylene, the structural unit B, and the structural unit C are polymerized simultaneously.

When the reactivity ratio of ethylene used as a raw material in the production of the precursor polymer is denoted by r1, and the reactivity ratio of the monomer that forms the structural unit D is denoted by r2, the product r1 × r2 of the reactivity ratios is preferably from 0.5 to 5.0, more preferably from 0.5 to 3.0, to improve the shape retention of the molded body containing the produced polymer 1.

The reactivity ratio r1 of ethylene is defined by r1 = k11/k12, where k11 is the reaction rate at which ethylene is bonded to a polymer having the structural unit A at its terminal, and k12 is the reaction rate at which the monomer that forms the structural unit D is bonded to the polymer having the structural unit A at its terminal, during copolymerization of ethylene and the monomer that forms the structural unit D. The reactivity ratio r1 is an indicator of whether the polymer having the structural unit A at its terminal more easily reacts with ethylene or the monomer that forms the structural unit D during copolymerization of ethylene and the monomer that forms the structural unit D.

As r1 increases, the polymer having the structural unit A at its terminal more easily reacts with ethylene, and thus a chain of the structural units A more easily forms.

The reactivity ratio r2 of the monomer that forms the structural unit D is defined by r2 = k22/k21, where k21 is the reaction rate at which ethylene is bonded to a polymer having the structural unit D at its terminal, and k22 is the reaction rate at which the monomer that forms the structural unit D is bonded to the polymer having the structural unit D at its terminal, during copolymerization of ethylene and the monomer that forms the structural unit D. The reactivity ratio r2 is an indicator of whether the polymer having the structural unit D at its terminal more easily reacts with ethylene or the monomer that forms the structural unit D during copolymerization of ethylene and the monomer that forms the structural unit D. As r2 increases, the polymer having the structural unit D at its terminal more easily reacts with the monomer that forms the structural unit D, and thus a chain of the structural units D more easily forms.

The product r1 × r2 of the reactivity ratios is calculated by using the method described in the document "Kakugo, M.; Naito, Y.; Mizunuma, K.; Miyatake, T. Macromolecules, 1982, 15, 1150". In the present invention, the product r1 × r2 of the reactivity ratios is obtained by substituting the fractions of dyads AA, AD, and DD of the structural unit A and the structural unit D, which are calculated from the $^{13}C$ nuclear magnetic resonance spectrum of the precursor polymer, into the following formula.

$$r1 \times r2 = AA[DD/(AD/2)^2]$$

The product r1 × r2 of the reactivity ratios is an indicator of the monomer chain distribution of the copolymer. The closer the product r1 × r2 of the reactivity ratios is to 1, the more random the monomer sequence distribution of the copolymer is. The closer the product r1 × r2 of the reactivity ratios is to 0, the higher the degree of alternating copolymerization in the monomer sequence distribution of the copolymer. The larger the product r1 × r2 of the reactivity ratios is above 1, the higher the degree of block copolymerization in the monomer sequence distribution of the copolymer.

The melt flow rate (MFR) of the precursor polymer measured at a temperature of 190°C and a load of 21 N in accordance with JIS K7210 is preferably from 0.1 to 500 g/10 min, more preferably from 1 to 300 g/10 min, still more preferably from 5 to 100 g/10 min.

Examples of the methods for producing the precursor polymer include coordination polymerization, cationic polymerization, anionic polymerization, and radical polymerization. Radical polymerization is preferred, and radical polymerization under high pressure is more preferred.

The temperature at which the precursor polymer reacts with the compound β and the compound γ is typically from 40°C to 250°C. The reaction may be carried out in the presence of a solvent. Examples of the solvent include hexane, heptane, octane, nonane, decane, toluene, and xylene. If by-products are generated in this reaction, the reaction may be carried out while removing the by-products under reduced pressure to accelerate the reaction, or the reaction may be carried out while azeotropically distilling the by-products together with the solvent, cooling the vaporized by-products and solvent, separating the distillate containing the by-products and the solvent into a by-product layer and a solvent layer, and returning only the recovered solvent layer to the reaction system as a reflux liquid.

The reaction of the precursor polymer P with the compound β and the compound γ may be carried out while melt-kneading the precursor polymer P together with the compound β and the compound γ. If by-products are generated during the reaction of the precursor polymer P with the compound β and the compound γ while melt-kneading them, the reaction may be carried out while removing the by-products under reduced pressure in order to accelerate the reaction. Examples of melt-kneading machines used for melt-kneading include single-screw extruders, twin-screw extruders, and Banbury mixers. The temperature for melt-kneading is preferably from 100°C to 250°C.

The polystyrene-equivalent weight-average molecular weight Mw of the polymer 1 measured by gel permeation chromatography (GPC) is preferably from 10,000 to 5,000,000, more preferably from 50,000 to 1,000,000, still more preferably from 100,000 to 500,000, to improve the long-lasting hydrophilicity and oil repellency.

In the measurement of the polystyrene-equivalent weight-average molecular weight Mw of the polymer (1) according to the present invention by gel permeation chromatography, the mobile phase is typically tetrahydrofuran, and the measurement temperature is typically 35°C.

The polymer 1 preferably contains the structural units A derived from ethylene to improve the moldability of the polymer **1.** To improve the blow moldability or foam moldability of the polymer 1, the structural units A derived from ethylene preferably form a branching structure in the polymer, and the branching structure is more preferably a long chain branching structure that is long enough to allow polymer chain entanglement.

With regard to the polymer 1, the ratio A defined by formula (I ) below is preferably 0.95 or less, more preferably 0.90 or less, still more preferably 0.80 or less.

$$A = \alpha_1/\alpha_0 \qquad (I)$$

In formula (I),

$\alpha_1$ is the value obtained by measuring the absolute molecular weight and intrinsic viscosity of the polymer by gel permeation chromatography using a device equipped with a light scattering detector and a viscosity detector, plotting the measured data with the logarithm of the absolute molecular weight on the horizontal axis and the logarithm of the intrinsic viscosity on the vertical axis, and performing a least-squares approximation of the logarithm of the absolute molecular weight and the logarithm of the intrinsic viscosity using formula (I-I) in the range of the logarithm of the weight-average molecular weight of the polymer or more and the logarithm of the z-average molecular weight or less on the horizontal axis to determine the slope $\alpha_1$ of the line represented by formula (I-I).

$$\log [\eta_1] = \alpha_1 \log M_1 + \log K_1 \quad \text{(I-I)}$$

In formula (I-I),
$[\eta_1]$ represents the intrinsic viscosity of the polymer (unit: dl/g),

$M_1$ represents the absolute molecular weight of the polymer, and
$K_1$ is a constant.
$\alpha_0$ the value obtained by
measuring the absolute molecular weight and intrinsic viscosity of polyethylene standard substance 1475a (available from the National Institute of Standards and Technology, USA) by gel permeation chromatography using a device equipped with a light scattering detector and a viscosity detector,
plotting the measured data with the logarithm of the absolute molecular weight on the horizontal axis and the logarithm of the intrinsic viscosity on the vertical axis, and performing a least-squares approximation of the logarithm of the absolute molecular weight and the logarithm of the intrinsic viscosity using formula (I-II) in the range of the logarithm of the weight-average molecular weight of the polyethylene standard substance 1475a or more and the logarithm of the z-average molecular weight or less on the horizontal axis to determine the slope $\alpha_0$ of the line represented by formula (I-II).

$$\log [\eta_0] = \alpha_0 \log M_0 + \log K_0 \quad \text{(I-II)}$$

In formula (I-II),
$[\eta_0]$ represents the intrinsic viscosity of the polyethylene standard substance 1475a (unit: dl/g),

$M_0$ represents the absolute molecular weight of the polyethylene standard substance 1475a, and
$K_0$ is a constant.

The polyethylene standard substance 1475a (available from the National Institute of Standards and Technology) is a high-density polyethylene that does not contain branches.
The formulas (I-I) and (I-II) are referred to as the Mark-Houwink-Sakurada equations, which express the correlation between the intrinsic viscosity and molecular weight of a polymer. The smaller $\alpha_1$ is, the larger the number of polymer chain entanglements due to the branching structure is. Since the polyethylene standard substance 1475a does not form a branching structure, there are no polymer chain entanglements due to the branching structure. The smaller the ratio A of $\alpha_1$ to $\alpha_0$ of the polyethylene standard substance 1475a is, the larger the amount of long chain branching structure formed by the structural units A in the polymer is.

Composition

The composition of the present invention (may also be referred to as "resin composition A") contains the polymer 1. The proportion of the polymer in the composition is not limited. In one aspect, the composition contains 0.01 to 99.9 wt% of the polymer, and to improve shape retention against moisture, preferably contains 0.1 to 50 wt% of the polymer, more preferably 0.1 to 20 wt% of the polymer, still more preferably 0.1 to 10 wt% of the polymer. The composition has hydrophilicity and oil repellency.
The resin composition A may further contain a base resin (may also be referred to as polymer 2). The base resin is at least one selected from the group consisting of thermosetting resins and thermoplastic resins.
The proportion of the polymer 1 in the resin composition A composed of a thermoplastic resin is not limited. In one aspect, the composition contains 0.1 to 99.9 wt% of the polymer, and to improve shape retention against moisture, preferably contains 0.5 to 50 wt% of the polymer, more preferably 1 to 20 wt% of the polymer, still more preferably 1 to 10

wt% of the polymer.

The thermoplastic resin may be any one of thermoplastic resins known in the related art. Examples of the thermoplastic resin include the following:

high-density polyethylene, medium-density polyethylene, low-density polyethylene, linear low-density polyethylene, high molecular weight polyethylene, ultra-high molecular weight polyethylene, isotactic polypropylene, syndiotactic polypropylene, hemiisotactic polypropylene, atactic polypropylene, stereoblock polypropylene, ethylene-propylene random copolymer, ethylene-propylene block copolymer, polyisobutylene, polybut-1-ene, poly-3-methyl-1-butene, poly-3-methyl-1-pentene, poly-4-methylpent-1-ene, polyvinylcyclohexane, polyisoprene, polybutadiene, cycloolefin polymer, olefin-based thermoplastic elastomer, polyvinyl chloride, polyvinylidene chloride, polychloroprene, vinyl chloride-based thermoplastic elastomer, polystyrene, acrylonitrile-butadiene-styrene, acrylonitrile-styrene, styrene-based thermoplastic elastomer, polyethylene terephthalate, polybutylene terephthalate, polyethylene naphthalate, polytrimethylene terephthalate, polyarylate, polycaprolactone, polylactic acid, polyhydroxyalkanoate, polyhydroxybutyrate, polyglycolic acid, polyethylene adipate, polycarbonate, polyamide, polyimide, silicone resin, polyvinyl acetal, polyacetal, polyvinyl alcohol, ethylene-vinyl alcohol resin, cellulose resin, acrylic polyol-based resin, polyester polyol-based resin, polyester-based thermoplastic elastomer, urethane resin, polyurethane-based thermoplastic elastomer, polytetrafluoroethylene, polyvinyl fluoride, polyvinylidene fluoride, fluororesin, polyvinyl acetate, ethylene-vinyl acetate, methyl (meth)acrylate polymer, ethyl (meth)acrylate polymer, octadecyl (meth)acrylate polymer, hexadecyl (meth)acrylate polymer, tetradecyl (meth) acrylate polymer, polymethyl methacrylate, polymethyl acrylate, acrylonitrile-acrylic rubber-styrene resin, acrylonitrile-ethylene rubber-styrene resin, (meth)acrylic acid ester-styrene resin, styrene-butadiene-styrene resin, styrene-butadiene copolymer, polyphenylene ether, modified polyphenylene ether, polyphenylene oxide, polyphenylene sulfide, polyamide imide, polysulfone, polyether sulfone, polyether ether ketone, polyether-polypropylene block copolymer, polyether ester amide, 1H,1H,2H,2H-tridecafluoro-1-octyl (meth)acrylate polymer, 1H,1H,2H,2H-heptafluoro-1-hexyl (meth)acrylate polymer, ethylene-methyl (meth)acrylate copolymer, ethylene-ethyl (meth)acrylate copolymer, ethylene-butyl (meth) acrylate copolymer, ethylene-octadecyl (meth)acrylate copolymer, ethylene-hexadecyl (meth)acrylate copolymer, ethylene-tetradecyl (meth)acrylate copolymer, and ethylene-octadecyl (meth)acrylate-methyl (meth)acrylate copolymer, and other ethylene-(meth)acrylic acid ester copolymers and ionomer resins thereof, and ethylene-(meth)acrylic acid resins and ionomer resins thereof.

Preferably, the thermoplastic resin may be any one of the thermoplastic resins known in the related art, such as high-density polyethylene, medium-density polyethylene, low-density polyethylene, linear low-density polyethylene, high molecular weight polyethylene, ultra-high molecular weight polyethylene, isotactic polypropylene, syndiotactic polypropylene, hemiisotactic polypropylene, atactic polypropylene, stereoblock polypropylene, propylene-ethylene random copolymer, propylene-ethylene block copolymer, polyvinyl chloride, polystyrene, acrylonitrile-butadiene-styrene, polyethylene terephthalate, polybutylene terephthalate, polyethylene naphthalate, polycaprolactone, polylactic acid, polyhydroxyalkanoate, polyhydroxybutyrate, polycarbonate, polyamide, polyvinyl acetal, polyacetal, polyvinyl alcohol, polyvinyl acetate, polyphenylene ether, modified polyphenylene ether, polyphenylene oxide, polyphenylene sulfide, polyamideimide, polyether ether ketone, ethylene-methyl (meth)acrylate copolymer, and ethylene-ethyl (meth)acrylate copolymer, more preferably high-density polyethylene, medium-density polyethylene, low-density polyethylene, linear low-density polyethylene, high molecular weight polyethylene, ultra-high molecular weight polyethylene, isotactic polypropylene, syndiotactic polypropylene, hemiisotactic polypropylene, atactic polypropylene, stereoblock polypropylene, propylene-ethylene random copolymer, propylene-ethylene block copolymer, polyvinyl chloride, polystyrene, acrylonitrile-butadiene-styrene, polymethyl methacrylate, ethylene-methyl (meth)acrylate copolymer, and ethylene-ethyl (meth) acrylate copolymer.

In one aspect, the composition A composed of the thermoplastic resin contains 0.1 to 99.9 wt% of the base resin, and to improve shape retention, preferably contains 50 to 99.5 wt% of the base resin, more preferably contains 80 to 99 wt% of the base resin, still more preferably contains 90 to 99 wt% of the base resin.

The resin composition A composed of the thermoplastic resin may contain two or more types of polymers 1 and may contain two or more types of polymers 2. The polymer 2 may be a homopolymer or a copolymer, and the copolymer may be composed of any two or more types of monomers.

The proportion of the polymer 1 in the resin composition A composed of a thermosetting resin is not limited. In one aspect, the composition contains 0.01 to 99.9 wt% of the polymer, and to improve shape retention against moisture, preferably contains 0.1 to 50 wt% of the polymer, more preferably 0.1 to 20 wt% of the polymer, still more preferably 0.1 to 10 wt% of the polymer.

The thermosetting resin may be any one of thermosetting resins known in the related art. Examples of the thermosetting resin include epoxy resin, phenolic resin, xylene resin, petroleum resin, urea resin, melamine resin, alkyd resin, furan resin, polyimide, unsaturated polyester resin, DAP resin, polyurethane, silicone resin, and thermosetting acrylic resin.

Preferably, the thermosetting resin may be any one of the thermosetting resins known in the related art, such as epoxy resin, phenolic resin, urea resin, melamine resin, alkyd resin, unsaturated polyester resin, DAP resin, polyurethane,

silicone resin, and thermosetting acrylic resin. More preferably, the thermosetting resin is unsaturated polyester resin or thermosetting acrylic resin.

In one aspect, the composition A composed of the thermosetting resin contains 0.1 to 99.99 wt% of the base resin, and to improve shape retention, preferably contains 50 to 99.9 wt% of the base resin, more preferably contains 80 to 99.9 wt% of the base resin, still more preferably contains 90 to 99.9 wt% of the base resin.

The resin composition A composed of the thermosetting resin may contain two or more types of polymers 1 and may contain two or more types of base resins (polymers 2).

The resin composition according to the present invention also includes the following "resin composition B" as one of the embodiments.

<Resin Composition B>

A resin composition (hereinafter may be referred to as "resin composition B") contains the polymer 1 and a polymer 2, which is a polymer (excluding the polymer 1) having a melting peak temperature or glass transition temperature of 50°C or higher and 180°C or lower as observed by differential scanning calorimetry,

wherein the content of the polymer 1 is 1 wt% or more and 99 wt% or less, and the content of the polymer 2 is 1 wt% or more and 99 wt% or less relative to 100 wt% of the total amount of the polymer 1 and the polymer 2,
preferably, the content of the polymer 1 is 1 wt% or more and 50 wt% or less, and the content of the polymer 2 is 50 wt% or more and 99 wt% or less,
more preferably, the content of the polymer 1 is 1 wt% or more and 30 wt% or less, and the content of the polymer 2 is 70 wt% or more and 99 wt% or less,
still more preferably, the content of the polymer 1 is 1 wt% or more and 10 wt% or less, and the content of the polymer 2 is 90 wt% or more and 99 wt% or less.

The resin composition B according to the present invention may contain two or more types of polymers 1 and may contain two or more types of polymers 2.

The melting peak temperature or glass transition temperature of the polymer 2 observed by differential scanning calorimetry (DSC) is in the range of 50°C or higher and 180°C or lower.

The melting peak temperature of the polymer 2 is the temperature at the maximum of the melting peak obtained by analyzing, in accordance with the method specified in JIS K7121-1987, the melting curve measured by differential scanning calorimetry described below, and is the temperature at which the heat absorption during melting is maximum.

The glass transition temperature of the polymer 2 is a midpoint glass transition temperature determined by analyzing, in accordance with the method specified in JIS K 7121-1987, the melting curve measured by differential scanning calorimetry described below.

[Differential Scanning Calorimetry Method]

In a nitrogen atmosphere using a differential scanning calorimeter, an aluminum pan containing about 5 mg of a sample is maintained at 200°C for 5 minutes in step (1), next cooled from 200°C to -80°C at a rate of 5 °C/min in step (2), next maintained at -80°C for 5 minutes in step (3), and next heated from -80°C to 200°C at a rate of 5 °C/min in step (4). The differential scanning calorimetry curve obtained by calorimetry in step (4) is defined as a melting curve.

Examples of the polymer 2 having a melting peak temperature in the range of 50°C or higher and 180°C or lower include high-density polyethylene (HDPE), highpressure low-density polyethylene (LDPE), ethylene-α-olefin copolymer, ethylene-vinyl acetate copolymer (EVA), and polypropylene (PP).

Examples of the polymer 2 having a glass transition temperature in the range of 50°C or higher and 180°C or lower include cyclic olefin polymer (COP), cyclic olefin copolymer (COC), polystyrene (PS), polyvinyl chloride (PVC), acrylonitrile-styrene copolymer (AS), acrylonitrile-butadiene-styrene copolymer (ABS), polymethyl methacrylate (PMMA), polyvinyl alcohol (PVA), polyethylene terephthalate (PET), polyacrylonitrile (PAN), polyamide 6 (PA6), polyamide 66 (PA66), polycarbonate (PC), polyphenylene sulfide (PPS), and polyether ether ketone (PEEK).

The ethylene-α-olefin copolymer used as the polymer 2 is a copolymer having a structural unit derived from ethylene and a structural unit derived from an α-olefin. Examples of the α-olefin include propylene, 1-butene, 1-pentene, 1-hexene, 1-heptene, 1-octene, 4-methyl-1-pentene, and 4-methyl-1-hexene. These α-olefins may be used singly or in combination of two or more. The α-olefin is preferably a $C_{4-8}$ α-olefin, more preferably 1-butene, 1-hexene, or 1-octene.

The density of high-density polyethylene, highpressure method low-density polyethylene, and ethylene-α-olefin copolymer, which are used as the polymer 2, is typically 860 $kg/m^3$ or more and 960 $kg/m^3$ or less.

Examples of polypropylene used as the polymer 2 include propylene homopolymer, propylene random copolymers described below, and a propylene polymer material described below. The content of the structural unit derived from

propylene in polypropylene is typically more than 50 wt% and 100 wt% or less (note that the total amount of the structural units in polypropylene is 100 wt%).

Polypropylene used as the polymer 2 preferably has a melting peak temperature of 100°C or higher.

Polypropylene used as the polymer 2 is preferably a propylene homopolymer.

Propylene Random Copolymer:

The polypropylene random copolymer is a random copolymer containing at least one structural unit selected from the group consisting of a structural unit derived from propylene, a structural unit derived from ethylene, and a structural unit derived from an α-olefin. Examples of the propylene random copolymer include propylene-ethylene random copolymers, propylene-ethylene-α-olefin random copolymers, and propylene-α-olefin random copolymers. The α-olefin is preferably a $C_{4-10}$ α-olefin. Examples of such α-olefins include linear α-olefins, such as 1-butene, 1-pentene, 1-hexene, 1-octene, and 1-decene; and branched α-olefins, such as 3-methyl-1-butene, and 3-methyl-1-pentene. The propylene random copolymer may contain one or two or more types of structural units derived from an α-olefin.

Examples of the method for producing the propylene homopolymer and the propylene random copolymer include slurry polymerization, solution polymerization, bulk polymerization, gas-phase polymerization, and other polymerization methods using Ziegler-Natta catalysts or complex catalysts, such as metallocene complexes and non-metallocene complexes.

The Propylene Polymer Material:

The propylene polymer material contains

a propylene homopolymer component (I) and
an ethylene copolymer component (II) containing a structural unit derived from ethylene and at least one structural unit selected from the group consisting of a structural unit derived from propylene and a structural unit derived from a C4+ α-olefin.

Examples of the C4+ α-olefin in the ethylene copolymer component (II) include 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 4-methyl-1-pentene, 2-ethyl-1-hexene, and 2,2,4-trimethyl-1-pentene. The C4+ α-olefin is preferably a $C_{4-20}$ α-olefin, more preferably a $C_{4-10}$ α-olefin, still more preferably 1-butene, 1-hexene, or 1-octene.

The ethylene copolymer component (II) may contain one or two or more types of structural units derived from a C4+ α-olefin.

Examples of the ethylene copolymer component (II) include propylene-ethylene copolymer, ethylene-1-butene copolymer, ethylene-1-hexene copolymer, ethylene-1-octene copolymer, propylene-ethylene-1-butene copolymer, propylene-ethylene-1-hexene copolymer, and propylene-ethylene-1-octene copolymer.

The ethylene copolymer component (II) may be a random copolymer or a block copolymer.

The propylene polymer material can be produced by multi-step polymerization using a polymerization catalyst. For example, the propylene polymer material can be produced by producing the propylene homopolymer component (I) in the upstream polymerization step and producing the ethylene copolymer component (II) in the downstream polymerization step.

Examples of the polymerization catalyst used in the production of the propylene polymer material include the catalysts used in the production of the propylene homopolymer and the propylene random copolymer.

Examples of the polymerization method in each polymerization step in the production of the propylene polymer material include bulk polymerization, solution polymerization, slurry polymerization, and gas-phase polymerization. Examples of inert hydrocarbon solvents used in solution polymerization and slurry polymerization include propane, butane, isobutane, pentane, hexane, heptane, and octane. These polymerization methods may be used in combination of two or more, and may be batch methods or continuous methods. The polymerization method for producing the propylene polymer material is preferably continuous gas-phase polymerization or bulk-gas phase polymerization in which bulk polymerization and gas-phase polymerization are performed continuously.

Quorum Sensing Inhibitor

The composition according to the present invention may contain a quorum sensing inhibitor. The quorum sensing inhibitor is a compound that inhibits quorum sensing of microorganisms.

The quorum sensing inhibitory effect can be measured by bioassay using, for example, bacteria that produce

pigments or exhibit bioluminescence in response to a quorum sensing-inducing substance (e.g., Sensors 2013, 13, 5117-5129). According to Sensors 2013, 13, 5117-5129, N-hexanoyl homoserine lactone, which induces quorum sensing, is added to a reporter strain, such as C. violaceum CV026, in the medium, and quorum sensing inhibitor caffeine is further added, followed by incubation of the bacteria. The amount of purple pigment (violacein) produced is less than the amount of purple pigment (violacein) produced without addition of caffeine, indicating that caffeine has a quorum sensing inhibitory effect, as described in the literature.

The quorum sensing inhibitor is preferably the following quorum sensing inhibitor:
In accordance with the method described in Sensors 2013, 13, 5117-5129, N-hexanoyl homoserine lactone is added to C. violaceum CV026 (reporter strain) in the medium, and a quorum sensing inhibitor is further added, followed by incubation of the bacteria. The amount of purple pigment (violacein) produced is 85% or less (note that the amount of purple pigment produced by incubating the bacteria without addition of a quorum sensing inhibitor is 100%).

Examples of the quorum sensing inhibitor include the following:

phenylpropanoids, such as eugenol, methyl eugenol, cinnamaldehyde, cinnamic acid, vanillin, isovanillin, ferulic acid, chlorogenic acid, caffeic acid, p-coumaric acid, cinnamaldehyde, methyl cinnamate, phenylpropionic acid, 2-methoxycinnamic acid, 3-methoxycinnamic acid, 4-methoxycinnamic acid, 3-bromocinnamic acid, 2-fluorocinnamic acid, 3-fluorocinnamic acid, 3-methylcinnamic acid, 4-acetoxycinnamic acid, 4-bromocinnamic acid, 4-ethoxycinnamic acid, 4-fluorocinnamic acid, 3,4-dimethoxycinnamic acid, 2,3-dimethoxycinnamic acid, 2,5-dimethoxycinnamic acid, 2,3,4-trimethoxycinnamic acid, 3,4,5-trimethoxycinnamic acid, and ligni;
benzoic acid analogues, such as salicylic acid, vanillic acid, gallic acid, and ellagic acid;
tannins, such as 1,2,3,4,6-pentagalloylglucose, punicalagin, hamamelitannin, and tannic acid;
stilbene analogues and polyketides, such as resveratrol and pterostilbene;
flavonoids, such as (-)-catechin, (-)-epicatechin, (-)-gallocatechin, (-)-epigallocatechin, (-)-catechin gallate, (-)-epicatechin gallate, (-)-gallocatechin gallate, (-)-epigallocatechin gallate, naringenin, flavone, apigenin, chrysin, acacetin, flavonol, kaempferol, quercetin, quercitrin, flavanone, isosakuranetin, pinostrobin, eriodictyol, cyanidin, and malvidin;
diarylheptanoids, such as curcumin;
terpenes and terpenoids, such as carvacrol, salvipisone, acanthospermolide, isolimonic acid, ichangin, betulinic acid, ursolic acid, gymnemic acid, protoanemonin, obacunone, deacetylnomilinic acid glucoside, and phytol;
sulfur-containing compounds, such as allicin, ajoene, sulforaphane, allyl isothiocyanate, iberin, thiazolidinedione, and diphenyl disulfide;
nitrogen-containing compounds, such as indole, and 2-methyltryptoline;
coumarin derivatives, such as umbelliferone and scopoletin;
furanocoumarins, such as psoralen, angelicin, bergamottin, and dihydroxybergamottin;
quinone derivatives, such as chrysophanol, emodin, shikonin, purpurin, and embelin;
alkaloids, such as berberine, berberine chloride hydrate, chelerythrine, sanguinarine, reserpine, caffeine, oroidin, piperine, and hordenine;
phenols or polyphenols, such as pyrogallol, malabaricone C, taxifolin, and rosmarinic acid;
surfactants with quorum sensing inhibitory activity, such as rhamnolipid, trehalolipid, sophorolipid, cellobiolipid viscosin, surfactin, and emulsan;
phenazines, such as pyocyanin;
ubiquinone analogues, such as piericidin A and glucopiericidin A;
eicosanoids, such as lipoxin A4;
polysaccharides, such as polygalacturonic acid and pectin;
macrolides, such as erythromycin;
carotenoids, such as zeaxanthin;
mycotoxins, such as penicillic acid, and patulin;
steroids, such as cholesteryl chloride;
boronic acids and boronic acid derivatives, such as 3-fluoro-4-methylphenylboronic acid, and 2-fluoro-4-trifluoromethylphenylboronic acid;
lactones, such as acylated cyclopentylamides and N-(3-oxododecanoyl)-L-homoserine lactone; and
butenolides, such as 3,4-dibromo-2(5H)-furanone.

The log S of a quorum sensing inhibitor is the ordinary logarithm of the amount (solubility) S (g/100 g) of the quorum sensing inhibitor dissolved relative to 100 g of water with a temperature of 25°C and a pH of 6 to 8. The smaller the log S value, the less soluble the quorum sensing inhibitor is in water.

The log S is preferably less than 0.1, more preferably 0.01 or less, still more preferably -0.1, particularly preferably -0.4 or less, to extend the persistence of the effect in reducing biofilm formation on the molded body of the present

invention. The log S of the quorum sensing inhibitors is typically -30 or more, preferably -12 or more.

The log S of quorum sensing inhibitors can be easily estimated from their chemical structures by using computer software, Hansen Solubility Parameter in Practice (HSPiP), even if the literature values or other data of the quorum sensing inhibitors are unknown.

The log S of the quorum sensing inhibitor in the composition according to the present invention is usually the value calculated by using HSPiP ver 5.0.04 or the literature value.

However, when the quorum sensing inhibitor in the composition according to the present invention is an ionic compound, a charge-transfer complex, an inorganic compound, a compound having more than 120 atoms other than hydrogen atoms, or a compound that forms multiple hydrogen bonds between its molecules, the log S of the quorum sensing inhibitor is the value calculated from solubility measurement, which measures the amount of solute dissolved in 100 g of water.

Examples of quorum sensing inhibitors with a log S of less than 0.1 include phenylpropanoids with a log S of less than 0.1, benzoic acid analogues with a log S of less than 0.1, tannins with a log S of less than 0.1, stilbene analogues and polyketides with a log S of less than 0.1, flavonoids with a log S of less than 0.1, diarylheptanoids with a log S of less than 0.1, terpenes and terpenoids with a log S of less than 0.1, sulfur-containing compounds with a log S of less than 0.1, nitrogen-containing compounds with a log S of less than 0.1, coumarin derivatives with a log S of less than 0.1, furanocoumarins with a log S of less than 0.1, quinone derivatives with a log S of less than 0.1, alkaloids with a log S of less than 0.1, phenols and polyphenols with a log S of less than 0.1, surfactants with a log S of less than 0.1 and quorum sensing inhibitory activity, phenazines with a log S of less than 0.1, ubiquinone analogues with a log S of less than 0.1, eicosanoids with a log S of less than 0.1, carotenoids with a log S of less than 0.1, mycotoxins with a log S of less than 0.1, macrolides with a log S of less than 0.1, polysaccharides with a log S of less than 0.1, boronic acids and boronic acid derivatives with a log S of less than 0.1, steroids with a log S of less than 0.1, lactones with a log S of less than 0.1, and butenolides with a log S of less than 0.1.

Among these substances, the quorum sensing inhibitors are

preferably phenylpropanoids with a log S of less than 0.1, benzoic acid analogues with a log S of less than 0.1, tannins with a log S of less than 0.1, stilbene analogues and polyketides with a log S of less than 0.1, flavonoids with a log S of less than 0.1, diarylheptanoids with a log S of less than 0.1, terpenes and terpenoids with a log S of less than 0.1, sulfur-containing compounds with a log S of less than 0.1, nitrogen-containing compounds with a log S of less than 0.1, coumarin derivatives with a log S of less than 0.1, furanocoumarins with a log S of less than 0.1, quinone derivatives with a log S of less than 0.1, alkaloids with a log S of less than 0.1, phenols and polyphenols with a log S of less than 0.1, surfactants with a log S of less than 0.1 and quorum sensing inhibitory activity, phenazines with a log S of less than 0.1, ubiquinone analogues with a log S of less than 0.1, eicosanoids with a log S of less than 0.1, carotenoids with a log S of less than 0.1, mycotoxins with a log S of less than 0.1, macrolides with a log S of less than 0.1, polysaccharides with a log S of less than 0.1, steroids with a log S of less than 0.1, boronic acids and boronic acid derivatives with a log S of less than 0.1, lactones with a log S of less than 0.1, or butenolides with a log S of less than 0.1,

more preferably phenylpropanoids with a log S of less than 0.1, benzoic acid analogues with a log S of less than 0.1, tannins with a log S of less than 0.1, stilbene analogues and polyketides with a log S of less than 0.1, flavonoids with a log S of less than 0.1, diarylheptanoids with a log S of less than 0.1, terpenes and terpenoids with a log S of less than 0.1, sulfur-containing compounds with a log S of less than 0.1, nitrogen-containing compounds with a log S of less than 0.1, coumarin derivatives with a log S of less than 0.1, quinone derivatives with a log S of less than 0.1, alkaloids with a log S of less than 0.1, boronic acids and boronic acid derivatives with a log S of less than 0.1, or lactones with a log S of less than 0.1,

more preferably 2,3,4-trimethoxycinnamic acid, 2-fluorocinnamic acid, eugenol, salicylic acid, tannic acid, resveratrol, (-)-epicatechin, flavone, curcumin, carvacrol, phytol, diphenyl disulfide, indole, umbelliferone, purpurin, reserpine, berberine chloride hydrate, 3-fluoro-4-methylphenylboronic acid, N-(3-oxododecanoyl)-L-homoserine lactone, or 2-fluoro-4-trifluoromethylphenylboronic acid.

Examples of the phenylpropanoids with a log S of less than 0.1 include eugenol, methyl eugenol, cinnamaldehyde, cinnamic acid, isovanillin, ferulic acid, cinnamaldehyde, methyl cinnamate, phenylpropionic acid, 2-methoxycinnamic acid, 3-methoxycinnamic acid, 4-methoxycinnamic acid, 3-bromocinnamic acid, 2-fluorocinnamic acid, 3-fluorocinnamic acid, 3-methylcinnamic acid, 4-acetoxycinnamic acid, 4-bromocinnamic acid, 4-ethoxycinnamic acid, 4-fluorocinnamic acid, 3,4-dimethoxycinnamic acid, 2,3-dimethoxycinnamic acid, 2,5-dimethoxycinnamic acid, 2,3,4-trimethoxycinnamic acid, 3,4,5-trimethoxycinnamic acid, and lignin.

Examples of the benzoic acid analogues with a log S of less than 0.1 include salicylic acid, gallic acid, and ellagic acid.

Examples of the tannins with a log S of less than 0.1 include 1,2,3,4,6-pentagalloylglucose, punicalagin, hamamelitannin, and tannic acid.

Examples of the stilbene analogues and polyketides with a log S of less than 0.1 include resveratrol and pterostilbene.

Examples of the flavonoids with a log S of less than 0.1 include (-)-epicatechin, (-)-catechin gallate, (-)-epicatechin gallate, (-)-gallocatechin gallate, (-)-epigallocatechin gallate, naringenin, flavone, apigenin, chrysin, acacetin, flavonol, kaempferol, quercetin, quercitrin, flavanone, isosakuranetin, pinostrobin, eriodictyol, and malvidin.

Examples of the diarylheptanoids with a log S of less than 0.1 include curcumin.

Examples of the terpenes and terpenoids with a log S of less than 0.1 include carvacrol, salvipisone, acanthospermolide, isolimonic acid, ichangin, betulinic acid, ursolic acid, gymnemic acid, obacunone, deacetylnomilinic acid glucoside, and phytol.

Examples of the sulfur-containing compounds with a log S of less than 0.1 include allicin, sulforaphane, allyl isothiocyanate, iberin, and diphenyl disulfide.

Examples of the nitrogen-containing compounds with a log S of less than 0.1 include indole and 2-methyltryptoline.

Examples of the coumarin derivatives with a log S of less than 0.1 include esculetin, umbelliferone, and scopoletin.

Examples of the furanocoumarins with a log S of less than 0.1 include psoralen, angelicin, bergamottin, and dihydroxybergamottin.

Examples of the quinone derivatives with a log S of less than 0.1 include chrysophanol, emodin, shikonin, purpurin, and embelin.

Examples of the alkaloids with a log S of less than 0.1 include berberine, berberine chloride hydrate, chelerythrine, sanguinarine, reserpine, oroidin, piperine, and hordenine.

Examples of the phenols and polyphenols with a log S of less than 0.1 include malabaricone C, taxifolin, and rosmarinic acid.

Examples of the surfactants with a log S of less than 0.1 and quorum sensing inhibitory activity include rhamnolipid, trehalolipid, sophorolipid, cellobiolipid, viscosin, and emulsan.

Examples of the phenazines with a log S of less than 0.1 include pyocyanin.

Examples of the ubiquinone analogues with a log S of less than 0.1 include piericidin A and glucopiericidin A.

Examples of the eicosanoids with a log S of less than 0.1 include lipoxin A4.

Examples of the carotenoids with a log S of less than 0.1 include zeaxanthin.

Examples of the mycotoxins with a log S of less than 0.1 include penicillinic acid and patulin.

Examples of the macrolides with a log S of less than 0.1 include erythromycin.

Examples of the polysaccharides with a log S of less than 0.1 include polygalacturonic acid and pectin.

Examples of the steroids with a log S of less than 0.1 include cholesteryl chloride.

Examples of the boronic acids and boronic acid derivatives with a log S of less than 0.1 include 3-fluoro-4-methylphenylboronic acid, and 2-fluoro-4-trifluoromethylphenylboronic acid.

Examples of the lactones with a log S of less than 0.1 include N-(3-oxododecanoyl)-L-homoserine lactone.

Examples of the butenolides with a log S of less than 0.1 include 3,4-dibromo-2(5H)-furanone.

The distance $Ra_1$ between the Hansen solubility parameter (hereinafter also referred to as $HSP_D$) of the quorum sensing inhibitor and the Hansen solubility parameter (hereinafter also referred to as $HSP_A$) of the polymer 1 is preferably more than 3.2 $MPa^{1/2}$, more preferably 3.5 $MPa^{1/2}$ or more, still more preferably 4.2 $MPa^{1/2}$ or more. $Ra_2$ is typically 50 $MPa^{1/2}$ or less, preferably 35 $MPa^{1/2}$ or less.

The Hansen solubility parameters (hereinafter also referred to as HSP) are defined by using the following three-dimensional parameters (δD, δP, δH) and are represented by formula (H) below. This idea (theory) proposed by Hansen is described in Hansen Solubility Parameters: A User's Handbook, Second Edition, C. M. Hansen

(2007), Taylor and Francis Group, LLC (HSPiP manual).

$$HSP^2 = (\delta D)^2 + (\delta P)^2 + (\delta H)^2 \cdots (H)$$

δD: London dispersion force term
δP: molecular polarization term (dipole-to-dipole force term)
δH: hydrogen bond term

The δD, δP, and δH can be calculated, for example, from the chemical structure formulas of the polymer 1 and the quorum sensing inhibitor by using computer software, Hansen Solubility Parameters in Practice (HSPiP). The values obtained by calculation with HSPiP ver. 5.0.04 are used for the molded body of the present invention.

When the polymer 1 and the quorum sensing inhibitor contained in the composition according to the present invention are each a copolymer composed of two or more types of structural units, the Hansen solubility parameter cannot

be calculated directly by the program described above. In this case, the Hansen solubility parameters of homopolymers composed of the respective structural units are calculated, and the average of the calculated Hansen solubility parameters of the homopolymers based on the volume ratio of the structural units contained in the copolymer is defined as the Hansen solubility parameter of the copolymer. The "average based on the volume ratio" means the value obtained by multiplying each of Hansen solubility parameters δD, δP, and δH of the homopolymers composed of the respective structural units by the volume fraction of the corresponding structural unit, and summing up the obtained values for δD, δP, and δH. The "volume fraction" of a structural unit means (the volume of the structural unit)/(the total volume of the structural units in the copolymer).

The distance $Ra_1$ between $HSP_A$ and $HSP_D$ indicates the distance between the Hansen Solubility Parameters (HSP) of two substances. $Ra_1$ is a measure of the affinity between the two substances. The smaller $Ra_1$ is, the higher the affinity between the two substances is.

Assuming that Hansen Solubility Parameters $HSP_\alpha$ and $HSP_\beta$ for a substance α and a substance β are

$$HSP_\alpha = (\delta D_\alpha, \delta P_\alpha, \delta H_\alpha)$$

$$HSP_\beta = (\delta D_\beta, \delta P_\beta, \delta H_\beta),$$

the distance (Ra) between $HSP_\alpha$ and $HSP_\beta$ can be calculated by using the following formula (R).

[Math. 1]

$$Ra = [4\times(\delta D_\alpha - \delta D_\beta)^2 + (\delta P_\alpha - \delta P_\beta)^2 + (\delta H_\alpha - \delta H_\beta)^2]^{1/2} \cdots (R)$$

The quorum sensing inhibitor may be supported on a carrier. Examples of the carrier include the following:

zeolite;
montmorillonite;
activated carbon;
calcium phosphate compounds, such as hydroxyapatite;
oxides, such as silicon oxide, aluminum oxide, magnesium oxide, titanium oxide, and zirconium oxide;
nitrides, such as silicon nitride, titanium nitride, aluminum nitride, and zirconium nitride;
non-oxide ceramics, such as silicon carbide;
silicates, such as calcium silicate, aluminum silicate, magnesium silicate, and diatomaceous earth; and
alumina-silica compounds, such as kaolinite, bentonite, pumice, feldspar, and quartz.

When the composition according to the present invention further contains a quorum sensing inhibitor, the content of the quorum sensing inhibitor is preferably from 0.01 to 30 wt%, more preferably from 0.1 to 10 wt%, still more preferably from 0.1 to 5 wt%, relative to 100 wt% of the total amount of all the components in the composition.

Antibacterial/Antifungal Agent

The composition according to the present invention may contain an antibacterial/antifungal agent. Examples of the antibacterial/antifungal agent include the following:

phenol/alcohol-based antibacterial/antifungal agents, such as methyl-2,4-dihydroxy-6-methylbenzoate, ethyl-2,4-dihydroxy-6-methylbenzoate, methyl-2,4-dihydroxy-3,6-dimethylbenzoate, isopropyl-2,4-dihydroxy-6-methylbenzoate, 3-methoxy-5-methylphenyl-2,4-dihydroxy-6-methylbenzoate, ethyl-2,4-dihydroxy-3,6-dimethylbenzoate, ethyl-3-formyl-2,4-dihydroxy-6-methylbenzoate, isopropyl-3-formyl-2,4-dihydroxy-6-methylbenzoate, 3-hydroxy-5-methylphenyl-2,4-dihydroxy-6-methylbenzoate, 3-hydroxy-5-methylphenyl-2-dihydroxy-4-methoxy-6-methylbenzoate, 3-methoxy-5-methylphenyl-2-hydroxy-4-methoxy-6-methylbenzoate, 3-chloro-2,6-dihydroxy-4-methylbenzoate;
pyridine/quinoline-based antibacterial/antifungal agents, such as sodium (2-pyridylthio-1-oxide), nalidixic acid, gatifloxacin, copper pyrithione, and zinc pyrithione;
triazine-based antibacterial/antifungal agents, such as hexahydro-1,3,5-tris(2-hydroxyethyl)-S-triazine;
isothiazolone-based antibacterial/antifungal agents, such as 1,2-benzisothiazolin-3-one, 2-methyl-5-chloro-4-isothiazolone complex, octylisothiazolinone, methylisothiazolinone, chloromethylisothiazolinone, dichlorooctylisothiazolinone, and benzisothiazolinone;

anilide-based antibacterial/antifungal agents, such as 4'-hydroxyacetanilide, N-(3-hydroxyphenyl)benzene carboxamide, and N-(3-hydroxyphenyl)benzamide;

nitrile-based antibacterial/antifungal agents, such as monobromocyanoacetamide, dibromocyanoacetamide, 1,2-dibromo-2,4-dicyanobutane, and tetrachlorophthalonitrile;

imidazole/thiazole-based antibacterial/antifungal agents, such as 2-(4-thiazolyl)benzimidazole, methyl 2-benzimidazole carbamate, and methyl 1-(butylcarbamoyl)-2-benzimidazole carbamate.

aldehyde-based antibacterial/antifungal agents, such as dehydroacetic acid;

carboxylic acid-based antibacterial/antifungal agents, such as sorbic acid;

ester-based antibacterial/antifungal agents, such as paraoxybenzoic acid esters;

disulfide compounds, such as dithio-2,2-bis(benzmethylamide), tetramethylthiuram disulfide, and dimethyl phenyl sulfamide;

thiocarbamate compounds, such as mancozeb, maneb, zineb, and polycarbamate;

nitro compounds, such as 1,1-dibromo-1-nitropropanol and 1,1-dibromo-1-nitro-2-acetoxypropane;

quaternary ammonium salts, such as benzalkonium chloride, benzethonium chloride, methylbenzethonium chloride, cetylpyridinium chloride, cetrimonium, dofamium chloride, tetraethylammonium bromide, didecyldimethylammonium chloride, and domiphen bromide;

biguanides, such as metformin, buformin, phenformin, proguanil, chloroproguanil, chlorhexidine, alexidine, polyaminopropyl biguanide, and polyhexanide;

surfactants, such as sodium alkylbenzene sulfonate, polyoxyethylene nonylphenyl ether, polyoxyethylene oleyl ether, polyoxyethylene stearylamine, and lauryl dimethylbenzyl ammonium chloride; and

inorganic antibacterial agents, such as silver-loaded zeolite, copper-loaded zeolite, zinc-loaded zeolite, silver-loaded calcium phosphate, copper-loaded calcium phosphate, zinc-loaded calcium phosphate, and titanium oxide.

Among these substances, the antibacterial/antifungal agents are preferably phenol/alcohol-based antibacterial/antifungal agents, pyridine/quinoline-based antibacterial/antifungal agents, isothiazolone-based antibacterial/antifungal agents, nitrile-based antibacterial/antifungal agents, imidazole/thiazole-based antibacterial/antifungal agents, aldehyde-based antibacterial/antifungal agents, carboxylic acid-based antibacterial/antifungal agents, ester-based antibacterial/antifungal agents, quaternary ammonium salts, biguanides, surfactants, or inorganic antibacterial agents, more preferably pyridine/quinoline-based antibacterial/antifungal agents, isothiazolone-based antibacterial/antifungal agents, or imidazole/thiazole-based antibacterial/antifungal agents, still more preferably thiabendazole, zinc pyrithione, or octylisothiazolinone.

When the composition according to the present invention contains an antibacterial/antifungal agent, the composition according to the present invention may contain only one type or two or more types of antibacterial/antifungal agents.

The normal logarithm log S of the solubility of the antibacterial/antifungal agent in water at 25°C and a pH of 6 to 8 is preferably 1 or less, more preferably -0.6 or less, still more preferably -1 or less, yet still more preferably -1.5 or less.

The antibacterial/antifungal agent may be loaded on a carrier.

Examples of the carrier for the antibacterial/antifungal agent include those listed as examples of the carrier for the quorum sensing inhibitor.

When the composition according to the present invention contains the antibacterial/antifungal agent, the content of the antibacterial/antifungal agent is preferably from 0.01 to 10 wt%, more preferably from 0.1 to 5 wt% relative to 100 wt% of the total amount of all the components in the composition.

Surface Modifier

The composition according to the present invention may contain a surface modifier. In this description, the "surface modifier" means a compound that changes the surface free energy of a molded body depending on whether the surface modifier is present or not.

Examples of the surface modifier include the following:

fluorosurfactants, such as nonafluoro-1-butanesulfonic acid, tridecafluoroheptanoic acid, heptadecafluorooctanesulfonic acid, heptadecafluorononanoic acid, heneicosafluoroundecanoic acid, 2H,2H,3H,3H-heptadecafluoroundecanoic acid, ammonium pentadecafluorooctanoate, lithium nonafluoro-1-butanesulfonate, potassium heptadecafluoro-1-octanesulfonate, Surflon S-431, Surflon S-461, and Surflon S-420;

perfluoropolyether group-containing compounds described in WO 2014/080873;

fluorine-containing monomers, such as 1H,1H,2H,2H-heptadecafluorodecyl acrylate;

alkylsiloxy group-containing compounds described in RSC Adv. 2015, 5, 53054-53062;

polyalkylene ether group-containing compounds described in JP-A-2017-115044;

betaine-type compounds described in JP-A-2002-069178; and
surfactants, such as glycerol monostearate.

Among these substances, the surface modifiers are preferably fluorosurfactants, perfluoropolyether group-containing compounds, fluorine-containing monomers, polyalkylene ether group-containing compounds, betaine-type compounds, or surfactants, more preferably fluorosurfactants, fluorine-containing monomers, or polyalkylene ether group-containing compounds, still more preferably 1H,1H,2H,2H-heptadecafluorodecyl acrylate, Surflon S-431, Surflon S-461, or Surflon S-420.

When the composition according to the present invention contains the surface modifier, the content of the surface modifier is preferably from 0.1 to 30 wt%, more preferably from 1 to 20 wt% relative to 100 wt% of the total amount of all the components in the composition.

The composition according to the present invention may contain known additives as necessary. Examples of the additives include antioxidants, rust inhibitors, UV absorbers, light stabilizers, stabilizers, hydrolysis inhibitors, biofouling inhibitors, biorepellents, antibiotics, antiviral agents, deodorants, dyes, pigments, flame retardants, antistatic agents, lubricants, sliding agents, fillers, plasticizers, nucleating agents, antiblocking agents, foaming agents, defoaming agents, emulsifiers, gloss agents, binders, compatibilizers, polymerization inhibitors, shrinkage reducing agents, curing agents, crosslinking agents, accelerators, release agents, thickeners, fibers, weathering agents, anti-fog agents, anti-drip agents, and fillers.

These additives may be added during synthesis of the polymer 1 or during kneading of the polymer 1.

Examples of the antioxidants include phenolic antioxidants, sulfur-containing antioxidants, phosphorus-containing antioxidants, and hindered amine antioxidants.

Examples of the phenolic antioxidants include N-octadecyl-3-(4-hydroxy-3,5-di-tert-butylphenyl)propionate, 2,6-di-tert-butyl-4-methylphenol, 2,2-thio-diethylene-bis-[3-(3,5-di-tert-butyl-4-hydroxyphenyl)propionate], triethylene glycol-bis-[3-(3-tert-butyl-5-methyl-4-hydroxyphenyl)propionate], 3,9-bis[2-{3-(3-tert-butyl-4-hydroxy-5-methylphenyl) propionyloxy}-1,1-dimethylethyl]-2,4,8,10-tetraoxaspiro[5·5]undecane, tetrakis{3-(3,5-di-tert-butyl-4-hydroxyphenyl) propionic acid}pentaerythrityl ester, 2-tert-butyl-6-(3-tert-butyl-2-hydroxy-5-methylbenzyl)-4-methylphenyl acrylate, 2-[1-(2-hydroxy-3,5-di-tert-pentylphenyl)ethyl]-4,6-di-tert-pentylphenyl acrylate, 1,3,5-trimethyl-2,4,6-tris(3,5-di-tert-butyl-4-hydroxybenzyl)benzene, tris(3,5-di-tert-butyl-4-hydroxybenzyl)isocyanurate, 1,3,5-tris(4-tert-butyl-3-hydroxy-2,6-dimethylbenzyl)-1,3,5-triazine-2,4,6-(1H,3H,5H)-trione, 2,2'-methylenebis(6-tert-butyl-4-methylphenol), 4,4'-butylidenebis(6-tert-butyl-3-methylphenol), and 4,4'-thiobis(6-tert-butyl-3-methylphenol).

Examples of the sulfur-containing antioxidants include 3,3'-thiodipropionic acid di-N-dodecyl ester, 3,3'-thiodipropionic acid di-N-tetradecyl ester, 3,3-thiodipropionic acid di-N-octadecyl ester, and tetrakis(3-dodecylthiopropionic acid) pentaerythrityl ester.

Examples of the phosphorus-containing antioxidants include tris(2,4-di-tert-butylphenyl)phosphite, bis(2,4-di-tert-butylphenyl)pentaerythritol diphosphite, bis(2,6-di-tert-butyl-4-methylphenyl)pentaerythritol diphosphite, bis(2,4-dicumylphenyl)pentaerythritol diphosphite, tetrakis(2,4-di-tert-butylphenyl)-4,4'-biphenylene diphosphonite, and bis-[2,4-di-tert-butyl-(6-methyl)phenyl]ethyl phosphite.

Examples of the hindered amine antioxidants include sebacic acid bis(2,2,6,6-tetramethyl-4-piperidyl)ester, 2,2,6,6-tetramethyl-4-piperidyl methacrylate, and poly[{6-(1,1,3,3-tetramethylbutyl)amino-1,3,5-triazine-2,4-diyl} {(2,2,6,6-tetramethyl-4-piperidyl)imino}-1,6-hexamethylene{(2,2,6,6-tetramethyl-4-piperidyl)imino}].

Examples of the rust inhibitors include alkanolamines, quaternary ammonium salts, alkanethiols, imidazolines, sodium metavanadate, bismuth citrate, phenol derivatives, polyalkenylamines, alkyl imidazoline derivatives, dianoalkylamines, carboxylic acid amides, alkylenediamines, pyrimidine and its carboxylic acid, naphthenic acid, and sulfonic acid complexes, calcium nitrite, alkylamines and esters, polyalcohols, polyphenols, alkanolamines, sodium molybdate, sodium tungstate, sodium nitrite, sodium phosphonate, sodium chromate, sodium silicate, gelatin, polymers of carboxylic acids, aliphatic amines, aliphatic diamines, aromatic amines, aromatic diamines, ethoxylated amines, imidazole, benzimidazole, nitro compounds, formaldehyde, acetylenic alcohols, aliphatic thiols, aliphatic sulfides, aromatic thiols, aromatic sulfides, sulfoxides, thioureas, acetylenic alcohols, 2-mercaptobenzimidazole, amines, or mixtures of quaternary ammonium salts and halogen ions, acetylenethiol and sulfides, dibenzyl sulfoxide, mixtures of alkylamines and potassium iodide, dicyclohexylamine nitrite, cyclohexylamine benzoate, benzotriazole, a mixture of tannin and sodium phosphate, a mixture of triethanolamine, lauryl sarcosine, and benzotriazole, a mixture of alkylamine, benzotriazole, sodium nitrite, and sodium phosphate.

Examples of the UV absorbers and light stabilizers include 2-(5-methyl-2-hydroxyphenyl)benzotriazole, 2-[2-hydroxy-3,5-bis(A,A-dimethylbenzyl)phenyl]-2H-benzotriazole, 2-(3-tert-butyl-5-methyl-2-hydroxyphenyl)-5-chlorobenzotriazole, 2-(2'-hydroxy-5'-tert-octylphenyl)benzotriazole, methyl-3-[3-tert-butyl-5-(2H-benzotriazol-2-yl)-4-hydroxyphenyl]propionate-polyethylene glycol, hydroxyphenyl benzotriazole derivatives, 2-(4,6-diphenyl-1,3,5-triazin-2-yl)-5 [(hexyl)oxy]-phenol, and 2-ethoxy-2'-ethyl-oxalic acid bisanilide.

Examples of the stabilizers include organic tin stabilizers, such as dimethyltin mercapto, dibutyltin mercapto,

dioctyltin mercapto, dibutyltin malate, dibutyltin malate polymer, dioctyltin malate, dioctyltin malate polymer, dibutyltin laurate, and dibutyltin laurate polymer; lead-based stabilizers, such as lead stearate, dibasic lead phosphite, and tribasic lead sulfate; calcium-zinc-stabilizers, barium-zinc stabilizers, barium-cadmium stabilizers; and stearate stabilizers (metallic soaps), such as calcium stearate, zinc stearate, barium stearate, and lead stearate.

Examples of the hydrolysis inhibitors include compounds containing functional groups, such as a carbodiimide group, an epoxy group, and an oxazoline group.

Examples of the compounds having a carbodiimide group include compounds obtained by the decarboxylation-condensation reaction of the following diisocyanates. Examples of the diisocyanates include 4,4'-diphenylmethane diisocyanate, 3,3'-dimethoxy-4,4'-diphenylmethane diisocyanate, 3,3'-dimethyl-4,4'-diphenylmethane diisocyanate, 4,4'-diphenylether diisocyanate, 3,3'-dimethyl-4,4'-diphenylether diisocyanate, 2,4-tolylene diisocyanate, 2,6-tolylene diisocyanate, 1-methoxyphenyl-2,4-diisocyanate, isophorone diisocyanate, 4,4'-dicyclohexylmethane diisocyanate, and tetramethylxylylene diisocyanate. Examples of commercial products of the carbodiimide group-containing compounds include Carbodilite (registered trademark) V-01, V-02B, V-03, V-04K, V-04PF, V-05, V-07, V-09, V-09GB, HMV-15CA, LA-1, and HMV-5CA-LC available from Nisshinbo Chemical Co., Ltd.

Examples of the epoxy group-containing compounds include glycidyl ester compounds and glycidyl ether compounds.

Specific examples of the glycidyl ester compounds include benzoic acid glycidyl ester, tert-butyl-benzoic acid glycidyl ester, p-toluic acid glycidyl ester, cyclohexane carboxylic acid glycidyl ester, pelargonic acid glycidyl ester, stearic acid glycidyl ester, lauric acid glycidyl ester, palmitic acid glycidyl ester, behenic acid glycidyl ester, versatic acid glycidyl ester, oleic acid glycidyl ester, linoleic acid glycidyl ester, linolenic acid glycidyl ester, behenic acid glycidyl ester, stearolic acid glycidyl ester, terephthalic acid diglycidyl ester, isophthalic acid diglycidyl ester, phthalic acid diglycidyl ester, naphthalenedicarboxylic acid diglycidyl ester, methyl terephthalic acid diglycidyl ester, hexahydrophthalic acid diglycidyl ester, tetrahydrophthalic acid diglycidyl ester, cyclohexanedicarboxylic acid diglycidyl ester, adipic acid diglycidyl ester, succinic acid diglycidyl ester, sebacic acid diglycidyl ester, dodecanedioic acid diglycidyl ester, octadecanedicarboxylic acid diglycidyl ester, trimellitic acid triglycidyl ester, and pyromellitic acid tetraglycidyl ester.

Specific examples of the glycidyl ether compounds include phenyl glycidyl ether, o-phenyl glycidyl ether, 1,4-bis(β,γ-epoxypropoxy)butane, 1,6-bis(β,γ-epoxypropoxy)hexane, 1,4-bis(β,γ-epoxypropoxy)benzene, 1-(β,γ-epoxypropoxy)-2-ethoxyethane, 1-(β,γ-epoxypropoxy)-2-benzyloxyethane, 2,2-bis-[p-(β,γ-epoxypropoxy)phenyl]propane, and a bisglycidyl polyether obtained by the reaction of a bisphenol, such as 2,2-bis(4-hydroxyphenyl)propane or 2,2-bis(4-hydroxyphenyl)methane, with epichlorohydrin.

The oxazoline-group containing compounds are preferably, for example, bisoxazoline compounds. Specific examples include 2,2'-bis(2-oxazoline), 2,2'-bis(4-methyl-2-oxazoline), 2,2'-bis(4,4-dimethyl-2-oxazoline), 2,2'-bis(4-ethyl-2-oxazoline), 2,2'-bis(4,4'-diethyl-2-oxazoline), 2,2'-bis(4-propyl-2-oxazoline), 2,2'-bis(4-butyl-2-oxazoline), 2,2'-bis(4-hexyl-2-oxazoline), 2,2'-bis(4-phenyl-2-oxazoline), 2,2'-bis(4-cyclohexyl-2-oxazoline), 2,2'-bis(4-benzyl-2-oxazoline), 2,2'-p-phenylenebis(2-oxazoline), 2,2'-m-phenylenebis(2-oxazoline), 2,2'-o-phenylenebis(2-oxazoline), 2,2'-p-phenylenebis(4-methyl-2-oxazoline), 2,2'-p-phenylenebis(4,4-dimethyl-2-oxazoline), 2,2'-m-phenylenebis(4-methyl-2-oxazoline), 2,2'-m-phenylenebis(4,4-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2'-decamethylenebis(2-oxazoline), 2,2'-ethylenebis(4-methyl-2-oxazoline), 2,2'-tetramethylenebis(4,4-dimethyl-2-oxazoline), 2,2'-9,9'-diphenoxyethanebis(2-oxazoline), 2,2'-cyclohexylenebis(2-oxazoline), and 2,2'-diphenylenebis(2-oxazoline).

Examples of the biofouling inhibitors include tetramethylthiuram disulfide, zinc bis(N,N-dimethyldithiocarbamate), 3-(3,4-dichlorophenyl)-1,1-dimethylurea, dichloro-N-((dimethylamino)sulfonyl)fluoro-N-(P-tolyl)methanesulfenamide, pyridine-triphenylborane, N,N-dimethyl-N'-phenyl-N'-(fluorodichloromethylthio)sulfamide, copper(I) thiocyanate, copper(I) oxide, tetrabutylthiuram disulfide, 2,4,5,6-tetrachloroisophthalonitrile, zinc ethylene bisdithiocarbamate, 2,3,5,6-tetrachloro-4-(methylsulfonyl)pyridine, N-(2,4,6-trichlorophenyl)maleimide, bis(2-pyridinethiol-1-oxide) zinc salt, bis(2-pyridinethiol-1-oxide) copper salt, 2-methylthio-4-tert-butylamino-6-cyclopropylamino-S-triazine, alkylpyridine compounds, gramine compounds, and isononyl compounds.

Examples of the deodorants include organic acids, fatty acid metals, metal compounds, cyclodextrins, and porous materials.

Examples of the organic acids include lactic acid, succinic acid, malic acid, citric acid, maleic acid, malonic acid, ethylenediaminepolyacetic acid, alkane-1,2-dicarboxylic acid, alkene-1,2-dicarboxylic acid, cycloalkane-1,2-dicarboxylic acid, cycloalkene-1,2-dicarboxylic acid, and naphthalenesulfonic acid.

Examples of the fatty acid metals include zinc undecylenate, zinc 2-ethylhexanoate, and zinc ricinoleate.

Examples of the metal compounds include iron oxide, iron sulfate, zinc oxide, zinc sulfate, zinc chloride, silver oxide, steel oxide, sodium metal (e.g., iron, copper) chlorophyllin, metal (e.g., iron, copper, cobalt) phthalocyanine, metal (e.g., iron, copper, cobalt) phthalocyanine tetrasulfonate, titanium dioxide, and visible light responsive titanium dioxide (e.g., nitrogen-doped type).

Examples of the cyclodextrins include α-cyclodextrin, β-cyclodextrin, γ-cyclodextrin, and their methyl derivatives, hydroxypropyl derivatives, glucosyl derivatives, and maltosyl derivatives.

Examples of the components constituting the porous materials include polyunsaturated carboxylic acids, aromatic polymers, chitin, chitosan, activated carbon, silica gel, activated alumina, zeolite, and ceramics.

Examples of the polyunsaturated carboxylic acids include polymethacrylic acid and polyacrylic acid.

Examples of the aromatic polymers include polydivinylbenzene, styrene-divinylbenzene-vinylpyridine copolymer, and divinylbenzene-vinylpyridine copolymer.

Examples of the dyes include azo dyes, anthraquinone dyes, indigoid dyes, triarylmethane dyes, xanthene dyes, alizarin dyes, acridine dyes, stilbene dyes, thiazole dyes, naphthol dyes, quinoline dyes, nitro dyes, indamine dyes, oxazine dyes, phthalocyanine dyes, cyanine dyes, and other dyes. These dyes may be used singly or in combination of two or more.

Examples of the pigments include carbon black, titanium oxide, phthalocyanine pigments, quinacridone pigments, isoindolinone pigments, perylene pigments, perinine pigments, quinophthalone pigments, diketopyrrolopyrrole pigments, dioxazine pigments, disazo condensation pigments, and benzimidazolone pigments.

Examples of the flame retardants include decabromobiphenyl, antimony trioxide, phosphorus flame retardants, and aluminum hydroxide.

Examples of the antistatic agents include cationic surfactants, amphoteric surfactants, anionic surfactants, and nonionic surfactants.

Examples of the lubricants include internal lubricants and external lubricants. Examples of the internal lubricants include, but are not limited to, butyl stearate, lauryl alcohol, stearyl stearate, epoxidized soybean oil, glycerol monostearate, stearic acid, and bisamide. These internal lubricants may be used singly or in combination of two or more. Examples of the external lubricants include, but are not limited to, montanic acid wax, paraffin wax, polyolefin wax, polyethylene wax, polypropylene wax, and ester wax. These external lubricants may be used singly or in combination of two or more.

Examples of the cationic surfactants include quaternary ammonium salts, primary amine salts, secondary amine salts, tertiary amine salts, quaternary amine salts, and pyridine derivatives.

Examples of the amphoteric surfactants include betaine-type surfactants, carboxylic acid derivatives, and imidazoline derivatives.

Examples of the anionic surfactants include alkyl phosphate surfactants, sulfated oils, soaps, sulfated ester oils, sulfated amide oils, sulfated ester salts of olefins, fatty alcohol sulfate salts, alkyl sulfate salts, fatty acid ethyl sulfonate salts, alkyl naphthalene sulfonate salts, alkyl benzene sulfonate salts, oleate sulfonate salts, and phosphate salts.

Examples of the nonionic surfactants include partial fatty acid esters of polyhydric alcohols, ethylene oxide adducts of fatty alcohols, ethylene oxide adducts of fatty acids, fatty amino or fatty acid amide ethylene oxide adducts, ethylene oxide adducts of alkylphenols, ethylene oxide adducts of partial fatty acid esters of polyhydric alcohols, polyethylene glycol, polypropylene glycol, polyethylene glycol-polypropylene glycol copolymer, Polyglykol PR600 (available from CLARIANT, CAS No.: 9003-11-6), Polyglykol P41/300 (available from CLARIANT, CAS No.: 58205-99-5), polyethylene glycol acrylate, polyethylene glycol methacrylate, monomethoxypolyethylene glycol acrylate, monomethoxypolyethylene glycol methacrylate, polypropylene glycol acrylate, polypropylene glycol methacrylate, monomethoxypolypropylene glycol acrylate, monomethoxypolypropylene glycol methacrylate, monomethoxypolyethylene glycol, dimethoxypolyethylene glycol, monomethoxypolypropylene glycol, and dimethoxypolypropylene glycol.

Examples of the sliding agents include oils, such as lubricating oils, and solid sliding agents. Examples of the lubricating oils include paraffin oils, such as spindle oils, refrigeration oils, dynamo oils, turbine oils, machine oils, cylinder oils, and gear oils; naphthenic mineral oils; and synthetic oils, such as greases, hydrocarbons, esters, polyglycols, polyphenylene ethers, silicones, and halocarbons. Examples of the solid lubricants include polytetrafluoroethylene particles, molybdenum disulfide, silicone rubber, polyethylene, and graphite.

Examples of the curing agents include tertiary (C4-C10) alkyl peroxybenzoates, such as t-butyl peroxybenzoate, t-amyl peroxybenzoate, 1,1-dimethylbutyl peroxybenzoate, 1,1,2-trimethylpropyl peroxybenzoate, and 1,1,3,3-tetramethylbutyl peroxybenzoate; tertiary (C4-C10) alkyl peroxy branched (C4-C10) alkyl esters, such as t-butylperoxy-2-ethylhexanoate, t-amylperoxy-2-ethylhexanoate, 1,1-dimethylbutylperoxy-2-ethylhexanoate, 1,1,2-trimethylpropylperoxy-2-ethylhexanoate, 1,1,3,3-tetramethylbutyl peroxy-2-ethylhexanoate, t-butyl peroxyneodecanoate, t-butyl peroxypivalate, 1,1-dimethylbutyl peroxypivalate, 1,1,2-trimethylpropyl peroxypivalate, t-butyl peroxyisobutyrate, t-butyl peroxyacetate, t-butyl peroxy-3,5,5-trimethylhexanoate, t-amyl peroxy-3,5,5-trimethylhexanoate, 1,1-dimethylbutyl peroxy-3,5,5-trimethylhexanoate, and 1,1,2-trimethylpropylperoxy-3,5,5-trimethylhexanoate; ketone peroxides, such as methyl ethyl ketone peroxide, methyl isopropyl ketone peroxide, methyl isobutyl ketone peroxide, and cyclohexanone peroxide; peroxy monocarbonates, such as t-butylperoxy isopropyl carbonate, t-amylperoxy isopropyl carbonate, 1,1-dimethylbutyl peroxy isopropyl carbonate, 1,1,2-trimethylpropyl peroxy isopropyl carbonate, t-butylperoxy-2-ethylhexyl carbonate, t-amylperoxy-2-ethylhexyl carbonate, 1,1-dimethylbutyl peroxy-2-ethylhexyl carbonate, 1,1,2-trimethylperoxy propyl carbonate, and 1,1,3,3-tetramethylbutyl peroxy-2-ethylhexyl carbonate; and hydroperoxides, such as o-diisopropylbenzene monohydroperoxide, m-diisopropylbenzene monohydroperoxide, p-diisopropylbenzene monohydroperoxide, o-diisopropylbenzene dihydroperoxide, m-diisopropylbenzene dihydroperoxide, and p-diisopropylbenzene dihydroperoxide.

Examples of the polymerization inhibitors include quinones, such as parabenzoquinone, toluquinone, naphthaquinone, phenanthraquinone, and 2,5-diphenylparabenzoquinone; hydroquinones, such as toluhydroquinone, hydroquinone, tertiary butyl catechol, monotertiary butyl hydroquinone, and 2,5-ditertiary butyl hydroquinone; and monophenols, such as hydroquinone monomethyl ether and 2,6-di-t-butyl-p-cresol.

Examples of the shrinkage reducing agents include thermoplastic resins, such as polystyrene, polymethyl methacrylate, polyvinyl acetate, saturated polyester, and styrene-butadiene rubber.

Examples of the accelerators include cobalt naphthenate, cobalt octenate, manganese naphthenate, copper naphthenate, and copper octenate.

Examples of the release agents include sodium dialkyl sulfosuccinates, such as sodium di(2-ethylhexyl) sulfosuccinate; metallic soaps, such as zinc stearate and calcium stearate; and fluorine-containing organic compounds, and phosphate compounds.

Examples of the thickeners include oxides or hydroxides of magnesium and calcium, such as calcium oxide, magnesium oxide, calcium hydroxide, and magnesium hydroxide.

Examples of the fibers include organic fibers and inorganic fibers. Examples of the organic fibers include carbon fibers and aramid fibers. Examples of the inorganic fibers include glass chopped strands, milled glass fibers, and roving glass.

Examples of the fillers include inorganic fillers, such as glass beads, glass balloons, glass flakes, asbestos, mica, calcium carbonate, magnesium carbonate, magnesium sulfate, talc, silica, calcium silicate, potassium titanate whiskers, hydrotalcite, kaolin, diatomaceous earth, carbon black, graphite, pumice, ebonite powder, cotton flock, cork powder, and barium sulfate; and organic fillers, such as fluororesin, wood powder, cellulose powder, other natural powders or fibers, and synthetic fibers.

When the resin composition according to the present invention is extrusion-molded, injection-molded, vacuum-molded, blow-molded, or roll-molded, the melt flow rate (MFR) of the resin composition measured in accordance with JIS K7210 at 230°C under a load of 2.16 kgf is preferably from 0.1 to 100 g/10 min from the viewpoint of moldability.

When the resin composition according to the present invention is spun into fiber as described above, the melt flow rate (MFR) of the resin composition measured in accordance with JIS K7210 at 230°C under a load of 2.16 kgf is preferably from 1 to 1000 g/10 min.

The composition according to the present invention can be produced by any method.

The composition according to the present invention may be produced by melt-kneading the polymer 1 and, as necessary, a thermoplastic resin, a thermosetting resin, a quorum sensing inhibitor, an antibacterial/antifungal agent, a surface modifier, and other additives, and then cooling the melt-kneaded material, or by melt-kneading them and then forming the melt-kneaded material into pellets in a pelletizer.

The composition according to the present invention may be produced by melt-kneading the polymer 1 and, as necessary, a thermoplastic resin, a thermosetting resin, a quorum sensing inhibitor, an antibacterial/antifungal agent, a surface modifier, and other additives in advance to prepare a high-concentration master batch, then further adding the polymer 1 or the thermoplastic resin or the thermosetting resin, and melt-kneading them.

The composition according to the present invention may be produced by simply mixing the polymer 1 and, as necessary, a thermosetting resin, a quorum sensing inhibitor, an antibacterial/antifungal agent, a surface modifier, and other additives, or by dissolving the polymer 1 in a solvent and then, as necessary, mixing the polymer 1 with a thermosetting resin, a quorum sensing inhibitor, an antibacterial/antifungal agent, a surface modifier, or other additives, or by mixing the polymer 1 with a solvent or, as necessary, a solution of a thermosetting resin, a quorum sensing inhibitor, an antibacterial/antifungal agent, a surface modifier, or other additives in a solvent, or by dissolving the polymer 1 in a solvent, as necessary, then dissolving a thermosetting resin, a quorum sensing inhibitor, an antibacterial/antifungal agent, a surface modifier, and other additives in the solvent, and then mixing them.

The composition according to the present invention may be produced by simply mixing the polymer 1 and, as necessary, a thermoplastic resin, a thermosetting resin, a quorum sensing inhibitor, an antibacterial/antifungal agent, a surface modifier, and other additives in advance, or dissolving them in a solvent in advance to prepare a high-concentration master batch, then further adding the polymer 1, the thermoplastic resin, the thermosetting resin, and other materials as they are or, as necessary, after dissolving them in a solvent, and mixing them.

The composition according to the present invention may be produced by mixing the monomers or prepolymer of the polymer 1 and, as necessary, a thermoplastic resin, a thermosetting resin, a quorum sensing inhibitor, an antibacterial/antifungal agent, a surface modifier, and other additives, optionally followed by polymerization. Examples of the polymerization method include bulk polymerization, cast polymerization, solution polymerization, suspension polymerization, and emulsion polymerization.

The polymer 1 or the composition according to the present invention produced in accordance with the above methods can be used as a raw material to produce a molded body and a coating film.

Molded Body

A molded body containing the polymer 1 or the composition according to the present invention can be produced by forming the polymer 1 or the composition.

Examples of methods for forming the polymer 1 or the composition according to the present invention include, but are not limited to, injection molding, extrusion molding, vacuum forming, pressure forming, press molding, transfer molding, cast molding, compression molding, laminate molding, inflation molding, calendar molding, blow molding, hollow molding, two-color molding, foam molding, insert molding, in-mold coating molding, rotational molding, hand lay-up molding, spray-up molding, matched die molding, vacuum injection molding, filament winding molding, centrifugal molding, pultrusion molding, and other molding methods.

Examples of the molded body of the present invention include, but are not limited to, an injection-molded body, an extrusion-molded body, a vacuum-formed body, a pressure-formed body, a press-molded body, a transfer-molded body, a cast-molded body, a compression-molded body, a laminate-molded body, an inflation-molded body, a calendar-molded body, a blow-molded body, a hollow-molded body, a two-color-molded body, a foam-molded body, an insert-molded body, an in-mold coating-molded body, a rotationally molded body, a molded body produced by hand lay-up molding, a molded body produced by spray-up molding, a molded body produced by matched die molding, a molded body produced by vacuum injection molding, a molded body produced by filament winding molding, a molded body produced by centrifugal molding, a molded body produced by pultrusion molding, a sheet, and a film. The molded body may have a single layer structure or a multilayer structure.

Multilayer Structure

The molded body of the present invention may have a multilayer structure including a layer composed of the polymer 1 or the composition according to the present invention and a layer different from that layer. In the multilayer structure, the layer composed of the polymer 1 or the composition according to the present invention is preferably at least one surface layer of the multilayer structure. Examples of the material of the layer different from the layer composed of the polymer 1 or the composition according to the present invention include resins different from the polymer 1 or the composition according to the present invention, metals, paper, and leathers. The multilayer structure can be produced by attaching a layer composed of the polymer 1 or the composition according to the present invention to a layer different from that layer.

With regard to the molded body according to the present invention, preferably, the dispersion force component $\gamma^d$ of the surface free energy is 25 mN/m or less, or the sum of the dipole force component $\gamma^p$ and the hydrogen bond component $\gamma^h$ of the surface free energy is 30 mN/m or more, more preferably, $\gamma^d$ is 20 mN/m or less, or the sum of $\gamma^p$ and $\gamma^h$ is 40 mN/m or more, still more preferably, $\gamma^d$ is 16 mN/m or less, or the sum of $\gamma^p$ and $\gamma^h$ is 80 mN/m or more. The dispersion force component $\gamma^d$ of the surface free energy of the molded body according to the present invention is typically 0 mN/m or more.

The surface free energy can be divided into a dispersion term ($\gamma^d$), a hydrogen bond term ($\gamma^h$), and a dipole term ($\gamma^p$).

The surface free energy of the molded body according to the present invention is calculated by using the Kitazaki-Hata theory.

In the Kitazaki-Hata theory, the surface free energy $\gamma$ is assumed to consist of a dispersion force component $\gamma^d$, a dipole force component $\gamma^p$, and a hydrogen bond component $\gamma^h$, and the surface free energy $\gamma$ is represented by
[Math. 2]

$$\gamma = \gamma^d + \gamma^p + \gamma^h \qquad (E)$$

In this case, the relationship between the surface energy $\gamma^l$ of the liquid, the surface energy $\gamma^s$ of the solid, and the contact angle $\theta$ is represented by
[Math. 3]

$$\gamma_L(1 + \cos\theta) = 2\sqrt{\gamma_S^d \gamma_L^d} + 2\sqrt{\gamma_S^p \gamma_L^p} + 2\sqrt{\gamma_S^h \gamma_L^h} \qquad (E1)$$

Each component of the surface free energy of the molded body can be obtained by measuring the contact angles $\theta$ of three liquids for which each component of $\gamma^l$ is known, and solving the simultaneous formulas for

[Math. 4]

$$\gamma_S^d$$

[Math. 5]

$$\gamma_S^p$$

[Math. 6]

$$\gamma_S^h$$

Polymer-Containing Fiber

A fiber containing the polymer 1 can be obtained by spinning the composition according to the present invention (the resin composition containing the polymer 1).

The composition according to the present invention may contain, as polymer component(s), only the polymer 1, or the polymer 1 and a polymer different from the polymer 1. When the composition according to the present invention contains a polymer different from the polymer 1, the polymer 2 may be contained as the polymer. When the composition according to the present invention contains the polymer 1 and the polymer 2, the content of the polymer 1 is from 1 to 99 wt%, and the content of the polymer 2 is from 1 to 99 wt%, relative to 100 wt% of the total amount of the polymer 1 and the polymer 2.

When the composition according to the present invention contains the polymer 1 and a polymer different from the polymer 1, and the polymer different from the polymer 1 is incompatible with the polymer 1, the phase composed of the polymer 1 and the phase composed of the polymer different from the polymer 1 usually form a sea-island structure, a cylinder structure, a lamella structure, a bicontinuous structure, or other morphologies.

The fiber containing the composition according to the present invention may have a circular cross-section, an irregular cross-section, such as a polygonal cross-section or a multi-lobed cross-section, or a hollow cross-section.

The filament denier of the fiber containing the composition according to the present invention is preferably, but not necessarily, 1 dtex or more from the viewpoint of ease of fiber formation, preferably 20 dtex or less from the viewpoint of fiber flexibility.

Examples of methods for producing the fiber containing the composition according to the present invention include dry spinning, wet spinning, and melt spinning. Melt spinning is preferred. A typical spinning method includes two steps, a spinning step and a drawing step, using chips containing the resin composition as a raw material. Examples of spinning methods suitably used in the method for producing the fiber containing the composition according to the present invention include: continuous polymerization spinning in which the resin composition is spun continuously after the resin composition production process without forming chips from the resin composition; direct spinning/drawing (spin drawing) in which a spinning step and a drawing step are conducted in one step; high-speed spinning, which does not require a drawing step; the POY-DTY method, which produces a draw textured yarn (DTY) in a pre-twist process after preparing a partially oriented yarn (POY); and spun-bonding. These methods are more rationalized methods than the common spinning methods described above.

The fiber containing the composition according to the present invention may be a composite fiber. The composite fiber refers to a fiber in which two or more fibers made of different components are bonded together in a single yarn. Examples of the composite fiber include a core-sheath composite fiber, a laminated composite fiber, a splittable composite fiber, and a sea-island composite fiber.

The filament denier of the composite fiber containing the composition according to the present invention is preferably, but not necessarily, 1 dtex or more from the viewpoint of ease of fiber formation, more preferably 20 dtex or less from the viewpoint of fiber flexibility.

Examples of the structure of the core-sheath composite fiber include a core-sheath structure in which a material

different from the composition according to the present invention is covered with the composition according to the present invention, and a core-sheath structure in which the composition according to the present invention is covered with a material different from the composition according to the present invention. The structure of the core-sheath composite fiber is preferably a core-sheath structure in which a material different from the composition according to the present invention is covered with the composition according to the present invention. The material different from the composition according to the present invention is preferably the polymer 2, more preferably polypropylene (PP), polyethylene terephthalate (PET), polytrimethylene terephthalate (PTT), polybutylene terephthalate (PBT), polyamide 6 (PA6), or polyamide 66 (PA66).

The core-sheath composite fiber having a core-sheath structure in which a material different from the composition according to the present invention is covered with the composition according to the present invention is preferably a core-sheath composite fiber in which the area ratio of the sheath portion in the cross-section in the fiber radial direction is from 10% to 90%.

The laminated composite fiber is crimped because of, for example, a difference in the shrinkage rate of the fiber containing the composition according to the present invention. When the composite fiber is crimped into a spiral shape, the composition according to the present invention may be located on the outer side in the spiral, or the material different from the composition according to the present invention may be located on the outer side in the spiral. The laminated composite fiber is preferably such that the composition according to the present invention is located on the outer side in the spiral. The material different from the composition according to the present invention is preferably the polymer 2, more preferably polypropylene (PP), polyethylene terephthalate (PET), polytrimethylene terephthalate (PTT), polybutylene terephthalate (PBT), polyamide 6 (PA6), or polyamide 66 (PA66).

The splittable composite fiber provides ultrafine fibers when the splittable composite fiber is split and opened by chemical treatment of the fiber containing the composition according to the present invention. When the splittable composite fiber is composed of a radial fiber at the center and a plurality of wedge-shaped fibers around the radial fiber, the composition according to the present invention may constitute the plurality of wedge-shaped fibers around the radial fiber, or the material different from the composition according to the present invention may constitute the plurality of wedge-shaped fibers around the radial fiber, and the splittable composite fiber is preferably such that the composition according to the present invention constitutes the plurality of wedge-shaped fibers around the radial fiber. The material different from the composition according to the present invention is preferably the polymer 2, more preferably polypropylene (PP), polyethylene terephthalate (PET), polytrimethylene terephthalate (PTT), polybutylene terephthalate (PBT), polyamide 6 (PA6), or polyamide 66 (PA66).

With regard to the sea-island composite fiber, the sea fiber is removed by chemical treatment of the fiber containing the composition according to the present invention to provide an ultrafine fiber composed of a plurality of island fibers. The composition according to the present invention may constitute the island fibers, and the material different from the composition according to the present invention may constitute the island fibers. Preferably, the composition according to the present invention constitutes the island fibers in the sea-island composite fiber. The material different from the composition according to the present invention is preferably the polymer 2, more preferably polypropylene (PP), polyethylene terephthalate (PET), polytrimethylene terephthalate (PTT), polybutylene terephthalate (PBT), polyamide 6 (PA6), or polyamide 66 (PA66).

Examples of the form of the fiber containing the composition according to the present invention include a long fiber (multifilament, monofilament) and a short fiber (staple). A long fiber (multifilament, monofilament) may be directly used, or may be formed into a false-twisted yarn by false-twisting, or formed into a commingled yarn by air mingling or other processes. A short fiber (staple) may be directly used, or may be formed into a spun yarn by spinning, or formed into a blended yarn by blending and spinning. The fiber containing the composition according to the present invention may be in the form of a core-spun yarn in which a short fiber is combined with a long fiber, or may be twisted into a twisted yarn, a cross-twisted yarn, or a covering yarn.

The fiber containing the composition according to the present invention may contain additives, such as antioxidants, pigments, dyes, antibacterial agents, deodorants, antistatic agents, flame retardants, inert fine particles, light-absorbing heat-generating materials, moisture-absorbing heat-generating materials, and far-infrared heat-generating materials. The additives can be added during or after spinning of the composition according to the present invention.

A light-absorbing heat-generating fiber containing the composition according to the present invention and a light-absorbing heat-generating material is a fiber in which a light-absorbing heat-generating material, such as zirconium carbide, which absorbs sunlight with specific wavelengths and converts it into heat energy at high efficiency, is fixed to the inside and surface of the fiber. A fabric composed of the light-absorbing heat-generating fiber when exposed to sunlight can increase in the temperature of the exposed fabric surface compared to a fabric composed of a fiber that contains no light-absorbing heat-generating material.

A moisture-absorbing heat-generating fiber containing the composition according to the present invention and a moisture-absorbing heat-generating material is a fiber that generates heat of adsorption during moisture absorption. The moisture-absorbing heat-generating fiber has the effect of releasing moisture in a low-humidity environment to control the temperature and humidity inside clothes.

A far-infrared processed fiber containing the composition according to the present invention and a far-infrared-emitting material is a fiber in which a high far-infrared-emitting ceramic or the like is fixed to the inside and surface of the fiber. The far-infrared processed fiber has the effect of heat retention through far-infrared radiation.

The fabric or cloth composed of the fiber containing the composition according to the present invention may be any one of woven fabrics, knitted fabrics, and nonwoven fabrics. Examples of the woven pattern include a plane weave, a twill weave, a satin weave, and their variations, a dobby weave, and a Jacquard weave. Examples of the knitting pattern include weft knitting, warp knitting, and their variations.

The fabric or cloth composed of the fiber containing the composition according to the present invention may have any weight and gauge.

The fabric or cloth composed of the fiber containing the composition according to the present invention may be composed only of the fiber containing the composition according to the present invention, or may be produced by inter-weaving or inter-knitting the fiber containing the composition according to the present invention with a different fiber. Examples of the different fiber include inorganic fibers, such as carbon fibers, inorganic fibers, and metal fibers; refined fibers, such as Lyocell; regenerated fibers, such as rayon, cupra, and polynosic; semi-synthetic fibers, such as acetates, triacetates, and promix; synthetic fibers, such as acrylic, acrylic-based fibers, vinylon, vinylidene, polyvinyl chloride, polyethylene, polychlal, aramid, polybutylene terephthalate (PBT), polytrimethylene terephthalate (PTT), polyamide 66 (PA66), and urethane; natural fibers, such as cotton, cellulose fibers, Cannabis (e.g., flax, ramie, hemp, jute), and other plant fibers, or wool, and animal fibers, such as sheep wool, animal hairs (e.g., angora, cashmere, mohair, alpaca, and camel), and silk; and bird feathers, such as down and feathers. The proportion of the fiber containing the composition according to the present invention used is preferably, but not necessarily, from 20 wt% to 100 wt%.

A nonwoven fabric composed of the fiber containing the composition according to the present invention may contain a heat-sealing binder fiber. The heat-sealing binder fiber is preferably a core-sheath, laminated, or other type of composite fiber composed of the composition according to the present invention and a material having a melting point different from that of the composition according to the present invention. The material having a melting point different from that of the composition according to the present invention is preferably the polymer 2, more preferably polypropylene (PP), polyethylene terephthalate (PET), polytrimethylene terephthalate (PTT), polybutylene terephthalate (PBT), polyamide 6 (PA6), or polyamide 66 (PA66).

When a nonwoven fabric composed of the fiber containing the composition according to the present invention contains a heat-sealing binder fiber, the content of the heat-sealing binder fiber is preferably from 5 to 20 wt% of the entire fiber of the nonwoven fabric.

From the viewpoint of, for example, lightness, soft touch, and clothing fashionability, the weight and thickness of the nonwoven fabric composed of the fiber containing the composition according to the present invention are preferably 100 $g/m^2$ or less and 5 mm or less, respectively, more preferably 60 $g/m^2$ or less and 5 mm or less, respectively.

A method for producing the nonwoven fabric composed of the fiber containing the composition according to the present invention typically includes a web forming step and a web bonding step. Examples of the web forming step include a dry method, a wet method, a spun-bonding method, a melt-blown method, and an air-laid method. Examples of the web bonding step include a chemical bonding method, a thermal bonding method, a needle punching method, and a hydroentangling method.

The polymer and composition according to the present invention and the molded body thereof may have any shape because they have good moldability. Examples of the shape include a sphere, a cuboid (cube), a globule (bead), a cylinder (pellet), a powder, a bar (stick), a needle, a filament (fiber), a strand, a thread, a string, a cord, a rope, a plate, a sheet, a membrane (film), a woven fabric, a nonwoven fabric, a box (capsule), a foam, and any other three-dimensional shapes. The shape can be selected in accordance with the purpose of use.

The molded body in the form of sphere, cuboid (cube), globule (bead), cylinder (pellet), or powder may have a core-shell structure in which the polymer according to the present invention is covered with a material different from the polymer according to the present invention, or may have a core-shell structure in which the material different from the polymer according to the present invention is covered with the polymer according to the present invention. Examples of the material different from the polymer according to the present invention include polymers different from the polymer according to the present invention, metals, and inorganic materials other than metals.

The molded body in the form of bar (stick), needle, filament (fiber), strand, thread, string, cord, or rope may have a core-sheath structure in which the polymer according to the present invention is covered with a material different from the polymer according to the present invention, or may have a core-sheath structure in which a material different from the polymer according to the present invention is covered with the polymer according to the present invention.

The molded body in the form of plate, sheet, membrane (film), woven fabric, nonwoven fabric, box, or capsule may have a multilayer structure in which one or both surfaces of the polymer according to the present invention are covered with a material different from the polymer according to the present invention, or may have a multilayer structure in which one or both surfaces of a material different from the polymer according to the present invention are covered with the polymer according to the present invention.

The molded body in the form of foam and

the molded body in a form different from foam or a material different from the polymer according to the present invention

may form a core-shell structure, a core-sheath structure, or a multilayer structure.

Coating Film

A coating film containing the polymer 1 or the composition according to the present invention can be produced by applying the polymer 1 or the composition according to the present invention to a substrate and drying it, or by dissolving the polymer 1 or the composition according to the present invention in a solution and then applying the solution to a substrate.
Examples of methods for applying the polymer 1 or the composition according to the present invention include, but are not limited to, dip coating, roll coating, bar coating, screen printing, doctor blade coating, spin coating, spray coating, die coating, vapor deposition, and other coating methods.
The medium for dissolving the polymer 1 or the composition according to the present invention is not limited as long as the polymer or the resin composition is dissolved or dispersed in the medium. The medium may be a solvent, a monomer, or a combination of a solvent and a monomer.
Examples of the solvent include water, methyl alcohol, ethyl alcohol, normal propyl alcohol, isopropyl alcohol, normal butyl alcohol, isobutyl alcohol, tert-butyl alcohol, toluene, xylene, methyl acetate, ethyl acetate, propyl acetate, isopropyl acetate, butyl acetate, isobutyl acetate, methyl propionate, acetone, methyl ethyl ketone, methyl isobutyl ketone, formaldehyde, normal hexane, cyclohexane, cyclohexanone, 1,4-dioxane, 2-ethoxyethanol, ethylene glycol, ethylene glycol monomethyl ether, ethylene glycol monoethyl ether, ethylene glycol dimethyl ether, dichloromethane, dichloroethane, N,N-dimethylformamide, tetrahydrofuran, N-methylpyrrolidone, chloroform, ortho-dichlorobenzene, and other solvents. Examples of the monomer include (meth)acrylic monomers, such as methyl acrylate, methyl methacrylate, and benzyl methacrylate; epoxy monomers; vinyl monomers, such as styrene and vinyltoluene, silane coupling agents, such as trimethoxysilane and triethoxysilane; polymerizable unsaturated monomers; polyols; and polyisocyanates.
The medium may contain a combination of two or more solvents or monomers, or the medium may contain, dissolved therein, a compound other than the polymer 1 or the composition according to the present invention.
Examples of the substrate to which the coating film of the present invention is applied include inorganic materials, such as silicon, iron, copper, aluminum, zinc, and other metals, alloys, ceramics, stainless steel, and glass; thermoplastic resins, such as acrylic resin, polycarbonate resin, polyester resin, styrene resin, acrylic-styrene copolymer resin, cellulose resin, polyolefin resin, and polyvinyl alcohol; organic materials, such as phenolic resin, urea resin, melamine resin, epoxy resin, unsaturated polyester, silicone resin, and urethane resin; and wood, stone, cement, concrete, fiber, fabric, paper, and leather. The coating film may have a single layer or multiple layers.
Examples of the shape of the substrate to which the coating film of the present invention is applied include a flat plate, a film, a curved shape, a sphere, a cuboid (cube), a globule (bead), a cylinder (pellet), a powder, a bar (stick), a needle, a filament (fiber), a strand, a thread, a string, a cord, a rope, a plate, a sheet, a membrane (film), a woven fabric, a nonwoven fabric, a box (capsule), a foam, and any other three-dimensional shapes.

Multilayer Coating Film

The coating film of the present invention may be a multilayer coating film including a layer composed of the polymer 1 or the composition according to the present invention and a layer different from that layer. In the multilayer coating film, the layer composed of the polymer 1 or the composition according to the present invention is preferably at least one surface layer of the multilayer coating film. Examples of the material of the layer different from the layer composed of the polymer 1 or the composition according to the present invention include resins different from the polymer 1 or the composition according to the present invention, and primers. The multilayer coating film can be produced by applying a layer composed of the polymer 1 or the composition according to the present invention and a layer different from that layer in this order to the substrate.
With regard to the coating film according to the present invention, preferably, the dispersion force component $\gamma^d$ of the surface free energy is 25 mN/m or less, or the sum of the dipole force component $\gamma^p$ and the hydrogen bond component $\gamma^h$ of the surface free energy is 30 mN/m or more, more preferably, $\gamma^d$ is 20 mN/m or less, or the sum of $\gamma^p$ and $\gamma^h$ is 40 mN/m or more, still more preferably, $\gamma^d$ is 16 mN/m or less, or the sum of $\gamma^p$ and $\gamma^h$ is 80 mN/m or more. The dispersion force component $\gamma^d$ of the surface free energy of the coating film according to the present invention is typically 0 mN/m or more.
The composition, the molded body, the fiber, the coating film, and a paint each containing the polymer 1 have good hydrophilicity and oil repellency. In one aspect, they are also excellent in at least one property selected from antifouling performance, slidability, antistatic properties, heat resistance, chemical resistance, solvent resistance, low

chemical permeability, flame retardancy, electrical properties, and durability. They can thus be used in various applications that require the above properties.

In one aspect, the molded body of the present invention has good antifouling performance and thus is suitable for use in applications, such as textile products, kitchen utensils and their components, bathroom/washroom/toilet products and their components, housing equipment components, water storage equipment components, home appliances and their components, medical products and their components, automotive products and their components, packaging materials, agricultural materials and their components, fishing equipment and its components, civil engineering materials and their components, components of road traffic facilities, and components of power generation facilities and port/harbor facilities.

Examples of articles to which the molded body containing the polymer 1 or the composition according to the present invention can be applied include the following:

kitchen components and kitchen utensils, such as dishware, various cooking utensils, storage containers, water purification pitchers, water purifiers, drains, drain traps, sink corner strainers, various sink components, water storage pitchers insulated pitchers, plastic wrap, induction cookers, dish racks, water supply systems, faucets, kitchen hoods, and coffee grinders;
washbasin components, such as washbasins, sinks, bathroom vanities, mirrors, drains, drain traps, drain plugs, hair catchers, and drain traps;
bathroom components, such as bathroom walls, bathroom floors, bathroom doors, counters, bathtubs, faucets, mirrors, ventilation fans, bathroom dryers, bath covers, and showers;
laundry components, such as washing machines, dryers, hoses, washing drums, drain traps for washing machines, and drains for washing machines;
toilet components, such as toilet seats, toilet seat lids, toilet bowls, water tanks, remote controllers, bidet toilet seats, bidet nozzles, and portable Washlet (registered trademark);
various pipes;
various gaskets;
various cocks;
various nets;
various water storage units and facilities, such as water storage tanks, water reservoirs, solar water heaters, water tanks, and pools;
breeding and aquaculture equipment, such as aquaculture tanks, display/aquarium tanks, assembly tanks, circulation filtration equipment, automatic feeders, heating/cooling units, thermometers, tank fans, air supply equipment, oxygen generators, fish labeling tags, foam separators, stirring paddles, bottom activators, hatching devices, aqua frames, and pumps;
live fish transport equipment, such as live fish tanks, containers, blowers, and cooling devices;
various packaging materials, such as food packaging materials and cosmetic packaging materials;
various indoor fixtures, such as ventilation fans, window frames, window and door screens, sashes, window glass, artificial marble, tatami mats, wooden floors, lighting, carpets, wallpaper, desktops, residential interior walls, residential ceilings, and drains;
residential outdoor infrastructures, such as power transmission lines, antennas, roofing materials, residential exterior walls, utility poles, and buried piping;
various electrical equipment and associated accessories, such as air conditioners, air conditioner drain pans, air conditioner outdoor units, various hoses, various remote controllers, heat exchangers, humidifiers, dryers, refrigerators, dishwashers, dish dryers, washing machines, dryers, vacuum cleaners, drink servers, coffee servers, microwave ovens, irons, steamers, aroma diffusers, home cleaning machines, pressure washers, pots, wearable devices, printers, and liquid absorbers for image forming devices;
various medical articles, such as nasal feeding tubes, wound contact layers, catheters, tube stents, pacemaker shells, heart valves, orthopedic implants, periodontal implants, orthodontic braces, other orthodontic appliances, dentures, dental crowns, face masks, contact lenses, intraocular lenses, soft tissue implants, surgical instruments, sutures, cochlear implants, tympanostomy tubes, shunts, postoperative drainage tubes, drainage devices, endotracheal tubes, heart valves, adhesive plasters, wound dressings, other implantable devices, and other indwelling devices, cell culture substrates, artificial skin, artificial muscles, and cardiomyocyte sheets;
fishing equipment, such as vessels, ship bottom paints, ropes, fishing nets, fishing gear, floats, buoys, fish tanks, fishing hooks, floats, fishing lines, floating balls, containers, buckets, longlines, wires, and underwater lights;
underwater structures, such as water supply and discharge ports in thermal and nuclear power plants;
seawater utilization equipment, such as seawater pumps;
power generation facilities and port/coastal facilities, such as megafloats, coastal roads, and undersea tunnels;
components of power generation facilities, such as wind turbine blades, offshore wind turbines, solar panels, solar cell

covers, heat exchangers, and heat dissipating fins for heat exchangers;
civil engineering facilities, such as sediment diffusion prevention membranes for various marine civil engineering works in canals and waterways;
vehicle articles and vehicle components, such as automotive window glass, vehicle bodies, seats, automotive coatings, glazing agents, headlamp lenses, door mirrors, camera lenses, radiator fins, evaporators, pop-up displays, front windows, and motorcycle bodies;
articles for public vehicles, such as railway car bodies, bus bodies, seats, vehicle floors, window glass, handrails, hanging straps, and on-board toilets;
articles for aircraft, such as aircraft airframes, seats, cabin floors, window glass, and aircraft toilets;
outdoor facilities, such as bridges, road mirrors, dust covers, signboards, traffic signs, various display devices, advertising towers, soundproof walls, outdoor advertisements, bridges, guardrails, tunnels, septic tanks, cooling towers, and drains;
separation tanks and oil stop tanks, such as oil-water separation tanks, grease traps, grease interceptors, oil traps, oil interceptors, and drainage pits;
agricultural materials, such as plant pods, soil, irrigation tubes, piping, greenhouses, float panels, seedling trays, seedling sponges, hydroponic nutrient supply channels, vases, and planters;
separation membranes, such as oil-water separation membranes, gas separation membranes, reverse osmosis membranes, nanofiltration membranes, ultrafiltration membranes, and microfiltration membranes;
textile articles, such as clothing, handkerchiefs, aprons, pillows, bedding, mattresses, blankets, bed sheets, curtains, tablecloths, towels, duvet covers, and pillowcases;
robots and robot components; and
display devices, such as televisions, smartphones, tablet PCs, PCs, touch panel displays, and VR goggles.

[Measurement of Amount of Biofilm Formation]

A method for measuring the amount of biofilm formation on a material containing the polymer or composition according to the present invention includes a step of forming a biofilm on the material and a step of quantifying the formed biofilm.

The biofilm used for the measurement can be collected from biofilms present in various environments and directly used. Bacteria known to form biofilms can be used in the measurement as a single species or as a mixture of multiple species. The types of bacteria contained in biofilms depend on the environment in which the biofilms form, and the types of bacteria also depend on the time and environmental conditions in which the biofilms are collected. Therefore, even if the same material is used in the measurement, the results may vary in each measurement. Therefore, in the evaluation of biofilm formation on a material, a single or a mixture of only a few types of bacteria known to form biofilms is preferably used in the measurement from the viewpoint of quantitative performance and reproducibility.

Any bacteria that have the ability to form biofilms can be used to measure the amount of biofilm formation. Examples of bacteria used for the measurement include Pseudomonas spp., Brevundimonas spp., Methylobacterium spp., Bacillus spp., and Staphylococcus spp. From the viewpoint of quantitative performance and reproducibility, bacteria that are easy to culture, are formed on a material in large quantities, and do not detach from the material under weak water flow are preferably used in the measurement. Staphylococcus epidermidis ATCC35984 or Brevundimonas diminuta NBRC14213 are preferred as bacteria having the above properties.

A method for forming a biofilm on a material may involve forming a biofilm on a material by placing the material in an area where biofilms form. Alternatively, the material may be immersed in a culture solution using a common microbial culture technique to form a biofilm on the material. In the measurement of the amount of biofilm formation, a common microbial culture method is preferably used, and the following conditions are more preferably employed from the viewpoint of quantitative performance and reproducibility: the temperature, culture medium, and other conditions are kept constant, and the culture vessel and culture medium used to form a biofilm is sterilized to prevent contamination with bacteria.

The culture conditions for forming the biofilm on the material can be appropriately set as long as the physical conditions, such as temperature, aeration, and shaking or still standing, the nutritional conditions, such as medium composition, concentration, and pH, the material and size of vessels used for culture, and other conditions are suitable for bacteria growth. The shape and size of the material used to form the biofilm can be appropriately set as long as the material can be stored in the culture vessel and immersed in the culture solution.

The amount of biofilm formed on the material can be measured either while the biofilm is attached to the material or after the biofilm is collected from the material. Examples of biofilm detection methods include a method in which the number of bacteria in a suspension of biofilm in water is counted, and a method in which the biofilm is stained with a staining reagent. From the viewpoint of easy measurement operation, quantitative performance, and reproducibility, biofilm staining is preferred. Examples of the reagent used to stain the biofilm include crystal violet, methylene blue, fuchsin, acridine orange, DAPI, and Alcian blue. From the viewpoint of easy measurement operation, quantitative performance,

and reproducibility, crystal violet is preferred.

## EXAMPLES

The present invention will be described in more detail by way of Examples and Comparative Examples, but the present invention is not limited to these.

### I. Numbers of Structural Units A Derived from Ethylene, Structural Units B Represented by Formula (1), Structural Units C Represented by Formula (2), and Structural Units D Represented by Formula (3) or Formula (4) in Polymer 1 (Unit: %)

The nuclear magnetic resonance spectrum (hereafter, NMR spectrum) of the polymer was measured by using a nuclear magnetic resonance spectrometer (NMR) under the measurement conditions described below. The amounts (number [mol%] and weight [wt%]) of the structural unit A, the structural unit B, the structural unit C, and the structural unit D were then determined in accordance with the method described above.

Hydrogen Nuclear Magnetic Resonance ($^{1}H$-NMR) Measurement Conditions

Device: JNM-AL400 available from JEOL Ltd.
Measuring probe: 10 mm auto-tune probe
Measurement solvent: a mixture of 1,2-dichlorobenzene/1,1,2,2-tetrachloroethane-$d_2$ = 50/50 (volume ratio)
Sample concentration: 100 mg/mL
Measurement temperature: 135°C
Number of scans: 256
Pulse width: 45 degrees
Pulse repetition time: 5 seconds
Standard: tetramethylsilane

Carbon Nuclear Magnetic Resonance ($^{13}C$-NMR) Measurement Conditions

Device: AVANCE III 600HD available from Bruker BioSpin
Measurement probe: 10 mm CryoProbe
Measurement solvent: a mixture of 1,2-dichlorobenzene/1,1,2,2-tetrachloroethane-$d_2$ = 50/50 (volume ratio)
Sample concentration: 100 mg/mL
Measurement temperature: 135°C
Measurement method: proton decoupling method
Number of scans: 5000
Pulse width: 45 degrees
Pulse repetition time: 4 seconds
Standard: tetramethylsilane

### II. Weights of Structural Units A Derived from Ethylene, Structural Units B Represented by Formula (1), Structural Units C Represented by Formula (2), and Structural Units D Represented by Formula (3) or Formula (4) in Polymer 1 (Unit: wt%)

The numbers of the structural units A derived from ethylene, the structural units B represented by formula (1) above, the structural units C represented by formula (2) above, and the weight percentage of the structural units D represented by formula (3) above or formula (4) above in the polymer were each calculated in accordance with the methods described above.

III. Polystyrene-Equivalent Average Molecular Weights (PS-Equivalent Number Average Molecular Weight Mn, PS-Equivalent Weight Average Molecular Weight Mw, PS-Equivalent z-Average Molecular Weight Mz) of Polymer of Present Invention (Unit: g/mol)

The polystyrene-equivalent average molecular weight of the polymer was measured by using a gel permeation chromatography (GPC) system and software under the measurement conditions described below.

GPC System and Software

Liquid feed pump: LC-20AD (Shimadzu Corporation)
Degasser: DGU-20A3 (Shimadzu Corporation)
Auto sampler: SIL-20A HT (Shimadzu Corporation)
Column oven: CTO-20A (Shimadzu Corporation)
Differential refractive index detector (RID): RID-10A (Shimadzu Corporation)
System controller: CBM-20A (Shimadzu Corporation)
Measurement/analysis software: LC solution ver. 1.24 SP1

GPC Measurement Conditions
GPC column: Plus Pore series Poly Pore 7.5mm I.D. × 300 mm (Agilent Technologies), 2 columns
Mobile phase: tetrahydrofuran (Kanto Chemical Co., Inc., special grade, no stabilizer)
Flow rate: 1 mL/min
Column oven temperature: 35°C
Detection: refractive index detector (RID)
RID cell temperature: 35°C
Sample solution injection volume: 100 μL
Standard for GPC column calibration: PStQuick Kit-H (Tosoh Corporation)
Filter for filtration: Millex-LG, pore size 0.2 μm, hydrophilic, PTFE, filter diameter 25 mm (Merck)

Sample Solution Preparation Conditions

Solvent: toluene (Kanto Chemical Co., Inc., special grade)
Sample solution concentration: 1 mg/mL

Automatic shaker for dissolution: DF-8020 (Tosoh Corporation)

Dissolution conditions: 10 mg of the sample and 10 mL of the solvent are placed in a screw-thread vial, and the screw-thread vial is tightly sealed. The mixture is stirred by using DF-8020 at a stirring speed of 60 reciprocations/min at 80°C for 60 minutes. The mixture is left to stand at room temperature, and filtered through a filter for filtration.

IV. Contact Angle for Molded Body in Air (Unit: °)

The contact angle for the molded body (sheet) in air was measured by using an automatic contact angle meter DM-501 (available from Kyowa Interface Science Co., Ltd). Pure water or hexadecane (available from Tokyo Chemical Industry Co., Ltd.) was used as a test liquid. The liquid volume was 2 μL, and the measurement method was the θ/2 method. The smaller the contact angle of pure water in air, the higher the hydrophilicity. The larger the contact angle of hexadecane in air, the higher the oil repellency.

V. Contact Angle for Molded Body in Water (Unit: °)

The contact angle in water was measured by attaching a liquid, with an inverted needle, to the molded body (sheet) fixed in pure water using an automatic contact angle meter DM-501 (available from Kyowa Surface Science Co., Ltd). Hexadecane (available from Tokyo Chemical Industry Co., Ltd.) was used as a test liquid. The liquid volume was 2 μL,

and the measurement method was the $\theta/2$ method. The larger the contact angle of hexadecane in water, the higher the oil repellency in water.

VI. Shape Transferability

The polymer was press-molded using the methods described in Examples and Comparative Examples and cut into 30 mm long $\times$ 30 mm wide $\times$ 1 mm thick to prepare a test piece. The test piece was placed on an aluminum plate 50 mm long $\times$ 50 mm wide $\times$ 0.3 mm thick and a release PET 50 mm long $\times$ 50 mm wide $\times$ 0.1 mm thick, and the resulting material was disposed on the press plate of a hot press molding machine heated to 60°C, and preheated for 5 minutes. Then, a stainless steel mesh (6 mesh) 30 mm long $\times$ 30 mm wide, a release PET 50 mm long $\times$ 50 mm wide $\times$ 0.1 mm thick, and an aluminum plate 50 mm long $\times$ 50 mm wide $\times$ 0.3 mm thick were placed in this order on the molded body, pressed at 0.1 MPa for 30 seconds, and then cooled on the press plate at 30°C for 5 minutes. The shape transferability was rated "A" when 90% or more of the openings of the mesh were transferred, and rated "B" when less than 90% of the openings of the mesh were transferred.

VII. Biofilm Formation Evaluation

The polymer was molded using the methods described in Examples and Comparative Examples and cut into 20 mm long $\times$ 40 mm wide $\times$ 1 mm thick to prepare a test piece. The test piece was washed with a diluted neutral detergent to remove dirt on the surface, and immersed in ethanol for a few seconds for sterilization to eliminate bacteria on the surface. The test piece was attached to the drain cup of a drain in a large public bath used by about 100 people per day, and left to stand for two days to allow slime to form.

VIII. Preparation of Solution for Measurement

· Biofilm staining solution (0.2 mass% crystal violet solution: CV solution)

Crystal violet (4 g) (available from Tokyo Chemical Industry Co., Ltd.) was added to a 2000 mL capacity polyethylene bottle, and then 2000 mL of pure water was added to dissolve crystal violet to provide a biofilm staining solution.

· Stained biofilm eluent (2.0 mass% sodium dodecyl sulfate solution: SDS solution)

Sodium dodecyl sulfate (40 g) (available from Tokyo Chemical Industry Co., Ltd.) was added to a 2000 mL capacity polyethylene bottle, and then 2000 mL of pure water was added to dissolve sodium dodecyl sulfate to provide a stained biofilm eluent.

IX. Measurement of Amount of Biofilm Formation

About 500 mL of pure water was added to a 500 mL beaker, and the removed test piece was then immersed in the pure water and gently shaken to wash the test piece. The washed test piece was removed, and the excess water on the test piece was absorbed with a paper towel.

The biofilm staining solution (100 mL) was added to a 100 mL capacity plastic bottle. The washed test piece was immersed in the biofilm staining solution for 30 minutes for staining. The test piece was removed from the biofilm staining solution, and the excess biofilm staining solution on the test piece was absorbed with a paper towel.

About 500 mL of pure water was added to a 500 mL beaker, and the removed test piece was then immersed in the pure water to wash the test piece. The washed test piece was removed, and the excess water on the test piece was absorbed with a paper towel.

The stained biofilm eluent (100 mL) was added to a 100 mL capacity plastic bottle. The stained test piece was immersed in the stained biofilm eluent for 30 minutes to elute crystal violet from the test piece. The obtained eluate (10 ml) was added to a 100 mL capacity plastic bottle, and 90 ml of pure water was further added to provide a stained-biofilm diluted eluate. The obtained diluted eluate was placed in a 1 mL capacity spectrometer cell, and the absorbance of the diluted eluate at a wavelength of 570 nm was measured using UV-visible spectrophotometers (Shimadzu Corporation, UV2450 (in Examples A1 to A4, B1, and B2, Comparative Examples A1, A2, B1, and B2) and UV3150 (in Examples B3 to B5, Comparative Examples B3 to B5)). A higher absorbance indicates a larger amount of biofilm formation.

When the test piece was made of a homopolymer, the "biofilm reduction rate 1" of the polymer of each Example was determined using formula ($\delta$1) below from the above absorbance (hereinafter referred to as "A (molded body 1)") of the test piece of each Example and the surface area "S (molded body 1)" of the test piece of each Example, and the above

absorbance (hereinafter, "A (A-1)") of the test piece of A-1 and the surface area "S (A-1)" of the test piece of A-1.
[Math. 7]

$$\text{Biofilm reduction rate 1 (\%)} = \left(1 - \frac{\text{A (molded body 1) / S (molded body 1)}}{A\ (A-1)\ /S\ (A-1)}\right) \times 100 \qquad \text{Formula } (\delta 1)$$

When the test piece had a composition containing G-1 as the polymer 2, the "biofilm reduction rate 2" of the composition of each Example was determined using formula (δ2) below from the above absorbance (hereinafter referred to as "A (molded body 2)") of the test piece of each Example and the surface area "S (molded body 2)" of the test piece of each Example, and the above absorbance (hereinafter, "A (G-1)") of a test piece obtained from a sheet (CeB1-2) made of G-1 below contained in the composition of each Example and the surface area "S (G-1)" of the test piece obtained from the sheet (CeB1-2) made of G-1.
[Math. 8]

$$\text{Biofilm reduction rate 2 (\%)} = \left(1 - \frac{\text{A (molded body 2) / S (molded body 2)}}{A\ (G-1)\ /S\ (G-1)}\right) \times 100 \qquad \text{Formula } (\delta 2)$$

When the test piece had a composition containing G-2 as the polymer 2, the "biofilm reduction rate 3" of the composition of each Example was determined using formula (δ3) below from the above absorbance (hereinafter referred to as "A (molded body 3)") of the test piece of each Example and the surface area "S (molded body 3)" of the test piece of each Example, and the above absorbance (hereinafter, "A (G-2)") of a test piece obtained from a sheet (CeB2-2) made of G-2 below contained in the composition of each Example and the surface area "S (G-2)" of the test piece obtained from the sheet (CeB2-2) made of G-2.
[Math. 9]

$$\text{Biofilm reduction rate 3 (\%)} = \left(1 - \frac{\text{A (molded body 3) / S (molded body 3)}}{A\ (G-2)\ /S\ (G-2)}\right) \times 100 \qquad \text{Formula } (\delta 3)$$

When the test piece had a composition containing G-4 as the polymer 2, the "biofilm reduction rate 4" of the composition of each Example was determined using formula (54) below from the above absorbance (hereinafter referred to as "A (molded body 4)") of the test piece of each Example and the surface area "S (molded body 4)" of the test piece of each Example, and the above absorbance (hereinafter, "A (G-4)") of a test piece obtained from a sheet (CeB4-2) made of G-4 below contained in the composition of each Example and the surface area "S (G-4)" of the test piece obtained from the sheet (CeB4-2) made of G-4.
[Math. 10]

$$\text{Biofilm reduction rate 4 (\%)} = \left(1 - \frac{\text{A (molded body 4) / S (molded body 4)}}{A\ (G-4)\ /S\ (G-4)}\right) \times 100 \qquad \text{Formula } (\delta 4)$$

When the test piece had a composition containing G-6 as the polymer 2, the "biofilm reduction rate 5" of the composition of each Example was determined using formula (δ5) below from the above absorbance (hereinafter referred to as "A (molded body 5)") of the test piece of each Example and the surface area "S (molded body 5)" of the test piece of each Example, and the above absorbance (hereinafter, "A (G-6)") of a test piece obtained from a sheet (CeB6-2) made of G-6 below contained in the composition of each Example and the surface area "S (6-4)" of the test piece obtained from the sheet (CeB6-2) made of G-6.
[Math. 11]

$$\text{Biofilm reduction rate 5 (\%)} = \left(1 - \frac{\text{A (molded body 5) / S (molded body 5)}}{A\ (G-6)\ /S\ (G-6)}\right) \times 100 \qquad \text{Formula } (\delta 5)$$

When the test piece had a composition containing G-7 as the polymer 2, the "biofilm reduction rate 6" of the composition of each Example was determined using formula (56) below from the above absorbance (hereinafter referred to as "A (molded body 6)") of the test piece of each Example and the surface area "S (molded body 6)" of the test piece of each Example, and the above absorbance (hereinafter, "A (G-7)") of a test piece obtained from a sheet (CeB7-2) made of G-7 below contained in the composition of each Example and the surface area "S (G-7)" of the test piece obtained from the

sheet (CeB7-2) made of G-7.
[Math. 12]

$$\text{Biofilm reduction rate 6 (\%)} = \left(1 - \frac{A\text{ (molded body 6)} / S\text{ (molded body 6)}}{A\ (G-7)\ / S\ (G-7)}\right) \times 100 \quad \text{Formula } (\delta\ 6)$$

A higher "biofilm reduction rate" indicates a smaller amount of biofilm formation on the test piece relative to the amount of biofilm formation on the sheet made of A-1 below, G-1 below, G-2 below, G-4 below, G-6 below, or G-7 below.

X. Raw Materials

Precursor polymer having structural unit A and structural unit D

A-1: Ethylene-methyl acrylate copolymer

An ethylene-methyl acrylate copolymer A-1 was produced as described below.

The ethylene-methyl acrylate copolymer A-1 was produced by copolymerizing ethylene and methyl acrylate using tert-butyl peroxypivalate as a radical polymerization initiator in an autoclave reactor at a reaction temperature of 195°C and a reaction pressure of 160 MPa. The composition and melt flow rate (MFR) of the obtained copolymer A-1 were as described below.

The number of structural units derived from ethylene: 85% (65 wt%, determined in accordance with the above method using 13C-NMR)

The number of structural units derived from methyl acrylate: 15% (35 wt%, determined in accordance with the above method using 13C-NMR)
MFR (measured in accordance with JIS K7210 at a temperature of 190°C and a load of 21 N): 29 g/10 min

Compound β

B-1: α-Butyl-ω-[3-(2-hydroxyethoxy)propyl]polydimethylsiloxane (available from JNC Corporation)

Compound γ

C-1: Polyethylene glycol monomethyl ether 1000 (α-butyl-ω-hydroxypoly(oxyethylene)) [available from Clariant AG]

Catalyst

D-1: Tetra(iso-propyl)orthotitanate [available from Nippon Soda Co., Ltd.]

Additive

F-1: Hexadecyltrimethylammonium chloride [available from Tokyo Kasei Kogyo Co.]

Polymer 2

G-1: Unsaturated polyester [Rigolac TR-254 M-LVK, available from Showa Denko K.K.; Rigolac TR-254 M-LVK contains styrene].
G-2: Polyvinyl chloride [ZEST 1000H, available from Shin Dai-Ichi Vinyl Corporation]
G-3: Polymethyl methacrylate [Sumipex MM, available from Sumitomo Chemical Co., Ltd]
G-4: Polypropylene [Sumitomo Noblen D101, available from Sumitomo Chemical Co., Ltd.]
G-5: High-density polyethylene [E8080, available from Keiyo Polyethylene]
G-6: Linear low-density polyethylene [Sumikathene E FV101, available from Sumitomo Chemical Co., Ltd.]
G-7: Acrylonitrile-butadiene-styrene copolymer [KRALASTIC SR, available from NIPPON A&L INC.]

Curing Agents

H-1: PERMEK N [available from NOF Corporation]
H-2: 2,2'-Azobis(isobutyronitrile) [available from Tokyo Chemical Industry Co. Ltd.]

Additives

I-1: Polyglykol P41/300 [available from Clariant AG]
I-2: SANWAX 151-P [available from Sanyo Chemical Industries Ltd.]
I-3: H-7579 [available from Sakai Chemical Industry Co., Ltd.]
I-4: Ethylene glycol dimethacrylate [available from Tokyo Chemical Industry Co., Ltd.]
I-5: Terpinolene [available from Tokyo Chemical Industry Co., Ltd.]
I-6: Sodium di(2-ethylhexyl)sulfoammonate [available from Tokyo Chemical Industry Co., Ltd.]
I-7: Sumilizer GP [available from Sumitomo Chemical Co., Ltd.]

XI. Synthesis and Analysis of Polymer

Example A1

(1) Synthesis and Analysis of Polymer (ex1-1)

A 0.5 L-capacity separable flask equipped with a stirrer and a finger baffle was purged with nitrogen gas, and 60.0 g of A-1, 14.97 g of B-1, 134.73 g of C-1, and 7.98 g of F-1 were then added to the separable flask. The oil bath temperature was set to 130°C, and the mixture was heated and stirred under a reduced pressure of 10 kPa for 1.5 hours. Thereafter, 3.55 g of D-1 was added to the mixture in a nitrogen gas atmosphere. The oil bath temperature was set to 140°C, and the mixture was heated and stirred under a reduced pressure of 3 kPa for 25 hours to provide a polymer (ex1-1) (ethylene-2-(3-$\alpha$-butyl-polydimethylsiloxanyl-propoxy)ethyl acrylate-methoxypolyethylene glycol acrylate-methyl acrylate copolymer). The ratio of the structural units of the polymer was analyzed by the method described above. The analysis results are shown in Table 1.

(2) Preparation of Test Piece Composed of Polymer (ex1-1)

Example AlThe polymer (ex1-1) obtained in (1) was placed in the frame of a spacer 50 mm long $\times$ 50 mm wide $\times$ 1 mm thick, and the spacer was sandwiched between two 0.3 mm-thick aluminum plates, and the outer sides were further sandwiched between two 2 mm-thick stainless steel plates. The resulting material was placed in a hot press molding machine with a press plate set at 140°C. After preheating for 5 minutes, the pressure was increased to 10 MPa and held for 5 minutes, and the material was then cooled at 30°C and 10 MPa for 5 minutes and cooled with dry ice for 5 minutes to prepare a 1 mm-thick sheet (ex1-2).

(3) Measurement of Contact Angle in Air, Measurement of Contact Angle in Water, Shape Transferability, and Biofilm Reduction Rate Evaluation

The contact angle of pure water and hexadecane in air, the contact angle of hexadecane in water, shape transferability, and biofilm reduction rate (using mathematical formula ($\delta$1)) of the sheet (ex1-2) obtained in (2) above were evaluated by using the methods described above. The evaluation results are shown in Table 1.

Example A2

(1) Synthesis and Analysis of Polymer (ex2-1)

A polymer (ex2-1) (ethylene-2-(3-$\alpha$-butyl-polydimethylsiloxanyl-propoxy)ethyl acrylate-methoxypolyethylene glycol acrylate-methyl acrylate copolymer) was produced in the same manner as in Example A1(1), except that the amount of B-1 used was changed to 29.94 g, and the amount of C-1 used was changed to 119.76 g. The ratio of the structural units of the polymer was analyzed by the method described above. The analysis results are shown in Table 1.

(2) Preparation of Test Piece Composed of Polymer (ex2-1)

A test piece (ex2-2) was prepared in the same manner as in Example A1 (2), except that the polymer (ex1-1) was changed to a polymer (ex2-1).

(3) Measurement of Contact Angle in Air, Measurement of Contact Angle in Water, Shape Transferability, and Biofilm Reduction Rate Evaluation

Using the sheet (ex2-2) obtained in (2) above, the contact angle of pure water and hexadecane in air, the contact angle of hexadecane in water, the shape transferability, and the biofilm reduction rate (using mathematical formula (δ1)) were evaluated in the same manner as in Example A1. The evaluation results are shown in Table 1.

Example A3

(1) Synthesis and Analysis of Polymer (ex3-1)

A polymer (ex3-1) (ethylene-2-(3-α-butyl-polydimethylsiloxanyl-propoxy)ethyl acrylate-methoxypolyethylene glycol acrylate-methyl acrylate copolymer) was produced in the same manner as in Example A1(1), except that the amount of B-1 used was changed to 14.97 g, and the amount of C-1 used was changed to 59.88 g. The ratio of the structural units of the polymer (ex3-1) was analyzed by the method described above. The analysis results are shown in Table 1.

(2) Preparation of Test Piece Composed of Polymer (ex3-1)

A test piece (ex3-2) was prepared in the same manner as in Example A1 (2), except that the polymer (ex1-1) was changed to a polymer (ex3-1).

(3) Measurement of Contact Angle in Air, Measurement of Contact Angle in Water, Shape Transferability, and Biofilm Reduction Rate Evaluation

Using the sheet (ex3-2) obtained in (2) above, the contact angle of pure water and hexadecane in air, the contact angle of hexadecane in water, the shape transferability, and the biofilm reduction rate (using mathematical formula (δ1)) were evaluated in the same manner as in Example A1. The evaluation results are shown in Table 1.

Example A4

(1) Synthesis and Analysis of Polymer (ex4-1)

A polymer (ex4-1) (ethylene-2-(3-α-butyl-polydimethylsiloxanyl-propoxy)ethyl acrylate-methoxypolyethylene glycol acrylate-methyl acrylate copolymer) was produced in the same manner as in Example A1(1), except that the amount of B-1 used was changed to 74.85 g, and the amount of C-1 used was changed to 74.85 g. The ratio of the structural units of the polymer was analyzed by the method described above. The analysis results are shown in Table 1.

(2) Preparation of Test Piece Composed of Polymer (ex4-1)

A test piece (ex4-2) was prepared in the same manner as in Example A1 (2), except that the polymer (ex1-1) was changed to a polymer (ex4-1).

(3) Measurement of Contact Angle in Air, Measurement of Contact Angle in Water, Shape Transferability, and Biofilm Reduction Rate Evaluation

Using the sheet (ex4-2) obtained in (2) above, the contact angle of pure water and hexadecane in air, the contact angle of hexadecane in water, the shape transferability, and the biofilm reduction rate (using mathematical formula (δ1)) were evaluated in the same manner as in Example A1. The evaluation results are shown in Table 1.

Example A5

(1) Synthesis and Analysis of Polymer (ex5-1)

A 0.5 L-capacity separable flask equipped with a stirrer and a finger baffle was purged with nitrogen gas, and 60.0 g of A-1, 14.97 g of B-1, and 134.73 g of C-1 were then added to the separable flask. The oil bath temperature was set to 130°C, and the mixture was heated and stirred under a reduced pressure of 10 kPa for 1.5 hours. Thereafter, 3.55 g of D-1 was added to the mixture in a nitrogen gas atmosphere. The oil bath temperature was set to 140°C, and the mixture was heated and stirred under a reduced pressure of 3 kPa for 25 hours to provide a polymer (ex5-1) (ethylene-2-(3-α-butyl-polydimethylsiloxanyl-propoxy)ethyl acrylate-methoxypolyethylene glycol acrylate-methyl acrylate copolymer). The ratio of the structural units of the polymer was analyzed by the method described above. The analysis results are shown in Table 1.

(2) Preparation of Test Piece Composed of Polymer (ex5-1)

A test piece (ex5-2) was prepared in the same manner as in Example A1 (2), except that the polymer (ex1-1) was changed to a polymer (ex5-1).

(3) Measurement of Contact Angle in Air, Measurement of Contact Angle in Water, Shape Transferability, and Biofilm Reduction Rate Evaluation

Using the sheet (ex5-2) obtained in (2) above, the contact angle of hexadecane in water and the shape transferability were evaluated in the same manner as in Example A1. The evaluation results are shown in Table 1.

Comparative Example A1

(1) Synthesis and Analysis of Polymer (ce1-1)

A stirring bar was placed in a 0.2 L-capacity two-necked recovery flask equipped with a three-way cock and dried at 120°C for 3 hours. After the dried recovery flask was purged with nitrogen gas, 1.86 g of 3-α-butyl-polydimethylsiloxanyl-propylmethacrylate (molecular weight 1000, FM-0711, available from JNC Corporation), 8.29 g of polyethylene glycol monomethyl ether methacrylate (molecular weight 100, Blemmer PME-1000, available from NOF Corporation), 0.62 g of methyl methacrylate (available from Tokyo Chemical Industry Co., Ltd.), 0.0128 g of 2,2'-azobis(isobutyronitrile) (available from Tokyo Chemical Industry Co., Ltd.) purified by recrystallization, and 10.8 mL of toluene (available from Kanto Chemical Co., Ltd.) dried with molecular sieves 3A (available from Fujifilm Wako Pure Chemical Corporation) were placed in the recovery flask. The solution was bubbled with nitrogen gas for 30 minutes using a syringe needle. The oil bath was then set to 60°C, and the solution was stirred for 16 hours. The solvent was removed by a rotary evaporator to provide a polymer (ce1-1) ((3-α-butyl-polydimethylsiloxanyl-propyl methacrylate-methoxypolyethyleneglycol methacrylate-methylmethacrylate copolymer). The evaluation results of the polymer are shown in Table 1.

(2) Preparation of Test Piece Composed of Polymer (ce1-1)

A test piece (ce1-2) was prepared in the same manner as in Example A1 (2), except that the polymer (ex1-1) was changed to a polymer (ce1-1).

(3) Measurement of Contact Angle in Air, Measurement of Contact Angle in Water, Shape Transferability, and Biofilm Reduction Rate Evaluation

Using the sheet (ce1-2) obtained in (2) above, the contact angle of pure water and hexadecane in air and the shape transferability were evaluated in the same manner as in Example A1. The evaluation results are shown in Table 1. The contact angle of hexadecane in water and the biofilm reduction rate could not be measured because the sheet disintegrated in water.

Comparative Example A2

(1) Preparation of Test Piece Composed of A-1

A test piece (ce2-2) was prepared in the same manner as in Example A1 (2), except that the polymer (ex1-1) was changed to A-1.

(2)Measurement of Contact Angle in Air, Measurement of Contact Angle in Water, Shape Transferability, and Biofilm Reduction Rate Evaluation

Using the sheet (ce2-2) obtained in (1) above, the contact angle of pure water and hexadecane in air, the contact angle of hexadecane in water, the biofilm reduction rate (using mathematical formula (δ1)), and the shape transferability were evaluated in the same manner as in Example A1. The evaluation results are shown in Table 1.

[Table 1]

| | | Example A1 | Example A2 | Example A3 | Example A4 | Example A5 | Comparative Example A1 | Comparative Example A2 |
|---|---|---|---|---|---|---|---|---|
| Structural unit A | wt% | 20.3 | 18.9 | 30.9 | 21.4 | 19.3 | - | 64.7 |
| Structural unit B | | 7.5 | 15.4 | 17.4 | 33.8 | 15.1 | 37.7 | - |
| Structural unit C | | 67.1 | 61.6 | 39.4 | 39 | 60.9 | 59 | - |
| Structural unit D | | 5.1 | 4.1 | 12.3 | 5.8 | 4.6 | 3.3 | 35.3 |
| Structural unit A | mol% | 84.9 | 84.9 | 84.9 | 84.9 | 84.3 | - | 84.9 |
| Structural unit B | | 0.82 | 1.81 | 1.25 | 3.5 | 1.8 | 30 | - |
| Structural unit C | | 7.34 | 1.25 | 2.83 | 4.05 | 7.24 | 47 | - |
| Structural unit D | | 6.94 | 6.04 | 11 | 7.55 | 6.61 | 33 | 15.1 |
| Addition of F-1 | wt% | 3.61 | 3.61 | 5.45 | 3.61 | 0 | 0 | 0 |
| Contact angle of water in air | deg. | 29 | 24 | 27 | 33 | n.d. | 116 | 90 |
| Contact angle of hexadecane in air | deg. | 25 | 27 | 25 | 26 | n.d. | 53 | 15 |
| Contact angle of hexadecane in water | deg. | 124 | 124 | 137 | 128 | 145 | n.d. | 51 |
| Biofilm reduction rate | % | 48 | 64 | 92 | 93 | n.d. | n.d. | 0 |
| Shape transferability | - | ○ | ○ | ○ | ○ | ○ | × | ○ |
| n.d. = no data | | | | | | | | |

XII. Preparation and Evaluation of Molded Body

Example B1

A solution (exB1-1) was prepared by dissolving 600 mg of the polymer (ex2-1) in 6 mL of styrene (available from Tokyo Chemical Industry Co., Ltd., Ltd.) in a glass vial. To a polyethylene vial, 25 g of G-1, used as a prepolymer, 6 ml of the solution (exB1-1), 250 mg of I-1, used as an additive, and 3 ml of styrene that had been used to wash the inside of the glass vial for the solution (exB1-1) were added and stirred for 30 minutes using a magnetic stirrer. In addition, 250 mg of H-1 was added as a curing agent, and the mixture was stirred for 5 minutes using a magnetic stirrer to provide a solution. The obtained solution was poured into a butyl rubber frame 150 mm long × 150 mm wide × 1 mm thick (inner dimensions: 110

mm long × 110 mm wide × 1 mm thick) placed on a glass plate 200 mm long × 200 mm wide × 5 mm thick, and then another glass plate 200 mm long × 200 mm wide × 5 mm thick was placed on the frame to prepare a cell. The cell was placed in an oven such that one glass plate was positioned on the vertically lower side and the other glass plate was positioned on the vertically upper side, and left to stand at room temperature for 30 minutes. The resulting mixture was then heated at 100°C for 2 hours to polymerize unsaturated polyester and styrene and crosslink them to provide an unsaturated polyester sheet (exB1-2) with a thickness of 1 mm. The unsaturated polyester sheet (exB1-2) is a sheet containing the polymer (ex2-1).

The contact angle of hexadecane in water and biofilm reduction rate (using mathematical formula (δ2)) of the sheet were evaluated. The evaluation results are shown in Table 2.

Example B2

(1) Production of Resin Composition (exB2-1)

In Lab Plastmill (R100, available from Toyo Seiki Co., Ltd.) with a rotor rotating at 150°C and 20 rpm, 93.90 wt% of (G-2), 4.69 wt% of the polymer (ex2-1), 0.47 wt% of the additive (I-2), and 0.94 wt% of the additive (I-3) were placed and plasticized over 4 minutes. The plasticized material was then melt-kneaded at 150°C and 80 rpm for 2 minutes to provide a resin composition (exB2-1).

(2) Production of Sheet (exB2-2)

The resin composition was sandwiched between two 0.1 mm-thick release PET films and placed in the frame of a spacer 50 mm long × 50 mm wide × 1 mm thick such that the resin composition fitted within the frame. The spacer was further sandwiched between 0.5 mm-thick aluminum plates and further sandwiched between two 2 mm-thick stainless steel plates. The resulting sample was placed in a hot press molding machine with a press plate set at 175°C. The pressure was increased to 1 MPa over 5 minutes, and the sample was then cooled at 30°C and 0.5 MPa for 5 minutes to prepare a 1 mm-thick sheet (exB2-2).

The contact angle of hexadecane in water and biofilm reduction rate (using mathematical formula (δ3)) of the sheet were evaluated. The evaluation results are shown in Table 2.

Example B3

A solution (exB3-1) was prepared by dissolving 1.50 g of the polymer (ex2-1) in 13.50 g of methyl methacrylate (Tokyo Chemical Industry Co., Ltd., Ltd.) in a glass vial. After a 0.5 L capacity separable flask equipped with a stirrer was purged with nitrogen, 17.84 g of polymethyl methacrylate (available from Sumitomo Chemical Co., Ltd.) was mixed with 76.55 g of methyl methacrylate (available from Tokyo Chemical Co., Ltd.), used as a prepolymer, 5.00 g of the solution (exB3-1), 0.40 g of I-4, used as an additive, 0.1 g of a solution prepared by dissolving 0.1 g of I-5 in 0.9 g of methyl methacrylate, and 0.2 g of a solution prepared by dissolving 0.4 g of I-6 in 0.6 g of methyl methacrylate. The mixture was stirred at 70°C for 2 hours. When the heating was stopped, and the temperature dropped to room temperature, 0.08 g of H-2 was added as a curing agent, and the mixture was stirred for 15 minutes. The resulting solution was degassed in a vacuum oven at - 0.065 MPa for 15 minutes. The resulting solution was poured into a glass cell including two glass substrates (20 cm long × 20 cm wide × 1 cm thick) and a 1.5 mm-thick polyvinyl chloride tube used as a spacer between the glass substrates, and heated at 65°C for 8 hours. The cell was then heated at 120°C for 2 hours to provide a sheet (exB3-2) with a thickness of 1.5 mm.

The contact angle of hexadecane in water of the sheet was evaluated. The evaluation results are shown in Table 2.

Example B4

(1) Production of Resin Composition (exB4-1)

In Lab Plastmill (R100, available from Toyo Seiki Co., Ltd.) with a rotor rotating at 230°C and 20 rpm, 95.00 wt% of (G-4) and 5.00 wt% of the polymer (ex2-1) were placed and plasticized over 4 minutes. The plasticized material was then melt-kneaded at 230°C and 80 rpm for 5 minutes to provide a resin composition (exB4-1).

(2) Production of Sheet (exB4-2)

The resin composition was sandwiched between two 0.1 mm-thick release PET films and placed in the frame of a

spacer 50 mm long × 50 mm wide × 1 mm thick such that the resin composition fitted within the frame. The spacer was further sandwiched between 0.5 mm-thick aluminum plates and further sandwiched between two 2 mm-thick stainless steel plates. The resulting sample was placed in a hot press molding machine with a press plate set at 210°C. The pressure was increased to 5 MPa over 5 minutes, and the sample was then cooled at 30°C and 5 MPa for 5 minutes to prepare a 1 mm-thick sheet (exB4-2).

The contact angle of hexadecane in water and biofilm reduction rate (using mathematical formula (δ4)) of the sheet were evaluated. The evaluation results are shown in Table 2.

Example B5

(1) Production of Resin Composition (exB5-1)

In Lab Plastmill (R100, available from Toyo Seiki Co., Ltd.) with a rotor rotating at 190°C and 20 rpm, 95.22 wt% of (G-5), 4.76 wt% of the polymer (ex2-1), and 0.02 wt% of the additive (I-7) were placed and plasticized over 4 minutes. The plasticized material was then melt-kneaded at 190°C and 80 rpm for 5 minutes to provide a resin composition (exB5-1).

(2) Production of Sheet (exB5-2)

The resin composition was sandwiched between two 0.1 mm-thick release PET films and placed in the frame of a spacer 50 mm long × 50 mm wide × 1 mm thick such that the resin composition fitted within the frame. The spacer was further sandwiched between 0.5 mm-thick aluminum plates and further sandwiched between two 2 mm-thick stainless steel plates. The resulting sample was placed in a hot press molding machine with a press plate set at 190°C. The pressure was increased to 5 MPa over 5 minutes, and the sample was then cooled at 30°C and 5 MPa for 5 minutes to prepare a 1 mm-thick sheet (exB5-2).

The contact angle of hexadecane in water of the sheet was evaluated. The evaluation results are shown in Table 2.

Example B6

(1) Production of Resin Composition (exB6-1)

In Lab Plastmill (R100, available from Toyo Seiki Co., Ltd.) with a rotor rotating at 170°C and 20 rpm, 95.00 wt% of (G-6) and 5.00 wt% of the polymer (ex2-1) were placed and plasticized over 4 minutes. The plasticized material was then melt-kneaded at 170°C and 80 rpm for 5 minutes to provide a resin composition (exB6-1).

(2) Production of Sheet (exB6-2)

The resin composition was sandwiched between two 0.1 mm-thick release PET films and placed in the frame of a spacer 50 mm long × 50 mm wide × 1 mm thick such that the resin composition fitted within the frame. The spacer was further sandwiched between 0.5 mm-thick aluminum plates and further sandwiched between two 2 mm-thick stainless steel plates. The resulting sample was placed in a hot press molding machine with a press plate set at 190°C. The pressure was increased to 5 MPa over 5 minutes, and the sample was then cooled at 30°C and 5 MPa for 5 minutes to prepare a 1 mm-thick sheet (exB6-2).

The contact angle of hexadecane in water and biofilm reduction rate (using mathematical formula (δ5)) of the sheet were evaluated. The evaluation results are shown in Table 2.

Example B7

(1) Production of Resin Composition (exB7-1)

In Lab Plastmill (R100, available from Toyo Seiki Co., Ltd.) with a rotor rotating at 190°C and 20 rpm, 95.10 wt% of (G-7), 4.80 wt% of the polymer (ex2-1), and 0.1 wt% of the additive (I-7) were placed and plasticized over 4 minutes. The plasticized material was then melt-kneaded at 190°C and 80 rpm for 5 minutes to provide a resin composition (exB7-1).

(2) Production of Sheet (exB7-2)

The resin composition was sandwiched between two 0.1 mm-thick release PET films and placed in the frame of a spacer 50 mm long × 50 mm wide × 1 mm thick such that the resin composition fitted within the frame. The spacer was

further sandwiched between 0.5 mm-thick aluminum plates and further sandwiched between two 2 mm-thick stainless steel plates. The resulting sample was placed in a hot press molding machine with a press plate set at 190°C. The pressure was increased to 5 MPa over 5 minutes, and the sample was then cooled at 30°C and 5 MPa for 5 minutes to prepare a 1 mm-thick sheet (exB7-2).

The contact angle of hexadecane in water and biofilm reduction rate (using mathematical formula (δ6)) of the sheet were evaluated. The evaluation results are shown in Table 2.

Comparative Example B1

To a polyethylene bottle, 25 g of G-1, used as a prepolymer, and 3 ml of styrene were added and stirred for 30 minutes using a magnetic stirrer. In addition, 250 mg of H-1 was added as a curing agent, and the mixture was stirred for 5 minutes using a magnetic stirrer to provide a solution. The obtained solution was poured into a butyl rubber frame 150 mm long × 150 mm wide × 1 mm thick (inner dimensions: 110 mm long × 110 mm wide × 1 mm thick) placed on a glass plate 200 mm long × 200 mm wide × 5 mm thick, and then another glass plate 200 mm long × 200 mm wide × 5 mm thick was placed on the frame to prepare a cell. The cell was placed in an oven such that one glass plate was positioned on the vertically lower side and the other glass plate was positioned on the vertically upper side, and left to stand at room temperature for 30 minutes. The resulting mixture was then heated at 100°C for 2 hours to polymerize unsaturated polyester and styrene and crosslink them to provide an unsaturated polyester sheet (CeB1-2) with a thickness of 1 mm.

The contact angle of hexadecane in water and biofilm reduction rate (using mathematical formula (δ2)) of the sheet were evaluated. The evaluation results are shown in Table 2.

Comparative Example B2

(G-2) was placed in the frame of a spacer 50 mm long × 50 mm wide × 1 mm thick, and the spacer was sandwiched between 0.5 mm-thick aluminum plates and further sandwiched between two 2 mm-thick stainless steel plates. The resulting sample was placed in a hot press molding machine with a press plate set at 175°C. The pressure was increased to 1 MPa over 5 minutes, and the sample was then cooled at 30°C and 0.5 MPa for 5 minutes to prepare a 1 mm-thick sheet (CeB2-2).

The contact angle of hexadecane in water and biofilm reduction rate (using mathematical formula (δ3)) of the sheet were evaluated. The evaluation results are shown in Table 2.

Comparative Example B3

After a 0.5 L capacity separable flask equipped with a stirrer was purged with nitrogen, 17.84 g of polymethyl methacrylate (available from Sumitomo Chemical Co., Ltd.) was mixed with 81.46 g of methyl methacrylate (available from Tokyo Chemical Co., Ltd.), used as a prepolymer, 0.40 g of I-4, used as an additive, 0.1 g of a solution prepared by dissolving 0.1 g of I-5 in 0.9 g of methyl methacrylate, and 0.2 g of a solution prepared by dissolving 0.4 g of I-6 in 0.6 g of methyl methacrylate. The mixture was stirred at 70°C for 2 hours. When the heating was stopped, and the temperature dropped to room temperature, 0.08 g of H-2 was added as a curing agent, and the mixture was stirred for 15 minutes. The resulting solution was degassed in a vacuum oven at -0.065 MPa for 15 minutes. The resulting solution was poured into a glass cell including two glass substrates (20 cm long × 20 cm wide × 1 cm thick) and a 1.5 mm-thick polyvinyl chloride tube used as a spacer between the glass substrates, and heated at 65°C for 8 hours. The cell was then heated at 120°C for 2 hours to provide a sheet (CeB3-2) with a thickness of 1.5 mm.

The contact angle of hexadecane in water of the sheet was evaluated. The evaluation results are shown in Table 2.

Comparative Example B4

(G-4) was sandwiched between two 0.1 mm-thick release PET films and placed in the frame of a spacer 50 mm long × 50 mm wide × 1 mm thick such that (G-4) fitted within the frame. The spacer was further sandwiched between 0.5 mm-thick aluminum plates and further sandwiched between two 2 mm-thick stainless steel plates. The resulting sample was placed in a hot press molding machine with a press plate set at 210°C. The pressure was increased to 5 MPa over 5 minutes, and the sample was then cooled at 30°C and 5 MPa for 5 minutes to prepare a 1 mm-thick sheet (CeB4-2).

The contact angle of hexadecane in water and biofilm reduction rate (using mathematical formula (δ4)) of the sheet were evaluated. The evaluation results are shown in Table 2.

Comparative Example B5

(G-5) was sandwiched between two 0.1 mm-thick release PET films and placed in the frame of a spacer 50 mm long × 50 mm wide × 1 mm thick such that (G-5) fitted within the frame. The spacer was further sandwiched between 0.5 mm-thick aluminum plates and further sandwiched between two 2 mm-thick stainless steel plates. The resulting sample was placed in a hot press molding machine with a press plate set at 190°C. The pressure was increased to 5 MPa over 5 minutes, and the sample was then cooled at 30°C and 5 MPa for 5 minutes to prepare a 1 mm-thick sheet (CeB5-2).

The contact angle of hexadecane in water of the sheet was evaluated. The evaluation results are shown in Table 2.

Comparative Example B6

(G-6) was sandwiched between two 0.1 mm-thick release PET films and placed in the frame of a spacer 50 mm long × 50 mm wide × 1 mm thick. The spacer was further sandwiched between 0.5 mm-thick aluminum plates and further sandwiched between two 2 mm-thick stainless steel plates. The resulting sample was placed in a hot press molding machine with a press plate set at 190°C. The pressure was increased to 5 MPa over 5 minutes, and the sample was then cooled at 30°C and 5 MPa for 5 minutes to prepare a 1 mm-thick sheet (CeB6-2).

The contact angle of hexadecane in water and biofilm reduction rate (using mathematical formula ($\delta$5)) of the sheet were evaluated. The evaluation results are shown in Table 2.

Comparative Example B7

(G-7) was sandwiched between two 0.1 mm-thick release PET films and placed in the frame of a spacer 50 mm long × 50 mm wide × 1 mm thick such that (G-7) fitted within the frame. The spacer was further sandwiched between 0.5 mm-thick aluminum plates and further sandwiched between two 2 mm-thick stainless steel plates. The resulting sample was placed in a hot press molding machine with a press plate set at 190°C. The pressure was increased to 5 MPa over 5 minutes, and the sample was then cooled at 30°C and 5 MPa for 5 minutes to prepare a 1 mm-thick sheet (CeB7-2).

The contact angle of hexadecane in water and biofilm reduction rate (using mathematical formula ($\delta$6)) of the sheet were evaluated. The evaluation results are shown in Table 2.

[Table 2]

| Resin composition | | Example B1 | Example B2 | Example B3 | Example B4 | Example B5 | Example B6 | Example B7 | Comparative Example B1 | Comparative Example B2 | Comparative Example B3 | Comparative Example B4 | Comparative Example B5 | Comparative Example B6 | Comparative Example B7 |
|---|---|---|---|---|---|---|---|---|---|---|---|---|---|---|---|
| G-1 + styrene | wt% | 97.6 | - | - | - | - | - | - | 100 | - | - | - | - | - | - |
| G-2 | | - | 93.9 | - | - | - | - | - | - | 98.5 | - | - | - | - | - |
| G-3 + MMA | | - | - | 99.01 | - | - | - | - | - | - | 99.51 | - | - | - | - |
| G-4 | | - | - | - | 95.0 | - | - | - | - | - | - | 100 | - | - | - |
| G-5 | | - | - | - | - | 95.22 | - | - | - | - | - | - | 99.98 | - | - |
| G-6 | | - | - | - | - | - | 95.0 | - | - | - | - | - | - | 100 | - |
| G-7 | | - | - | - | - | - | - | 95.1 | - | - | - | - | - | - | 99.9 |
| ex2-1 | | 1.7 | 4.7 | 0.5 | 5.0 | 4.76 | 5.0 | 4.8 | - | - | - | - | - | - | - |
| I-1 | | 0.7 | - | - | - | - | - | - | - | - | - | - | - | - | - |
| I-2 | | - | 0.5 | - | - | - | - | - | - | 0.5 | - | - | - | - | - |
| I-3 | | - | 0.9 | - | - | - | - | - | - | 1 | - | - | - | - | - |
| I-4 | | - | - | 0.4 | - | - | - | - | - | - | 0.4 | - | - | - | - |
| I-5 | | - | - | 0.01 | - | - | - | - | - | - | 0.01 | - | - | - | - |
| I-6 | | - | - | 0.08 | - | - | - | - | - | - | 0.08 | - | - | - | - |
| I-7 | | - | - | - | - | 0.02 | - | 0.1 | - | - | - | - | 0.02 | - | 0.1 |
| Contact angle of hexadecane in water | deg. | 80 | 99 | 142 | 100 | 90 | 74 | 113 | 30 | 72 | 73 | 20 | 28 | 16 | 80 |
| Biofilm reduction rate | % | 32 | 33 | n.d. | 38 | n.d. | 24 | 24 | 0 | 0 | 0 | 0 | 0 | 0 | 0 |
| n.d. = no data | | | | | | | | | | | | | | | |

## Claims

1. A polymer comprising a structural unit A derived from at least one selected from the group consisting of ethylene and propylene, a structural unit B represented by formula (1) below, and a structural unit C represented by formula (2) below,

[Chem. 1]

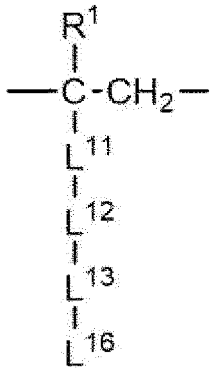

Formula (1)

in formula (1),

$R^1$ represents a hydrogen atom or a methyl group,
$L^{11}$ represents -CO-O-, -O-CO-, or -O-,
$L^{12}$ represents a single bond, $-CH_2-$, $-CH_2-CH_2-$, $-CH_2-CH_2-CH_2-$, $-CH(CH_3)-CH_2-$, $-CH_2-CH(CH_3)-$, $-CH_2-CH(OH)-CH_2-$, or $-CH_2-CH(CH_2OH)-$,
$L^{13}$ represents a single bond, -CO-O-, -O-CO-, -O-, - CO-NH-, -NH-CO-, -CO-NH-CO-, -NH-CO-NH-, -NH-, or $-N(CH_3)-$,
$L^{16}$ represents $-(CH_2)_n-(R^{f2}O)_p-(R^{f3})_h-(Si(R^{f4})_2O)_g-Si(R^{f1})_3$,
$R^{f1}$ represents a hydrogen atom or a $C_{1-15}$ alkyl group, and three $R^{f1}$'s may be the same or different,
$R^{f2}$ represents a $C_{1-15}$ alkylene group,
$R^{f3}$ represents a $C_{1-15}$ alkylene group,
$R^{f4}$ represents a hydrogen atom, a substituted or unsubstituted $C_{1-15}$ alkyl group, or a substituted or unsubstituted $C_{6-20}$ aryl group, and two $R^{f4}$'s may be the same or different,
n represents an integer of 0 to 10,
p represents an integer of 0 to 15, and when p is an integer of 2 or more, multiple $-(R^{f2}O)-$ may be the same or different,
h represents an integer of 0 to 15, and when h is an integer of 2 or more, multiple $-(R^{f3})-$ may be the same or different,
g represents an integer of 1 to 1000, and when g is an integer of 2 or more, multiple $-(Si(R^{f4})_2O)-$ may be the same or different, and
a left side of each of the condensed structural formulas represented by $L^{11}$, $L^{12}$, and $L^{13}$ corresponds to an upper side of formula (1) (a main chain side of the polymer), and a right side of each of the condensed structural formulas corresponds to a lower side of formula (1) (a terminal side of a side chain of the polymer),

[Chem. 2]

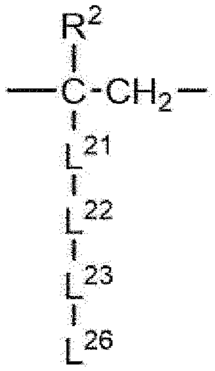

Formula (2)

in formula (2),

$R^2$ represents a hydrogen atom or a methyl group,
$L^{21}$ represents -CO-O-, -O-CO-, or -O-,
$L^{22}$ represents a single bond, $-CH_2-$, $-CH_2-CH_2-$, $-CH_2-CH_2-CH_2-$, $-CH(CH_3)-CH_2-$, $-CH_2-CH(CH_3)-$, $-CH_2-CH(OH)-CH_2-$, or $-CH_2-CH(CH_2OH)-$,
$L^{23}$ represents a single bond, -CO-O-, -O-CO-, -O-, - CO-NH-, -NH-CO-, -CO-NH-CO-, -NH-CO-NH-, -NH-, or $-N(CH_3)-$,
$L^{26}$ represents $-(CH_2)_m-(R^{r2}O)_q-R^{r1}$,
$R^{r1}$ represents a hydrogen atom, a $C_{1-15}$ alkyl group, or a $C_{1-20}$ aryl group,
$R^{r2}$ represents a $C_{1-15}$ alkylene group,
q represents an integer of 1 to 1000000, and m represents an integer of 0 to 10,
when q is an integer of 2 or more, multiple $-(R^{r2}O)$-may be the same or different, and
a left side of each of the condensed structural formulas represented by $L^{21}$, $L^{22}$, and $L^{23}$ corresponds to an upper side of formula (2) (a main chain side of the polymer), and a right side of each of the condensed structural formulas corresponds to a lower side of formula (2) (a terminal side of a side chain of the polymer).

2. The polymer according to claim 1, further comprising at least one structural unit D selected from the group consisting of structural units represented by formula (3) below and a structural unit represented by formula (4) below,

[Chem. 3]

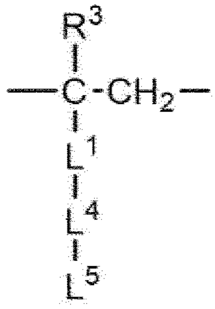

Formula (3)

[Chem. 4]

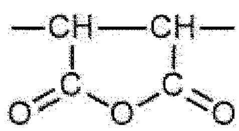

Formula (4)

in formula (3),

$R^3$ represents a hydrogen atom or a methyl group,
$L^1$ represents -CO-O-, -O-CO-, or -O-,
$L^4$ represents a single bond or a $C_{1-8}$ alkylene group,
$L^5$ represents a hydrogen atom, an epoxy group, - $CH(OH)-CH_2OH$, a carboxy group, a hydroxy group, an amino group, or a $C_{1-4}$ alkylamino group, and
a left side of each of the condensed structural formulas represented by $L^1$ corresponds to an upper side of formula (3) (a main chain side of the polymer), and a right side of each of the condensed structural formulas corresponds to a lower side of formula (3) (a terminal side of a side chain of the polymer).

**3.** The polymer according to claim 1 or 2, wherein the number of the structural units A is from 70 to 99 mol%, and the total number of the structural units B, the structural units C, and the structural units D is from 30 to 1 mol%, relative to 100 mol% of the total number of the structural units A, the structural units B, the structural units C, and the structural units D.

**4.** The polymer according to claim 2 or 3, wherein the total number of the structural units B and the structural units C is from 1 to 99 mol%, and the total number of the structural units D is from 99 to 1 mol%, relative to 100 mol% of the total number of the structural units B, the structural units C, and the structural units D.

**5.** The polymer according to claim 1 or 2, wherein a numerical ratio (B:C) of the structural units B to the structural units C is from 1:9 to 7:3.

**6.** The polymer according to claim 1 or 2, wherein, in the structural unit (B) represented by formula (1) above, g in $L^{16}$ is 1 or more and 250 or less.

**7.** The polymer according to claim 1 or 2, wherein, in the structural unit (C) represented by formula (2) above, q in $L^{26}$ is 1 or more and 250 or less.

**8.** The polymer according to claim 1 or 2, wherein, in the structural unit (B) represented by formula (1) above, $L^{11}$ is -CO-O-.

**9.** The polymer according to claim 1 or 2, wherein, in the structural unit (C) represented by formula (2) above, $L^{21}$ is -CO-O-.

**10.** The polymer according to claim 1 or 2, wherein, in the structural unit (C) represented by formula (2) above, $R^{r1}$ in $L^{26}$ is a $C_{1-15}$ alkyl group.

**11.** The polymer according to claim 1 or 2, wherein the polymer is crosslinked.

**12.** The polymer according to claim 1 or 2, wherein the polymer has a gel fraction of 20% or more.

**13.** The polymer according to claim 1 or 2, wherein the total number of the structural units A, the structural units B, the structural units C, and the structural units D is 90% or more relative to 100% of the total number of all the structural units contained in the polymer.

**14.** A composition comprising the polymer according to claim 1 or 2.

**15.** The composition according to claim 14, wherein the composition contains 1 wt% or more of the polymer.

**16.** The composition according to claim 14, comprising a base resin.

**17.** The composition according to claim 16, wherein the base resin is a thermoplastic resin.

**18.** The composition according to claim 16, wherein the base resin is polyvinyl chloride.

**19.** The composition according to claim 16, wherein the base resin is a thermosetting resin.

**20.** The composition according to claim 16, wherein the base resin is an unsaturated polyester.

**21.** A molded body comprising the polymer according to claim 1 or 2.

**22.** A molded body comprising the composition according to claim 14 or 15.

**23.** The molded body according to claim 21, wherein the molded body is an antifouling material.

**24.** The molded body according to claim 21, wherein the molded body is a slime-resistant material.

**25.** A coating film comprising the polymer according to claim 1 or 2.

**26.** A coating film comprising the composition according to claim 14 or 15.

**27.** The coating film according to claim 25, wherein the coating film is an antifouling material.

**28.** The coating film according to claim 25, wherein the coating film is a slime-resistant material.

**29.** A method for producing the polymer according to claim 2, the method comprising a step of carrying out a reaction of

a polymer containing a structural unit A derived from at least one selected from the group consisting of ethylene and propylene, and at least one structural unit D selected from the group consisting of structural units represented by formula (3) below and a structural unit represented by formula (4) below, wherein the number of the structural units A is from 1 to 99% relative to 100% of the total number of the structural units A and the structural units D, with at least one compound β selected from the group consisting of compounds represented by formula (β1) below, compounds represented by formula (β2) below, compounds represented by formula (β3) below, compounds represented by formula (β4) below, compounds represented by formula (β5) below, compounds represented by formula (β6) below, compounds represented by formula (β7) below, and compounds represented by formula (β8) below, and
at least one compound γ selected from the group consisting of compounds represented by formula (γ1) below, compounds represented by formula (γ2) below, compounds represented by formula (γ3) below, compounds represented by formula (γ4) below, compounds represented by formula (γ5) below, compounds represented by formula (γ6) below, compounds represented by formula (γ7) below, and compounds represented by formula (γ8) below,

[Chem. 5]

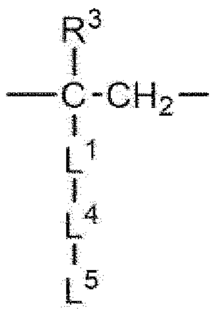

Formula (3)

in formula (3),

$R^3$ represents a hydrogen atom or a methyl group,
$L^1$ represents -CO-O-, -O-CO-, or -O-,
$L^4$ represents a single bond or a $C_{1-8}$ alkylene group,
$L^5$ represents a hydrogen atom, an epoxy group, - $CH(OH)-CH_2OH$, a carboxy group, a hydroxy group, an amino group, or a $C_{1-4}$ alkylamino group, and
a left side of each of the condensed structural formulas represented by $L^1$ corresponds to an upper side of formula (3) (a main chain side of the polymer), and a right side of each of the condensed structural formulas corresponds to a lower side of formula (3) (a terminal side of a side chain of the polymer),

[Chem. 6]

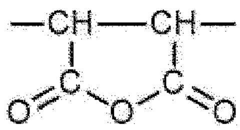

Formula (4)

$HO- (CH_2)_n-(R^{f2}O)_p-(R^{f3})_h-(Si (R^{f4})_2O)_g-Si(R^{f1})_3$ Formula (β1)

$H_2N-(CH_2)_n-(R^{f2}O)_p-(R^{f3})_h-(Si(R^{f4})_2O)_g-Si(R^{f1})_3$ Formula (β2)

$X- (CH_2)_n-(R^{f2}O)_p-(R^{f3})_n-(Si (R^{f4})_2O)_g-Si(R^{f1})_3$ Formula (β3)

$HO-C(=O)-(CH2)_n-(R^{f2}O)_p-(R^{f3})_h-(Si(R^{f4})_2O)_g-Si(R^{f1})_3$ Formula (β4)

$H_2N-C(=O)-(CH2)_n-(R^{f2}O)_p-(R^{f3})_h-(Si(R^{f4})_2O)_g-Si(R^{f1})_3$ Formula (β5)

$X-C(=O)-(CH2)_n-(R^{f2}O)_p-(R^{f3})_h-(Si(R^{f4})_2O)_g-Si(R^{f1})_3$ Formula (β6)

$H_2N-C(=O)-HN-(CH_2)_n-(R^{f2}O)_p-(R^{f3})_h-(Si(R^{f4})_2O)_g-Si(R^{f1})_3$ Formula (β7)

$OCN-(CH_2)_n-(R^{f2}O)_p-(R^{f3})_n-(Si(R^{f4})_2O)_g-Si(R^{f1})_3$ Formula (β8),

in the formulas, $R^{f1}$, $R^{f2}$, $R^{f3}$, $R^{f4}$, p, g, h, and n are as defined in formula (1), and X represents a halogen atom, and

when multiple compounds β are used, $R^{f1}$'s may be the same or different, and the same applies to $R^{f2}$'s, $R^{f3}$'s, $R^{f4}$'s, p's, g's, h's, and n's, and X's,

$OH- (CH_2)_m-(OR^{r2})_q-R^{r1}$ Formula (γ1)

$H_2N-(CH_2)_m-(OR^{r2})_q-R^{r1}$ Formula (γ2)

$X- (CH_2)_m-(OR^{r2})_q-R^{r1}$ Formula (γ3)

$HO-C (=O)- (CH_2)_m-(OR^{r2})_q-R^{r1}$ Formula (γ4)

$H_2N-C(=O)- (CH_2)_m-(OR^{r2})_q-R^{r1}$ Formula (γ5)

$X-C (=O) - (CH_2)_m-(OR^{r2})_q-R^{r1}$ Formula (γ6)

$H_2N-C(=O) -HN- (CH_2)_m-(OR^{r2})_q-R^{r1}$ Formula (γ7)

$OCN- (CH_2)_m-(OR^{r2})_q-R^{r1}$ Formula (γ8),

in the formulas, $R^{r1}$, $R^{r2}$, q, and m are as defined in formula (1), and X represents a halogen atom, and when multiple compounds γ are used, $R^{r1}$'s may be the same or different, and the same applies to $R^{r2}$'s, q's, and m's, and X's.

**30.** The method according to claim 29, wherein a neutral compatibilizer and a cationic compatibilizer are added in the step.

**31.** A polymer that may be produced by using the production method according to claim 29 or 30.

## INTERNATIONAL SEARCH REPORT

International application No.
**PCT/JP2023/030667**

### A. CLASSIFICATION OF SUBJECT MATTER

***C08G 81/02***(2006.01)i; ***C08F 8/42***(2006.01)i; ***C08F 210/00***(2006.01)i; ***C08L 87/00***(2006.01)i; ***C08L 101/00***(2006.01)i; ***C09D 187/00***(2006.01)i
FI: C08G81/02; C09D187/00; C08L101/00; C08L87/00; C08F210/00; C08F8/42

According to International Patent Classification (IPC) or to both national classification and IPC

### B. FIELDS SEARCHED

Minimum documentation searched (classification system followed by classification symbols)

C08G81/02; C08F8/42; C08F210/00; C08L87/00; C08L101/00; C09D187/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | JP 8-511825 A (THE PROCTER & GAMBLE COMPANY) 10 December 1996 (1996-12-10) | 1-31 |
| A | JP 2-158645 A (HITACHI CABLE LTD) 19 June 1990 (1990-06-19) | 1-31 |
| A | JP 60-20910 A (SHINETSU CHEM IND CO) 02 February 1985 (1985-02-02) | 1-31 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 November 2023** | **14 November 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

## INTERNATIONAL SEARCH REPORT
**Information on patent family members**

International application No.
**PCT/JP2023/030667**

| Patent document cited in search report | Publication date (day/month/year) | Patent family member(s) | Publication date (day/month/year) |
| --- | --- | --- | --- |
| JP 8-511825 A | 10 December 1996 | US 5476901 A | |
| | | WO 1995/000578 A1 | |
| | | EP 705297 A1 | |
| | | KR 10-1996-0703146 A | |
| JP 2-158645 A | 19 June 1990 | (Family: none) | |
| JP 60-20910 A | 02 February 1985 | US 4665145 A | |
| | | EP 131911 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3037620 A
- WO 2021193349 A
- WO 2014080873 A
- JP 2017115044 A
- JP 2002069178 A


### Non-patent literature cited in the description


- **KAKUGO, M.** ; **NAITO, Y.** ; **MIZUNUMA, K.** ; **MIYATAKE, T.** *Macromolecules*, 1982, vol. 15, 1150
- *Sensors*, 2013, vol. 13, 5117-5129
- **C. M. HANSEN**. Hansen Solubility Parameters: A User's Handbook. Taylor and Francis Group, 2007
- *RSC Adv.*, 2015, vol. 5, 53054-53062
- *CHEMICAL ABSTRACTS*, 9003-11-6
- *CHEMICAL ABSTRACTS*, 58205-99-5